# EUROPEAN PATENT APPLICATION

(11) **EP 4 707 351 A1**
(43) Date of publication of application: **11.03.2026**
(21) Application number: 25197651.0
(22) Date of filing: 22.08.2025
(51) Int. Cl.: C09D 183/04, C09D 183/08, C09D 183/06

(54) **SURFACE TREATMENT AGENT COMPOSITION, PELLET, AND ARTICLE**

(30) Priority: 26.08.2024 JP 2024143946
(71) Applicant: SHIN-ETSU CHEMICAL CO., LTD., Tokyo 1000005 (JP)
(72) Inventor: MORI, Seiya, Annaka-shi (JP); SAKOH, Ryusuke, Annaka-shi (JP)
(74) Representative: Ter Meer Steinmeister & Partner

(57) **Abstract**

Provided is a surface treatment agent composition including an organosilane compound (α) and/or a partial reaction condensate thereof, and a solvent, in which the organosilane compound (α) is a non-fluorine-based compound, has at least one selected from O, S, N, and Si, contains one or more of linear, branched, or cyclic monovalent hydrocarbon groups having 3 to 60 carbon atoms and a reactive silyl group, and has a bio-based degree of 50% or greater, which is measured by radiocarbon dating based on ASTM D6866, the solvent is selected from an alcohol-based solvent, an ether-based solvent, a ketone-based solvent, an ester-based solvent, a carbonate-based solvent, a siloxane-based solvent, and a hydrocarbon-based solvent, and the surface treatment agent composition is composed of materials containing no fluorine atoms.

Since the surface treatment agent composition of the present invention is capable of forming a cured coating film with excellent water repellency and abrasion resistance, an article including a surface-treated layer formed of the surface treatment agent composition has excellent water repellency and abrasion resistance. Further, the surface treatment agent composition of the present invention contains a silane compound having a high bio-based degree, and thus the load on the environment is small.

## Description

### TECHNICAL FIELD

The present invention relates to a surface treatment agent composition and specifically relates to a non-fluorine-based surface treatment agent composition capable of forming a cured coating film having a high bio-based degree and excellent water repellency and excellent abrasion resistance, a pellet containing the surface treatment agent composition, and an article having a surface treated with the surface treatment agent composition.

### BACKGROUND ART

Touch panel displays such as smartphones and in-vehicle displays, and lenses such as eyeglasses are frequently brought into direct contact with fingers, cheeks, and the like, and thus there is a problem in that stains such as sebum are likely to remain. Therefore, there has been an increasing demand for a technique of making it difficult for fingerprints to remain on the surface of a display and a technique of making it easy to remove stains in order to enhance the appearance and the visibility, and development of materials that meet such demands is desired. A common solution to this problem is to provide an antifouling layer.

A surface treatment agent composition containing a fluoropolyether group-containing compound usually has extremely small surface free energy, and thus can impart water and oil repellency, chemical resistance, lubricity, releasability, antifouling properties, and the like to an article. The surface treatment agent composition has been widely used industrially in water and oil repellent antifouling agents for paper, fibers, and the like, lubricants for magnetic recording media, oil preventing agents for precision equipment, release agents, cosmetics, protective films, and the like by using the above-described properties. However, the surface treatment agent composition having such properties denotes that the surface treatment agent composition is non-sticky and non-adhesive to other base materials, and thus a surface of a base material can be coated with the surface treatment agent composition, but the coating film is difficult to adhere to the surface of the base material.

A silane coupling agent is well known as an agent for bonding an organic compound to a surface of a base material such as glass or cloth, and thus has been widely used as a coating agent for surfaces of various base materials. The silane coupling agent contains an organic functional group and a reactive silyl group (usually a hydrolyzable silyl group such as an alkoxysilyl group) in one molecule. The hydrolyzable silyl group undergoes a self-condensation reaction due to the moisture or the like in the air to form a cured coating film. The coating film becomes a strong and durable coating film when the hydrolyzable silyl group is chemically and physically bonded to a surface of glass, a metal, or the like.

Therefore, compositions that easily adhere to a surface of a base material and are capable of forming a coating film having water and oil repellency, chemical resistance, lubricity, releasability, antifouling properties, and the like on a surface of a base material by using a fluoropolyether group-containing polymer in which a hydrolyzable silyl group has been introduced to a fluoropolyether group-containing compound are disclosed (Patent Documents 1 to 6: PCT Japanese Translation Patent Publication No. 2008-534696, PCT Japanese Translation Patent Publication No. 2008-537557, JP-A 2012-072272, JP-A 2012-157856, JP-A 2013-136833, and JP-A 2015-199906).

Further, fluorine-containing compounds typified by perfluorooctanoic acid (PFOA) and the like are unlikely to be decomposed and highly likely to be accumulated in nature. In recent years, a wide range of fluorine-containing compounds have been categorized as per/polyfluoroalkyl substances (PFAS), the use, sales, emission, and the like of the fluorine-containing compounds are expected to be restricted under PFAS regulation. Further, fluoropolyether group-containing compounds and fluoropolyether group-containing polymers of the related art also correspond to the per/polyfluoroalkyl substances (PFAS). Under such circumstances, there is a demand for development of non-fluorine-based surface treatment agent compositions composed of materials containing no fluorine atoms.

Further, as an effort for the sustainable development goals (SDGs), there has been a growing need for bio-based materials produced from raw materials containing no fluorine atoms and derived from organisms instead of raw materials derived from fossil fuels.

However, as a result of examination conducted by the present inventors, surface treatment agent compositions of the related art, which contain a non-fluorine-based compound containing a reactive silyl group such as a hydrolyzable silyl group have a low bio-based degree. Further, the water repellency and the abrasion resistance of cured coating films to be formed are insufficient.

### Citation List

| | |
|---|---|
| Patent Document 1: | JP-A 2008-534696 |
| Patent Document 2: | JP-A 2008-537557 |
| Patent Document 3: | JP-A 2012-072272 |
| Patent Document 4: | JP-A 2012-157856 |
| Patent Document 5: | JP-A 2013-136833 |
| Patent Document 6: | JP-A 2015-199906 |

### SUMMARY OF THE INVENTION

The present invention has been made in consideration of the above-described circumstances, and an object thereof is to provide a non-fluorine-based (that is, a material (compound) contained in a composition has no fluorine atoms) surface treatment agent composition that has a high-bio-based degree, contains a non-fluorine-based (that is, fluorine atoms are not present in a molecule) organosilane compound containing a reactive silyl group such as a hydrolyzable silyl group, and is capable of forming a cured coating film with excellent water repellency and abrasion resistance, a pellet containing the surface treatment agent composition, and an article having a surface treated with the surface treatment agent composition.

As a result of intensive examination conducted by the present invention in order to achieve the above-described object, it has been found that a surface treatment agent composition including an organosilane compound (α) and/or a partial reaction condensate thereof, and a solvent, in which the organosilane compound (α) is a non-fluorine-based compound, has at least one selected from an oxygen atom, a sulfur atom, a nitrogen atom, and a silicon atom, contains at least one linear, branched, or cyclic monovalent hydrocarbon group having 3 to 60 carbon atoms and a reactive silyl group, and has a bio-based degree of 50% or greater, which is measured by radiocarbon dating based on ASTM D6866; the solvent is selected from an alcohol-based solvent, an ether-based solvent, a ketone-based solvent, an ester-based solvent, a carbonate-based solvent, a siloxane-based solvent, and a hydrocarbon-based solvent; and the surface treatment agent composition that is composed of materials containing no fluorine atoms can reduce the load on the environment due to having a high bio-based degree and can form a cured coating film with excellent water repellency and abrasion resistance, that is, the surface treatment agent composition can solve the above-described problems of the related art, thereby completing the present invention.

Accordingly, the present invention provides a surface treatment agent composition, a pellet containing the surface treatment agent composition, and an article having a surface treated with the surface treatment agent composition described below.
[1] A surface treatment agent composition including: an organosilane compound (α) and/or a partial reaction condensate thereof; and a solvent, in which the organosilane compound (α) is a non-fluorine-based compound, has at least one selected from an oxygen atom, a sulfur atom, a nitrogen atom, and a silicon atom, contains at least one linear, branched, or cyclic monovalent hydrocarbon group having 3 to 60 carbon atoms and a reactive silyl group, and has a bio-based degree of 50% or greater, which is measured by radiocarbon dating based on ASTM D6866, the solvent is selected from an alcohol-based solvent, an ether-based solvent, a ketone-based solvent, an ester-based solvent, a carbonate-based solvent, a siloxane-based solvent, and a hydrocarbon-based solvent, and the surface treatment agent composition is composed of materials containing no fluorine atoms.
[2] The surface treatment agent composition according to [1], in which in the organosilane compound (α), the monovalent hydrocarbon group is linear or branched.
[3] The surface treatment agent composition according to [1] or [2], in which the organosilane compound (α) contains two or more of the monovalent hydrocarbon groups.
[4] The surface treatment agent composition according to [3], in which in the organosilane compound (α), the two or more of the monovalent hydrocarbon groups are bonded to the same atom.
[5] The surface treatment agent composition according to [4], in which in the organosilane compound (α), the same atom to which the two or more of the monovalent hydrocarbon groups are bonded is a carbon atom, a nitrogen atom, or a silicon atom.
[6] The surface treatment agent composition according to any one of [3] to [5], in which in the organosilane compound (α), the two or more of the monovalent hydrocarbon groups are the same as each other.
[7] The surface treatment agent composition according to any one of [1] to [6], in which in the organosilane compound (α), the monovalent hydrocarbon group has 8 to 40 carbon atoms.
[8] The surface treatment agent composition according to any one of [1] to [7], in which the organosilane compound (α) is represented by general formula (1), 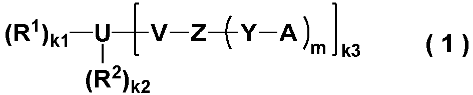 (in the formula, R¹ independently at each occurrence is a monovalent hydrocarbon group having 3 to 32 carbon atoms, which may have at least one selected from an oxygen atom, a sulfur atom, a nitrogen atom, and a silicon atom and may be linear, branched, or cyclic or a combination thereof, R² is a hydrogen atom, a halogen atom, a hydroxyl group, a siloxy group, an amino group, a thiol group, or a monovalent hydrocarbon group having 1 or 2 carbon atoms, U is a carbon atom, a silicon atom, a nitrogen atom, or a tri- or tetravalent organic group, V independently at each occurrence is a single bond or a divalent hydrocarbon group which may have at least one selected from an oxygen atom, a nitrogen atom, and a sulfur atom, Z independently at each occurrence is a single bond, a carbon atom, a silicon atom, a nitrogen atom, a sulfur atom, or a tri- to octavalent organic group, Y independently at each occurrence is a divalent hydrocarbon group which may have at least one selected from an oxygen atom, a nitrogen atom, a sulfur atom, and a silicon atom, A independently at each occurrence is a monovalent reactive silyl group, k1 is 2 or 3, k2 is 0 or 1, k3 is 1 or 2, k1 + k2 + k3 is 3 or 4, and m is an integer of 1 to 7).
[9] The surface treatment agent composition according to [8], in which in formula (1), R¹ is a group represented by any of the following formulae, 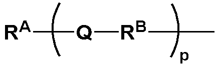 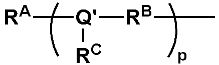 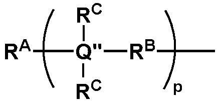 (in the formula, R^{A} independently at each occurrence is a monovalent hydrocarbon group having 3 to 32 carbon atoms which may be linear, branched, or cyclic or a combination thereof, Q independently at each occurrence is a divalent group selected from the group consisting of an oxygen atom, a sulfur atom, a divalent cyclic hydrocarbon group having 6 to 8 carbon atoms, a diorganosilylene group, a silalkylene structure, a silarylene structure, a linear divalent organopolysiloxane residue having 2 to 10 silicon atoms or a branched or cyclic divalent organopolysiloxane residue having 3 to 10 silicon atoms, a carbonyl (ketone) group, an ester group, a carbonate group, a sulfinyl group, a sulfonyl group, a thioester group, a thiocarbonate group, a thiocarbamate group, an amino group, an amide group, a carbamate group, a urea group, and a divalent nitrogen-containing heterocyclic group, Q' independently at each occurrence is a trivalent group selected from the group consisting of a nitrogen atom, a trivalent cyclic hydrocarbon group having 6 to 8 carbon atoms, a linear trivalent organopolysiloxane residue having 2 to 10 silicon atoms or a branched or cyclic trivalent organopolysiloxane residue having 3 to 10 silicon atoms, a trivalent amide group, and a trivalent nitrogen-containing heterocyclic group, Q" independently at each occurrence is a tetravalent group selected from the group consisting of a silicon atom, a tetravalent cyclic hydrocarbon group having 6 to 8 carbon atoms, and a linear tetravalent organopolysiloxane residue having 2 to 10 silicon atoms or a branched or cyclic tetravalent organopolysiloxane residue having 3 to 10 silicon atoms, R^{B} independently at each occurrence is a single bond or a linear, branched, or cyclic divalent hydrocarbon group having 1 to 32 carbon atoms, R^{C} independently at each occurrence is R^{A} or a hydrogen atom, and p is an integer of 0 to 10, where a total number of carbon atoms in each structure is 32 or less).
[10] The surface treatment agent composition according to [8] or [9], in which in formula (1), A is a group represented by general formula (2) or (3), 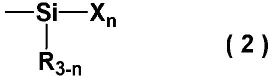 (in the formula, R independently at each occurrence is an alkyl group having 1 to 4 carbon atoms or a phenyl group, X independently at each occurrence is a hydroxyl group or a hydrolyzable group, and n is an integer of 1 to 3),

   **-Si(NH₂)_{n"}(NH)_{n'}** **(3)**

   (in the formula, n" is an integer of 0 to 3, and n' is (3-n")/2).
[11] The surface treatment agent composition according to [10], in which in formula (2), X is a group selected from the group consisting of a hydroxyl group, an alkoxy group having 1 to 10 carbon atoms, an alkoxy-substituted alkoxy group having 2 to 10 carbon atoms, an acyloxy group having 1 to 10 carbon atoms, an alkenyloxy group having 2 to 10 carbon atoms, a halogen group, and a dialkylamino group having 2 to 10 carbon atoms.
[12] The surface treatment agent composition according to any one of [8] to [11], in which in formula (1), Y is a group selected from the group consisting of an alkylene group having 1 to 20 carbon atoms which may have at least one selected from an oxygen atom, a nitrogen atom, and a sulfur atom, an alkylene group having 1 to 10 carbon atoms which contains an arylene group having 6 to 8 carbon atoms, a divalent group in which alkylene groups having 1 to 8 carbon atoms are bonded to each other via a diorganosilylene group, a silalkylene structure, a silarylene structure, or a nitrogen-containing heterocyclic group, and a divalent group in which an alkylene group having 1 to 10 carbon atoms is bonded to a bonding site of a linear organopolysiloxane residue having 2 to 10 silicon atoms or a branched or cyclic organopolysiloxane residue having 3 to 10 silicon atoms.
[13] The surface treatment agent composition according to any one of [8] to [12], in which in formula (1), Z is a single bond or a tri- to octavalent group selected from the group consisting of a carbon atom, a silicon atom, a nitrogen atom, a tri- or tetravalent cyclic hydrocarbon group having 6 to 8 carbon atoms, a trivalent group represented by -SiR³= (R³ is a hydroxyl group, an alkyl group having 1 to 3 carbon atoms, or an alkoxy group having 1 to 3 carbon atoms), a trivalent group represented by -CR⁴= (R⁴ is a hydrogen atom, a hydroxyl group, or an alkyl group having 1 to 3 carbon atoms), a linear tri- to octavalent organopolysiloxane residue having 2 to 10 silicon atoms or a branched or cyclic tri- to octavalent organopolysiloxane residue having 3 to 10 silicon atoms, a trivalent amide group, a trivalent carbamate group, a tri- or tetravalent urea group, and a tri- to octavalent nitrogen-containing heterocycle-containing group.
[14] The surface treatment agent composition according to any one of [8] to [13], in which in formula (1), U is a tri- or tetravalent group selected from the group consisting of a carbon atom, a silicon atom, a nitrogen atom, a tri- or tetravalent cyclic hydrocarbon group having 6 to 8 carbon atoms, a linear tri- or tetravalent organopolysiloxane residue having 2 to 10 silicon atoms or a branched or cyclic tri- or tetravalent organopolysiloxane residue having 3 to 10 silicon atoms, a trivalent amide group, a trivalent carbamate group, a tri- or tetravalent urea group, and a tri- or tetravalent nitrogen-containing heterocycle-containing group.
[15] The surface treatment agent composition according to any one of [1] to [14], in which the solvent is selected from an ether-based solvent, a ketone-based solvent, an ester-based solvent, a siloxane-based solvent, and a hydrocarbon-based solvent.
[16] The surface treatment agent composition according to any one of [1] to [15], in which the solvent has a bio-based degree of 50% or greater, which is measured by radiocarbon dating based on ASTM D6866.
[17] The surface treatment agent composition according to any one of [1] to [16], in which a proportion of the organosilane compound (α) and/or the partial reaction condensate thereof in a total amount of the organosilane compound (α) and/or the partial reaction condensate thereof, and the solvent is 0.05% to 70% by weight.
[18] The surface treatment agent composition according to any one of [1] to [17], further including: at least one non-fluorine-based material selected from the group consisting of paraffin oil, polyol ester oil, silicone oil, a catalyst, a transition metal, a halide ion, a silane coupling agent, and a compound that contains an atom having an unshared electron pair in a molecular structure.
[19] The surface treatment agent composition according to any one of [1] to [18], in which the surface treatment agent composition is used as an antifouling coating agent or a waterproof coating agent.
[20] The surface treatment agent composition according to any one of [1] to [19], in which the surface treatment agent is used for vacuum deposition.
[21] The surface treatment agent composition according to any one of [1] to [19], in which the surface treatment agent composition is used for spray coating, dip coating, spin coating, wipe coating, squeegee coating, die coating, ink jet coating, flow coating, roll coating, cast coating, Langmuir-Blodgett coating, or gravure coating.
[22] A pellet containing the surface treatment agent composition according to any one of [1] to [20].
[23] An article including: a base material; and a layer formed of the surface treatment agent composition according to any one of [1] to [21] on a surface of the base material.
[24] The article according to [23], in which the article is an optical member.
[25] The article according to [23], in which the article is a lens.
[26] The article according to [23], in which the article is a display.

### ADVANTAGEOUS EFFECTS OF THE INVENTION

Since the surface treatment agent composition of the present invention is capable of forming a cured coating film with excellent water repellency and abrasion resistance, an article including a surface-treated layer formed of the surface treatment agent composition has excellent water repellency and abrasion resistance. Further, the surface treatment agent composition of the present invention contains a silane compound having a high bio-based degree, and thus the load on the environment is small.

### DESCRIPTION OF THE PREFERRED EMBODIMENT

A surface treatment agent composition of the present invention contains, as essential components, an organosilane compound (α) having a specific structure and a bio-based degree of a certain value or greater and/or a partial reaction condensate thereof, and a specific solvent, and is composed of materials containing no fluorine atoms.

A first essential component in the surface treatment agent composition of the present invention is the organosilane compound (α) and/or the partial reaction condensate thereof, the organosilane compound (α) is a non-fluorine-based compound, has at least one selected from an oxygen atom, a sulfur atom, a nitrogen atom, and a silicon atom, contains at least one linear, branched, or cyclic monovalent hydrocarbon group having 3 to 60 carbon atoms and a reactive silyl group, has a bio-based degree of 50% or greater, which is measured by radiocarbon dating based on ASTM D6866, and may be a mixture of one or two or more kinds thereof.

Since the organosilane compound (α) contains a linear, branched, or cyclic monovalent hydrocarbon group having 3 to 60 carbon atoms and exhibiting water repellency, and a reactive silyl group exhibiting reactivity with a base material, a cured coating film formed on a surface of the base material using the surface treatment agent composition exhibits excellent water repellency and abrasion resistance.

Further, the organosilane compound (α) has a bio-based degree of 50% or greater, which is measured by radiocarbon dating based on ASTM D6866. In a case where the bio-based degree is greater than or equal to the above-described range, the surface treatment agent composition is excellent in terms that the load on the environment is small as compared with a surface treatment agent composition produced by using raw materials derived from fossil fuels.

The bio-based degree of the organosilane compound (α) is more preferably 60% or greater and particularly preferably 70% or greater. In a case where the bio-based degree is greater than or equal to the above-described ranges, the load on the environment is further reduced.

The bio-based degree denotes a value representing the proportion of carbon derived from organisms in the total carbon of a material. A material derived from organisms contains ¹⁴C in an amount reflecting the concentration of ¹⁴C in the air. Meanwhile, in a material derived from fossil fuels, ¹⁴C is radioactively decayed over a long period of time, and thus the concentration of ¹⁴C is zero. Therefore, the bio-based degree can be calculated by measuring the concentration of ¹⁴C (radiocarbon dating).

In the present specification, the bio-based degree is measured under the following conditions.

| | |
|---|---|
| • Measurement: | in conformity with ASTM D6866 |
| • Analysis: | in conformity with ASTM D6866-22 (METHOD B) |
| • Measuring method: | A sample is sealed in a tin cup, subjected to CO₂ gasification with an elemental analyzer (vario MICRO CUBE, manufactured by elementar Analysensysteme GmbH), purified with a glass gas purification line (manufactured by Koshin Physics and Chemistry Manufacturing Co., Ltd.), and subjected to hydrogen reduction in a ring furnace for graphite reduction (manufactured by Koshin Physics and Chemistry Manufacturing Co., Ltd.) to generate graphite. After the preparation, the concentration of ¹⁴C is measured using an accelerator weight spectrometer (1.5 SDH, manufactured by National Electrostatics Corporation). The obtained concentration of 14C is corrected for the isotope fractionation effect, and the bio-based degree is calculated. |

Further, in the present invention, it is desirable to use raw materials derived from organisms as much as possible instead of raw materials derived from fossil fuels as the raw materials of the organosilane compound (α) in order to set the bio-based degree of the organosilane compound (α) to be in the above-described ranges. Particularly, it is desirable to use raw materials derived from organisms as the raw materials (excluding components such as a reaction solvent that can be separated in the production step) that can be incorporated into the skeleton of the organosilane compound (α). As the raw materials derived from organisms, compounds extracted from plants or animals can be purified and used as pure products, or compounds can be used as a mixture without being purified.

It is preferable that the organosilane compound (α) be linear or branched from the viewpoint that the monovalent hydrocarbon group has high molecular mobility and the cured coating film to be obtained exhibits more excellent slipperiness.

The organosilane compound (α) contains at least one, preferably two or more, and more preferably two or three of the above-described monovalent hydrocarbon groups.

In a case where the organosilane compound (α) contains two or more of the monovalent hydrocarbon groups, it is preferable that these monovalent hydrocarbon groups are bonded to the same atom. When two or more of the monovalent hydrocarbon groups are bonded to the same atom, the organosilane compound (α) has a high packing property, and the cured coating film formed of the surface treatment agent composition containing the organosilane compound (α) forms a harder film. In this manner, the cured coating film to be obtained exhibits more excellent water repellency and abrasion resistance. In addition, the term "packing property" in the present invention denotes easiness of a plurality of hydrocarbon chains being densely aligned in one direction on the surface of the cured coating film.

Here, a carbon atom, a nitrogen atom, or a silicon atom is preferable as the same atom to which two or more of the monovalent hydrocarbon groups are bonded.

Further, the monovalent hydrocarbon group in the organosilane compound (α) has 3 to 60 carbon atoms, preferably 3 to 40 carbon atoms, more preferably 8 to 40 carbon atoms, and still more preferably 10 to 40 carbon atoms. When the monovalent hydrocarbon group has 3 to 60 carbon atoms, the compound can maintain high solubility in a solvent, and the cured coating film formed of the surface treatment agent composition can have high water repellency.

Further, in a case where two or more of the monovalent hydrocarbon groups are bonded to the same atoms, it is preferable that all the monovalent hydrocarbon groups have the same number of carbon atoms and particularly preferable that the monovalent hydrocarbon groups be the same as each other from the viewpoint of further improving the packing property.

A compound represented by general formula (1) is more preferable as the organosilane compound (α). 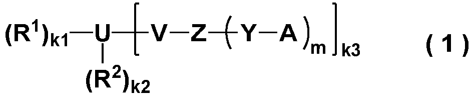 (In the formula, R¹ independently at each occurrence is a monovalent hydrocarbon group having 3 to 32 carbon atoms, which may have at least one selected from an oxygen atom, a sulfur atom, a nitrogen atom, and a silicon atom and may be linear, branched, or cyclic or a combination thereof, R² is a hydrogen atom, a halogen atom, a hydroxyl group, a siloxy group, an amino group, a thiol group, or a monovalent hydrocarbon group having 1 or 2 carbon atoms, U is a carbon atom, a silicon atom, a nitrogen atom, or a tri- or tetravalent organic group, V independently at each occurrence is a single bond or a divalent hydrocarbon group which may have at least one selected from an oxygen atom, a nitrogen atom, and a sulfur atom, Z independently at each occurrence is a single bond, a carbon atom, a silicon atom, a nitrogen atom, a sulfur atom, or a tri- to octavalent organic group, Y independently at each occurrence is a divalent hydrocarbon group which may have at least one selected from an oxygen atom, a nitrogen atom, a sulfur atom, and a silicon atom, A independently at each occurrence is a monovalent reactive silyl group, k1 is 2 or 3, k2 is 0 or 1, k3 is 1 or 2, k1 + k2 + k3 is 3 or 4, and m is an integer of 1 to 7.)

In formula (1), R¹ independently at each occurrence is a monovalent hydrocarbon group having 3 to 32 carbon atoms, preferably 6 to 28 carbon atoms, and more preferably 8 to 28 carbon atoms, which may have at least one selected from an oxygen atom, a sulfur atom, a nitrogen atom, and a silicon atom and may be linear, branched, or cyclic or a combination thereof.

Here, in a case where R¹ has at least one selected from an oxygen atom, a sulfur atom, a nitrogen atom, and a silicon atom, it is preferable that R¹ have the atom by containing a group such as an ether group, a carbonyl (ketone) group, an ester group, a carbonate group, a thioether group, a sulfinyl group, a sulfonyl group, a thioester group, a thiocarbonate group, a thiocarbamate group, an amino group, an amide group, a carbamate group, a urea group, a oxazole group, an imidazole group, a triazole group, a cyanurate group, an isocyanurate group, a diorganosilylene group, an organopolysiloxane residue, a silalkylene group, or a silarylene group.

It is preferable that R¹ be a group represented by any of the following formulae. 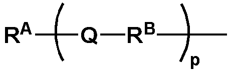 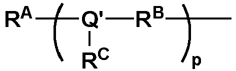 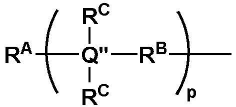 (In the formula, R^{A} independently at each occurrence is a monovalent hydrocarbon group having 3 to 32 carbon atoms which may be linear, branched, or cyclic or a combination thereof, Q independently at each occurrence is a divalent group selected from the group consisting of an oxygen atom, a sulfur atom, a divalent cyclic hydrocarbon group having 6 to 8 carbon atoms, a diorganosilylene group, a silalkylene structure, a silarylene structure, a linear divalent organopolysiloxane residue having 2 to 10 silicon atoms or a branched or cyclic divalent organopolysiloxane residue having 3 to 10 silicon atoms, a carbonyl (ketone) group, an ester group, a carbonate group, a sulfinyl group, a sulfonyl group, a thioester group, a thiocarbonate group, a thiocarbamate group, an amino group, an amide group, a carbamate group, a urea group, and a divalent nitrogen-containing heterocyclic group (a divalent oxazole group, a divalent imidazole group, a divalent triazole group, or the like), Q' independently at each occurrence is a trivalent group selected from the group consisting of a nitrogen atom, a trivalent cyclic hydrocarbon group having 6 to 8 carbon atoms, a linear trivalent organopolysiloxane residue having 2 to 10 silicon atoms or a branched or cyclic trivalent organopolysiloxane residue having 3 to 10 silicon atoms, a trivalent amide group, and a trivalent nitrogen-containing heterocyclic group (a trivalent cyanurate group, a trivalent isocyanurate group, a trivalent triazole group, or the like), Q" independently at each occurrence is a tetravalent group selected from the group consisting of a silicon atom, a tetravalent cyclic hydrocarbon group having 6 to 8 carbon atoms, and a linear tetravalent organopolysiloxane residue having 2 to 10 silicon atoms or a branched or cyclic tetravalent organopolysiloxane residue having 3 to 10 silicon atoms, R^{B} independently at each occurrence is a single bond or a linear, branched, or cyclic divalent hydrocarbon group having 1 to 32 carbon atoms, R^{C} independently at each occurrence is R^{A} or a hydrogen atom, and p is an integer of 0 to 10, where a total number of carbon atoms in each structure is 32 or less).

In the formulae, R^{A} independently at each occurrence is a monovalent hydrocarbon group having 3 to 32 carbon atoms, preferably 6 to 28 carbon atoms, and more preferably 8 to 28 carbon atoms which may be linear, branched, or cyclic or a combination thereof. Examples of R^{A} can include the following groups. 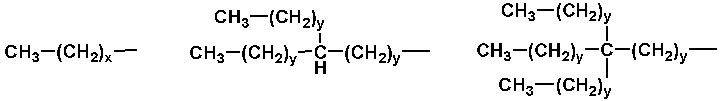 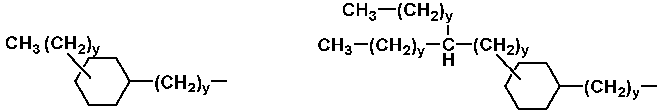 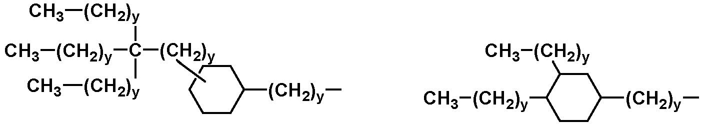 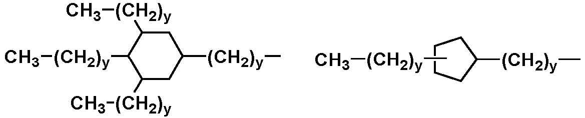 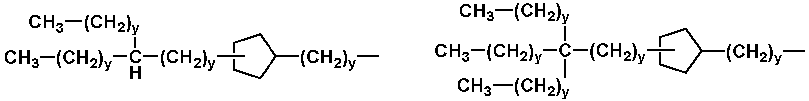 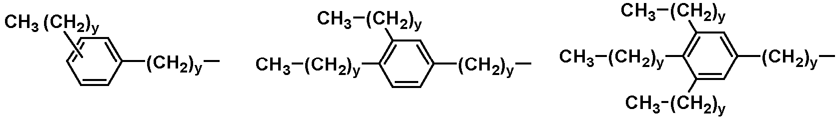 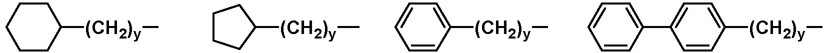 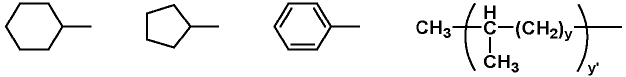 (In the formulae, x is an integer of 2 to 31, preferably an integer of 5 to 27, and more preferably an integer of 7 to 27, and y and y' each are an integer of 1 or greater, which is an integer at which the total number of carbon atoms in each structure is 32 or less.)

In the formula, Q independently at each occurrence is a divalent group selected from the group consisting of an oxygen atom, a sulfur atom, a divalent cyclic hydrocarbon group having 6 to 8 carbon atoms, a diorganosilylene group, a silalkylene structure, a silarylene structure, a linear divalent organopolysiloxane residue particularly having 2 to 10 silicon atoms and particularly 2 to 8 silicon atoms or a branched or cyclic divalent organopolysiloxane residue having 3 to 10 silicon atoms and particularly having 3 to 8 silicon atoms, a carbonyl (ketone) group, an ester group, a carbonate group, a sulfinyl group, a sulfonyl group, a thioester group, a thiocarbonate group, a thiocarbamate group, an amino group, an amide group, a carbamate group, a urea group, and a divalent nitrogen-containing heterocyclic group (a divalent oxazole group, a divalent imidazole group, a divalent triazole group, or the like).

Here, as the group bonded to a silicon atom of a diorganosilylene group, a silalkylene structure, a silarylene structure, an organopolysiloxane residue, or the like, an alkyl group having 1 to 8 carbon atoms and preferably 1 to 4 carbon atoms, such as a methyl group, an ethyl group, a propyl group, or a butyl group, or a phenyl group is preferable. Further, the alkylene group in the silalkylene structure is preferably an ethylene group, a propylene group (a trimethylene group or a methylethylene group), a butylene group (a tetramethylene group or a methylpropylene group), or the like, which has 2 to 6 carbon atoms and preferably 2 to 4 carbon atoms. Further, the organopolysiloxane residue may have a silalkylene structure in which two silicon atoms are bonded to each other via an alkylene group such as an ethylene group or a propylene group.

Examples of such Q include the following groups. Further, in the following structures, the bonding site on the left side is bonded to R^{A} or R^{B}, and the bonding site on the right side is bonded to R^{B}.

-O-

-S-

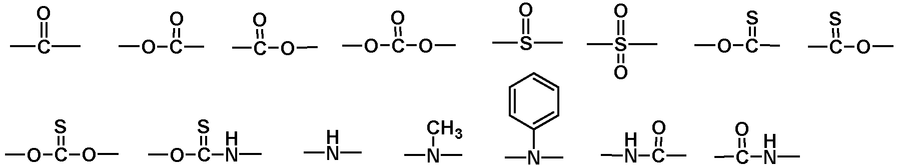

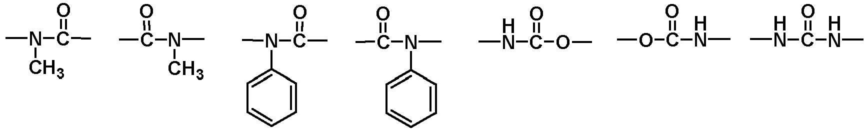

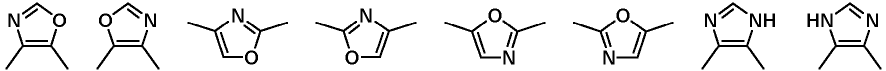

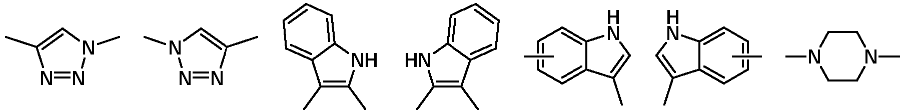

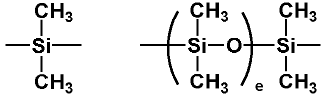

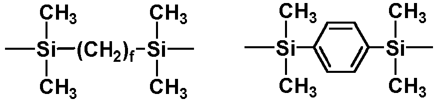

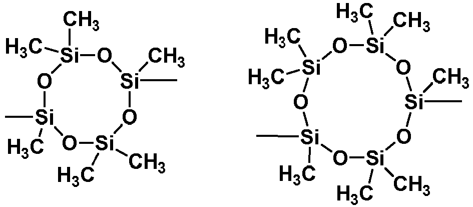

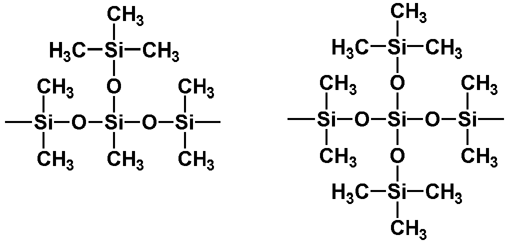

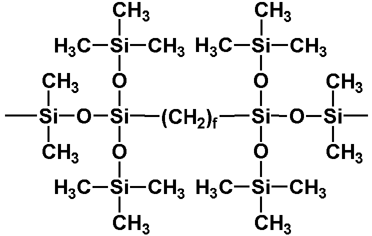

### (In the formulae, f is an integer of 2 to 4, and e is an integer of 1 to 9.)

In the formula, Q' independently at each occurrence is a trivalent group selected from the group consisting of a nitrogen atom, a trivalent cyclic hydrocarbon group having 6 to 8 carbon atoms, a linear trivalent organopolysiloxane residue having 2 to 10 silicon atoms and particularly 2 to 8 silicon atoms or a branched or cyclic trivalent organopolysiloxane residue having 3 to 10 silicon atoms and particularly 3 to 8 silicon atoms, a trivalent amide group, and a trivalent nitrogen-containing heterocyclic group (a trivalent cyanurate group, a trivalent isocyanurate group, a trivalent triazole group, or the like).

The organopolysiloxane residue may contain an alkyl group having 1 to 8 carbon atoms and preferably 1 to 4 carbon atoms, such as a methyl group, an ethyl group, a propyl group, or a butyl group, or a phenyl group. Further, the organopolysiloxane residue may have a silalkylene structure in which two silicon atoms are bonded to each other via an alkylene group such as an ethylene group or a propylene group.

Examples of such Q' include the following groups. Further, in the following structures, the bonding site on the left side is bonded to R^{A} or R^{B}, the bonding site on the right side is bonded to R^{B}, and other bonding sites are bonded to R^{C}. 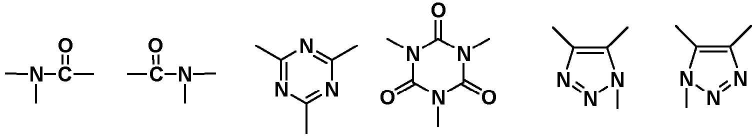 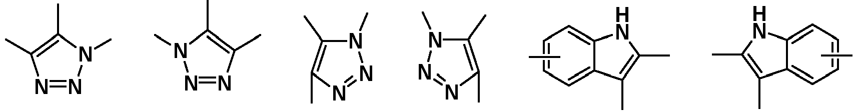 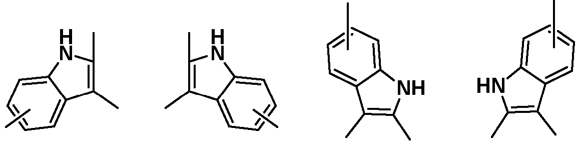 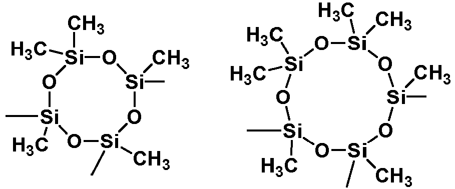 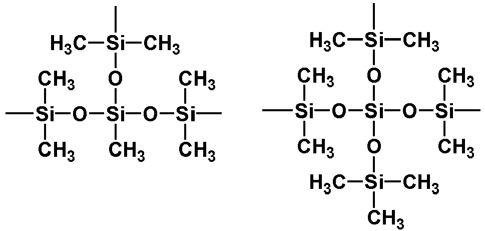 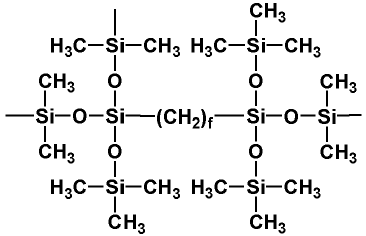 (In the formula, f is an integer of 2 to 4.)

In the formula, Q" independently at each occurrence is a tetravalent group selected from the group consisting of a silicon atom, a tetravalent cyclic hydrocarbon group having 6 to 8 carbon atoms, and a linear tetravalent organopolysiloxane residue having 2 to 10 silicon atoms and particularly 2 to 8 silicon atoms or a branched or cyclic tetravalent organopolysiloxane residue having 3 to 10 silicon atoms and particularly 3 to 8 silicon atoms.

The organopolysiloxane residue may contain an alkyl group having 1 to 8 carbon atoms and preferably 1 to 4 carbon atoms, such as a methyl group, an ethyl group, a propyl group, or a butyl group, or a phenyl group. Further, the organopolysiloxane residue may have a silalkylene structure in which two silicon atoms are bonded to each other via an alkylene group such as an ethylene group or a propylene group.

Examples of such Q" include the following groups. Further, in the following structures, the bonding site on the left side is bonded to R^{A} or R^{B}, the bonding site on the right side is bonded to R^{B}, and other bonding sites are bonded to R^{C}.

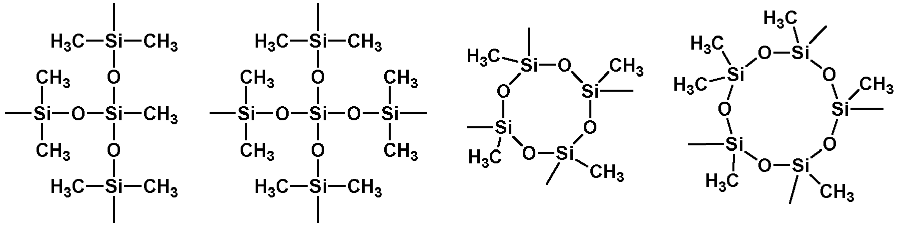

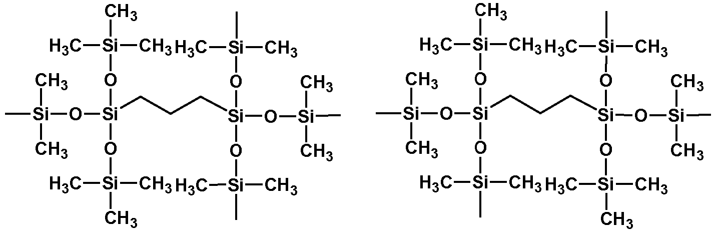

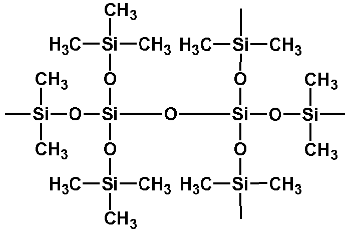

In the formula, R^{B} independently at each occurrence is a single bond or a divalent hydrocarbon group having 1 to 32 carbon atoms which may be linear, branched, or cyclic, and examples thereof include the following groups. 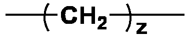 (In the formula, z is an integer of 1 to 10.)

In the formula, R^{C} independently at each occurrence is R^{A} or a hydrogen atom. Further, in a case where R^{C} is R^{A}, R^{C} may be the same as or different from R^{A} shown above.

In the formula, p is an integer of 0 to 10 and preferably 0, 1, or 2. Here, the total number of carbon atoms in each structure of R¹ is 32 or less.

Suitable examples of such R¹ include the following groups. 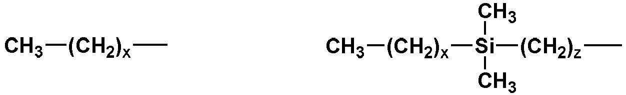 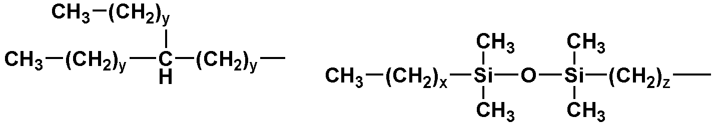 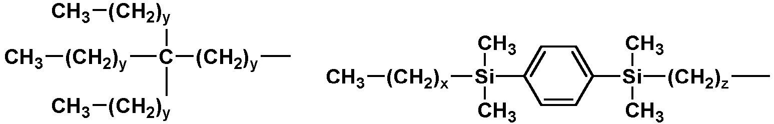 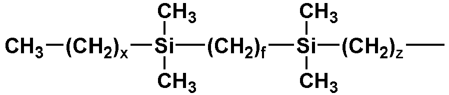 **CH₃-(CH₂)ₓ-O-(CH₂)_{z}-**

**CH₃-(CH₂)ₓ-O-**

**CH₃-(CH₂)ₓ-S-(CH₂)_{z}-**

**CH₃-(CH₂)ₓ-O-CO-**

**CH₃-(CH₂)ₓ-O-CO-(CH₂)_{z}-**

**CH₃-(CH₂)ₓ-CO-O-**

**CH₃-(CH₂)ₓ-CO-O-(CH₂)_{z}-**

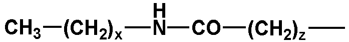

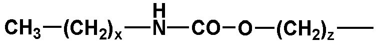

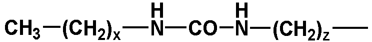

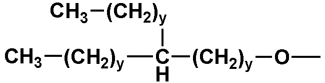

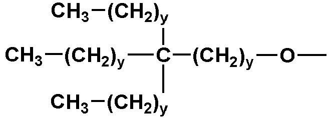

**CH₃-(CH₂)ₓ-S-(CH₂)_{z}-O-(CH₂)_{z}-**

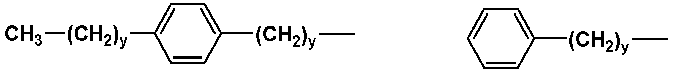

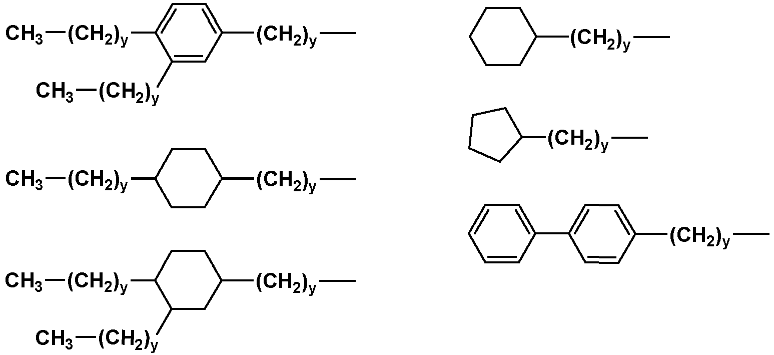

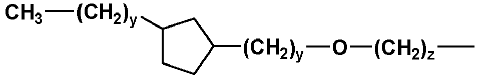

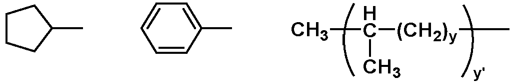

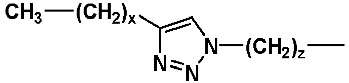

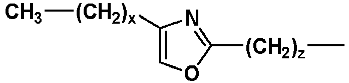

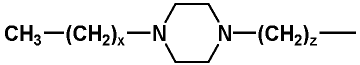

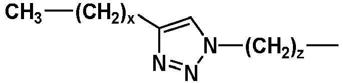

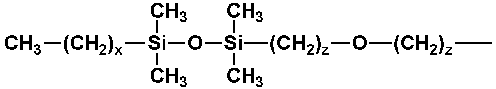

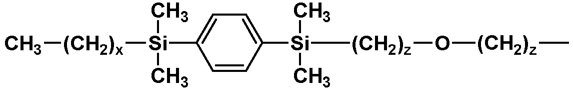

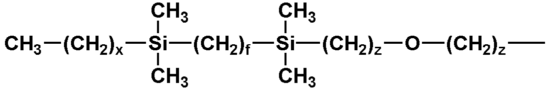

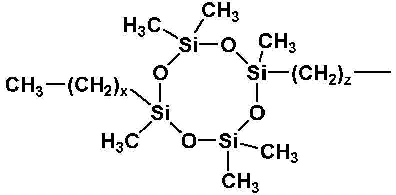

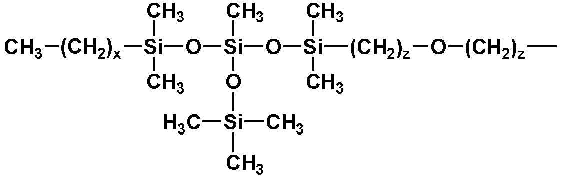

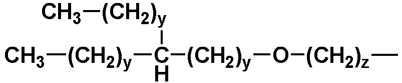

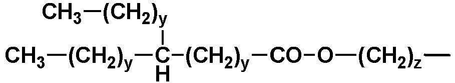

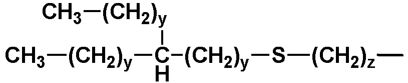

(In the formulae, x, y, y', and z each have the same definition as described above. Here, the total number of carbon atoms in each structure is 3 to 32.)

In formula (1), R² is a hydrogen atom, a halogen atom, a hydroxyl group, a siloxy group, an amino group, a thiol group, or a monovalent hydrocarbon group having 1 or 2 carbon atoms (a methyl group or an ethyl group).

It is preferable that R² be a hydrogen atom, a chlorine atom, a hydroxyl group, a methyl group, or an ethyl group.

In formula (1), U is a carbon atoms, a silicon atom, a nitrogen atom, or a tri- or tetravalent organic group, and the tri- or tetravalent organic group is preferably a tri- or tetravalent group selected from a tri- or tetravalent cyclic hydrocarbon group having 6 to 8 carbon atoms, a linear tri- or tetravalent organopolysiloxane residue having 2 to 10 silicon atoms and particularly 2 to 8 silicon atoms or a branched or cyclic tri- or tetravalent organopolysiloxane residue having 3 to 10 silicon atoms and particularly 3 to 8 silicon atoms, a trivalent amide group, a trivalent carbamate group, a tri- or tetravalent urea group, and a tri- or tetravalent nitrogen-containing heterocycle-containing group (a trivalent cyanurate group, a trivalent isocyanurate group, a trivalent triazine ring-containing group, or the like).

The organopolysiloxane residue may contain an alkyl group having 1 to 8 carbon atoms and preferably 1 to 4 carbon atoms, such as a methyl group, an ethyl group, a propyl group, or a butyl group, or a phenyl group. Further, the organopolysiloxane residue may have a silalkylene structure in which two silicon atoms are bonded to each other via an alkylene group such as an ethylene group or a propylene group.

Examples of such U include the following groups. Further, in the following structures, it is preferable that the bonding site on the right side be bonded to V.

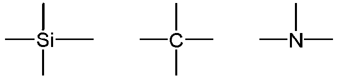

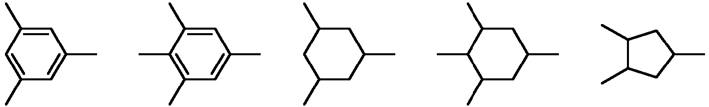

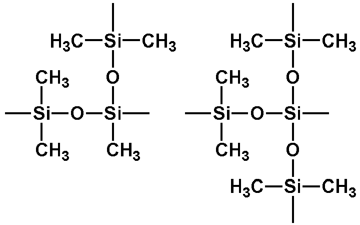

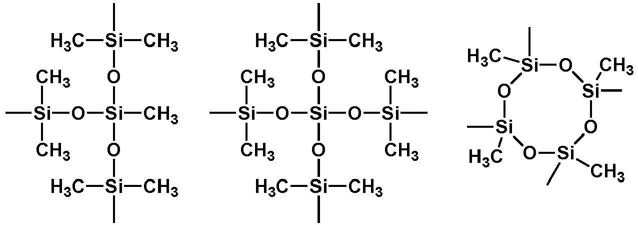

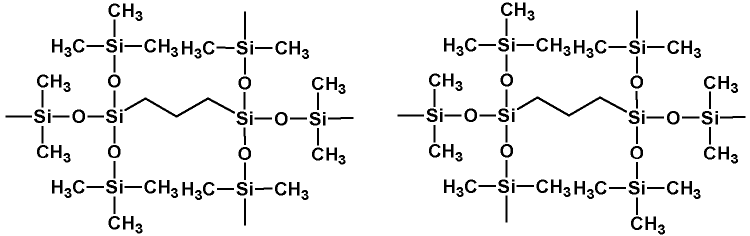

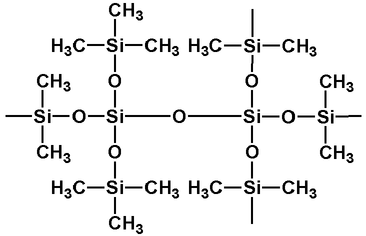

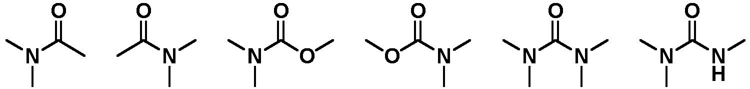

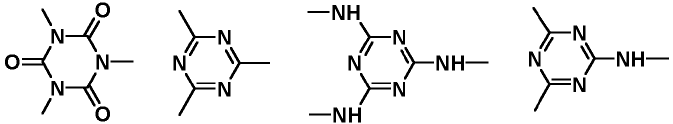

In formula (1), V independently at each occurrence is a single bond or a divalent hydrocarbon group which may have at least one selected from an oxygen atom, a nitrogen atom, and a sulfur atom and has preferably 1 to 20 carbon atoms, which is a linking group connecting the U group and the Z group. Further, it is preferable that V be a single bond when Z is a single bond.

Specific examples of the divalent hydrocarbon group include an alkylene group having 1 to 10 carbon atoms which may have at least one selected from an oxygen atom, a nitrogen atom, and a sulfur atom and an alkylene group having 1 to 10 carbon atoms which contains an arylene group having 6 to 8 carbon atoms (for example, an alkylene-arylene group having 7 to 18 carbon atoms).

Specific examples of such V include the following groups in addition to a single bond. Further, in the following structures, the bonding site on the left side is bonded to U, and the bonding site on the right side is bonded to Z. 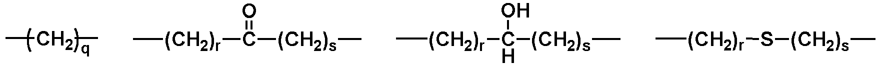 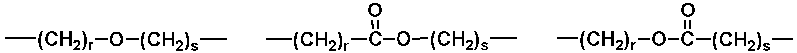 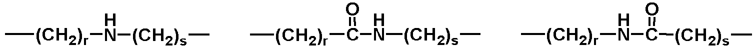 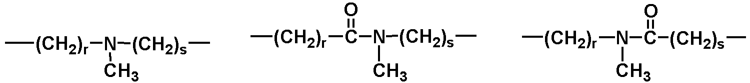 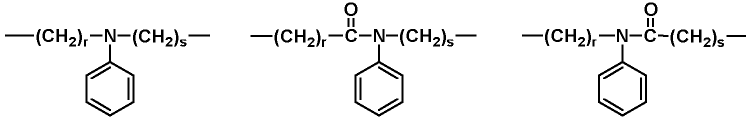 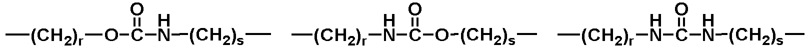 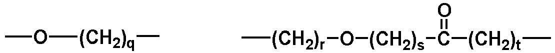 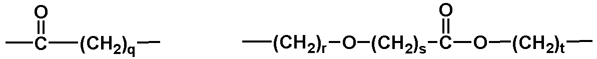 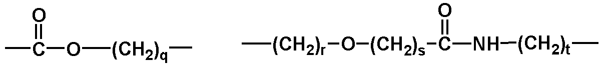 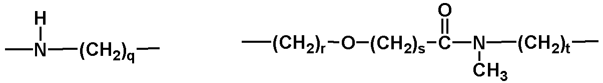 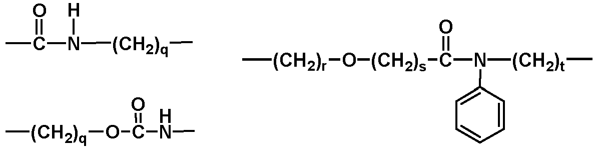 (In the formulae, q is an integer of 1 to 10, r, s, and t are each an integer of 1 to 8, the total value of r and s is an integer of 2 to 10, and the total value of r, s, and t is an integer of 3 to 10.)

In formula (1), Z independently at each occurrence is a single bond, a carbon atom, a silicon atom, a nitrogen atom, a sulfur atom, or a tri- to octavalent organic group, and examples of the tri- to octavalent organic group include tri- to octavalent groups such as a tri- or tetravalent cyclic hydrocarbon group having 6 to 8 carbon atoms, a trivalent group represented by -SiR³= (R³ is a hydroxyl group, an alkyl group having 1 to 3 carbon atoms, or an alkoxy group having 1 to 3 carbon atoms), a trivalent group represented by -CR⁴= (R⁴ is a hydrogen atom, a hydroxyl group, or an alkyl group having 1 to 3 carbon atoms), a linear tri- to octavalent organopolysiloxane residue having 2 to 10 silicon atoms and particularly 2 to 8 silicon atoms or a branched or cyclic tri- to octavalent organopolysiloxane residue having 3 to 10 silicon atoms and particularly 3 to 8 silicon atoms, a trivalent amide group, a trivalent carbamate group, a tri- or tetravalent urea group, and a tri- to octavalent nitrogen-containing heterocycle-containing group (a trivalent cyanurate group, a trivalent isocyanurate group, a tri- or tetravalent triazine ring-containing group, or the like).

The organopolysiloxane residue may contain an alkyl group having 1 to 8 carbon atoms and preferably 1 to 4 carbon atoms, such as a methyl group, an ethyl group, a propyl group, or a butyl group, or a phenyl group. Further, the organopolysiloxane residue may have a silalkylene structure in which two silicon atoms are bonded to each other via an alkylene group such as an ethylene group or a propylene group.

Examples of such Z include the following groups in addition to a single bond. Further, in the following structures, the bonding site on the left side is bonded to V, and other bonding sites are bonded to Y. 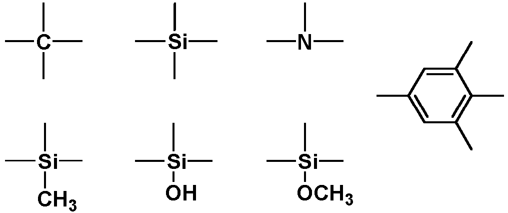 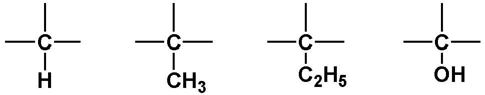 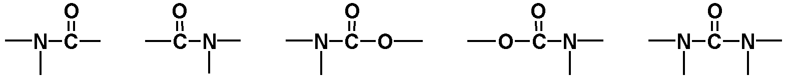 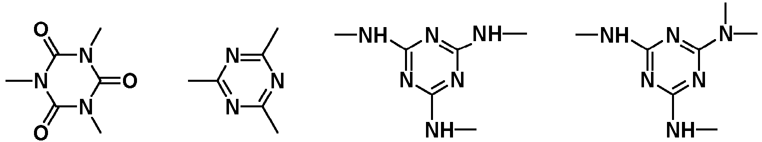 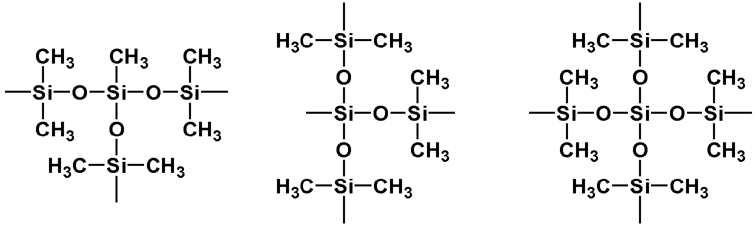 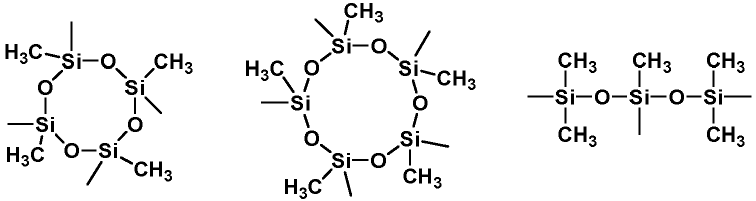 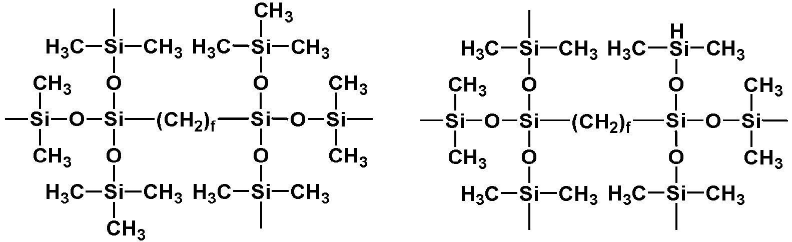 (In the formulae, f is an integer of 2 to 4.)

In formula (1), Y independently at each occurrence is a divalent hydrocarbon group which may have at least one selected from an oxygen atom, a nitrogen atom, a sulfur atom, and a silicon atom and has preferably 1 to 20 carbon atoms, which is a linking group connecting the Z group and the A group. Specific examples of the divalent hydrocarbon group include an alkylene group having 1 to 20 carbon atoms and preferably 1 to 10 carbon atoms which may have at least one selected from an oxygen atom, a nitrogen atom, and a sulfur atom, an alkylene group having 1 to 10 carbon atoms which contains an arylene group having 6 to 8 carbon atoms (for example, an alkylene-arylene group having 7 to 18 carbon atoms), a divalent group in which alkylene groups having 1 to 8 carbon atoms are bonded to each other via a diorganosilylene group, a silalkylene structure, a silarylene structure, or a nitrogen-containing heterocyclic group, and a divalent group in which an alkylene group having 1 to 10 carbon atoms is bonded to a bonding site of a linear organopolysiloxane residue having 2 to 10 silicon atoms and particularly 2 to 8 silicon atoms or a branched or cyclic organopolysiloxane residue having 3 to 10 silicon atoms and particularly 3 to 8 silicon atoms.

Here, as the group bonded to a silicon atom of a diorganosilylene group, a silalkylene structure, a silarylene structure, an organopolysiloxane residue, or the like, an alkyl group having 1 to 8 carbon atoms and preferably 1 to 4 carbon atoms, such as a methyl group, an ethyl group, a propyl group, or a butyl group, or a phenyl group is preferable. Further, the alkylene group in the silalkylene structure is preferably an ethylene group, a propylene group (a trimethylene group or a methylethylene group), a butylene group (a tetramethylene group or a methylpropylene group), or the like, which has 2 to 6 carbon atoms and preferably 2 to 4 carbon atoms. Further, the organopolysiloxane residue may have a silalkylene structure in which two silicon atoms are bonded to each other via an alkylene group such as an ethylene group or a propylene group.

Examples of such Y include the following groups. Further, in the following structures, the bonding site on the left side is bonded to Z, and the bonding site on the right side is bonded to A.

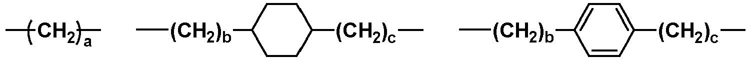

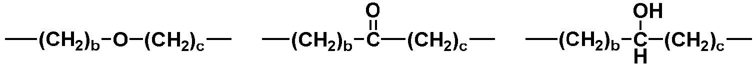

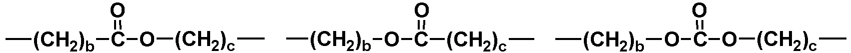

**-O-(CH₂)ₐ-**

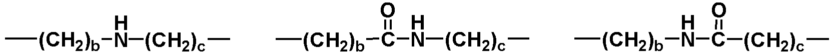

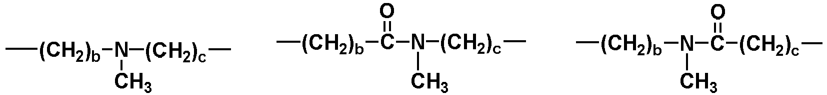

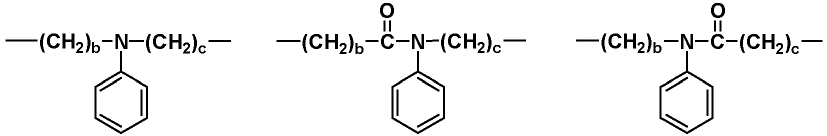

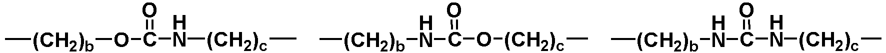

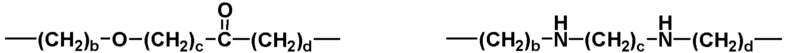

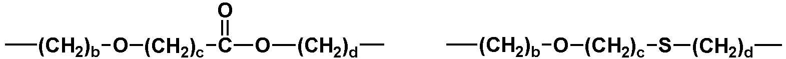

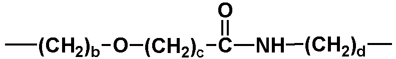

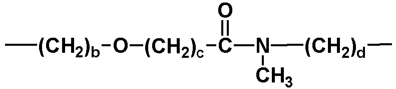

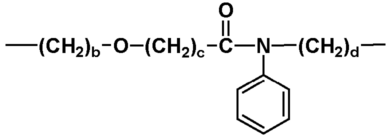

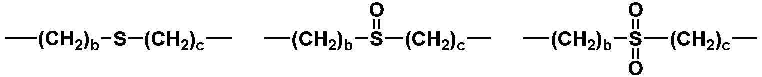

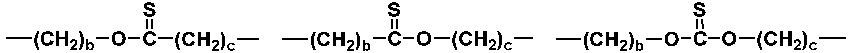

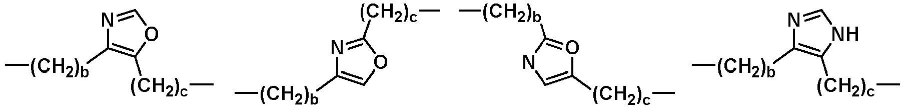

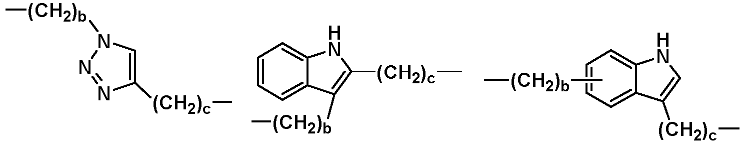

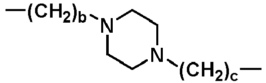

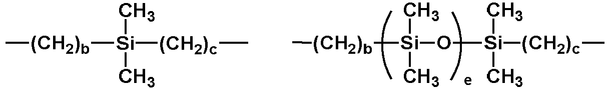

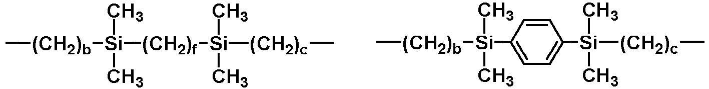

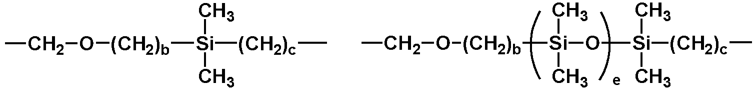

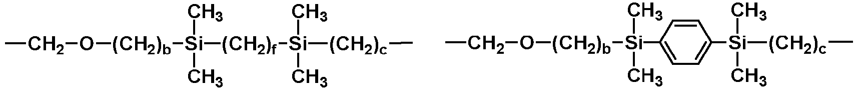

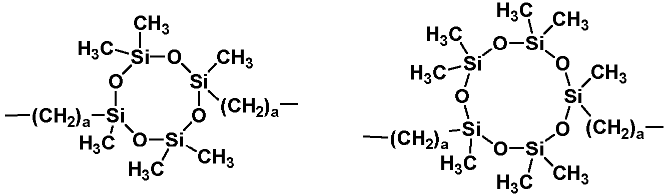

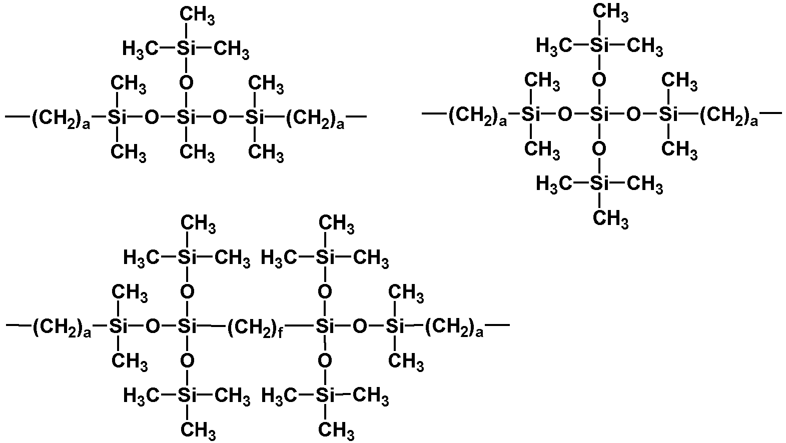

(In the formulae, a independently at each occurrence is an integer of 1 to 10, b, c, and d are each an integer of 1 to 8, the total value of b and c is an integer of 2 to 10, the total value of b, c, and d is an integer of 3 to 10, e is an integer of 1 to 9, and f is an integer of 2 to 4.)

In formula (1), A independently at each occurrence is a monovalent reactive silyl group and preferably a hydroxyl group-containing silyl group (silanol group) or a hydrolyzable silyl group.

As the hydrolyzable group-containing silyl group or the hydrolyzable silyl group, a group represented by general formula (2) or general formula (3) is preferable. 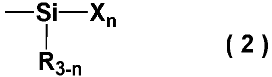 (In the formula, R independently at each occurrence is an alkyl group having 1 to 4 carbon atoms or a phenyl group, X independently at each occurrence is a hydroxyl group or a hydrolyzable group, and n is an integer of 1 to 3.)

**-Si(NH₂)_{n"}(NH)_{n'}** **(3)**

(In the formula, n" is an integer of 0 to 3, and n' is (3-n")/2.)

In formula (2), R independently at each occurrence is an alkyl group having 1 to 4 carbon atoms such as a methyl group, an ethyl group, a propyl group, or a butyl group, or a phenyl group. Among these, a methyl group is suitable.

Further, in formula (2), X independently at each occurrence is a hydroxyl group or a hydrolyzable group, and examples of such X include a hydroxyl group, an alkoxy group having 1 to 10 carbon atoms such as a methoxy group, an ethoxy group, a propoxy group, an isopropoxy group, or a butoxy group, an alkoxy-substituted alkoxy group having 2 to 10 carbon atoms such as a methoxymethoxy group or a methoxyethoxy group, an acyloxy group having 1 to 10 carbon atoms such as an acetoxy group, an alkenyloxy group having 2 to 10 carbon atoms such as an isopropenoxy group or a cyclopentenyloxy group, a halogen group such as a chloro group, a bromo group, or an iodo group, and a dialkylamino group having 2 to 10 carbon atoms such as a dimethylamino group or a diethylamino group. Among these, a methoxy group, an ethoxy group an isopropenoxy group, and a chloro group are suitable. X's may be the same as or different from each other.

In formula (3), n" is an integer of 0 to 3 (an integer of 0 or 3 or less), preferably less than 3, and more preferably 0. Further, general formula (1) represents a molecular formula (structural formula) of a hydrocarbon terminal group-containing compound (monomer) in a case where n" is 3 in formula (3), and general formula (1) represents a compositional formula of a polymer (polysilazane compound) of a hydrocarbon terminal group-containing compound in a case where n" is less than 3 in formula (3).

In formula (3), n' is (3-n")/2 and preferably 1.5.

In formula (1), k1 is 2 or 3, k2 is 0 or 1, k3 is 1 or 2, and k1 + k2 + k3 is 3 or 4. Further, k1 + k2 + k3 is 3 in a case where U is trivalent, and k1 + k2 + k3 is 4 in a case where U is tetravalent.

Further, m is an integer of 1 to 7 and preferably an integer of 1 to 3.

Examples of the structure of the compound represented by formula (1) include the following structures. Several hydrocarbon terminal group-containing compounds are obtained by changing the combination of R¹, R², U, V, Z, Y, A, k1, k2, k3, and m of formula (1). 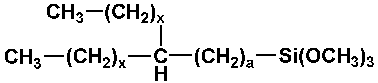 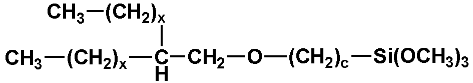 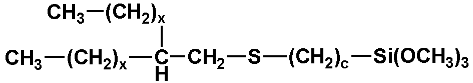 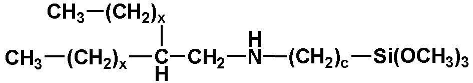 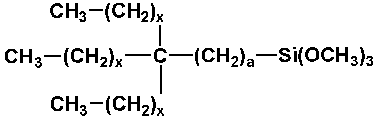 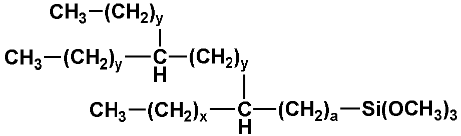 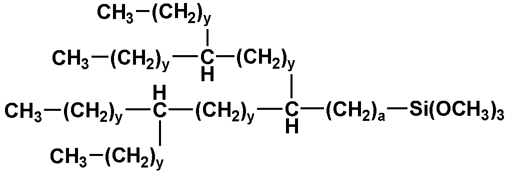 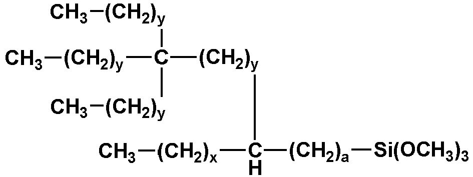 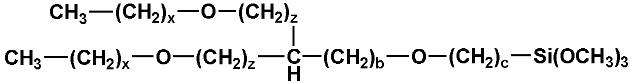 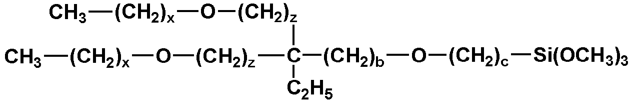 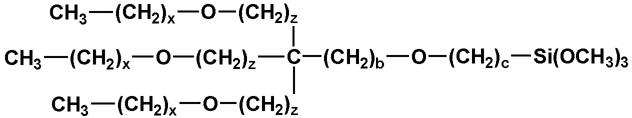 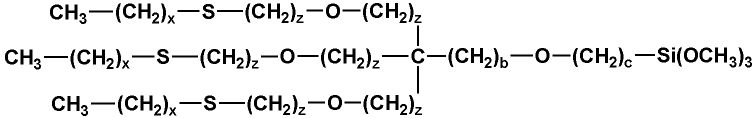 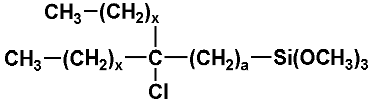 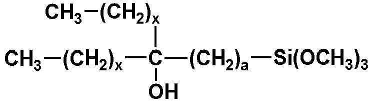 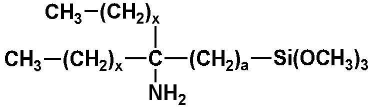 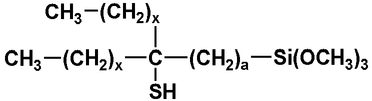 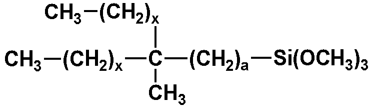 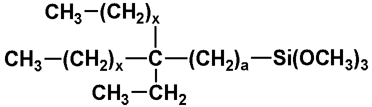 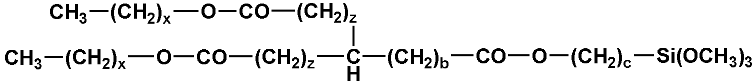 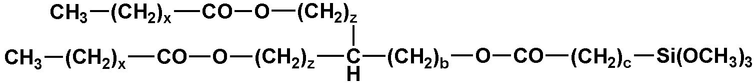 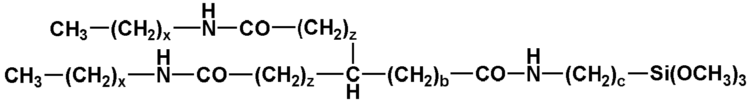 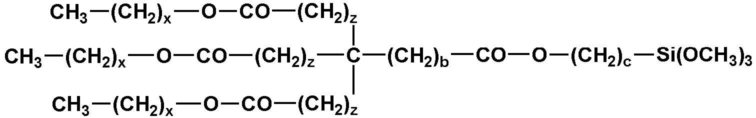 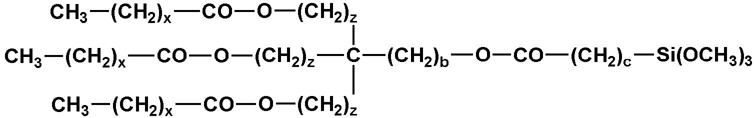 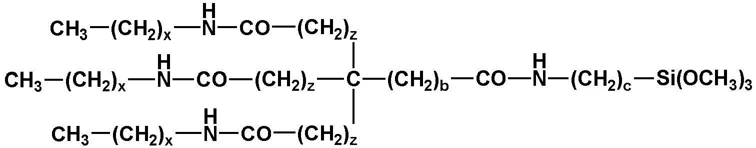 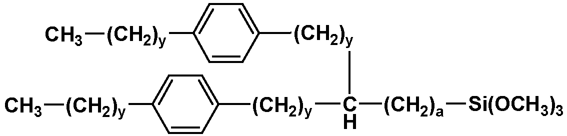 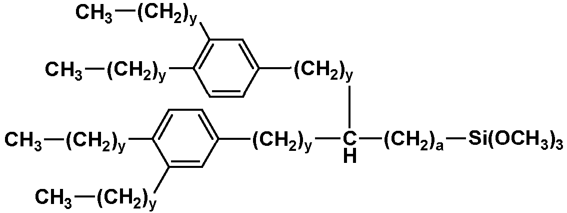 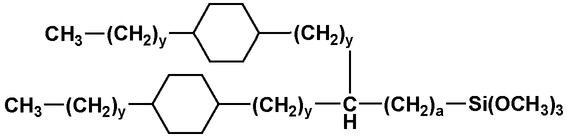 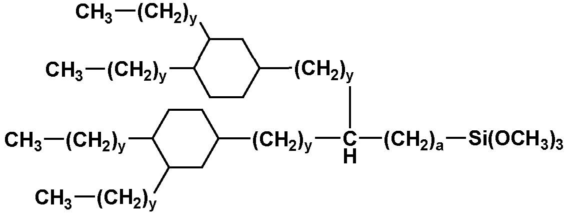 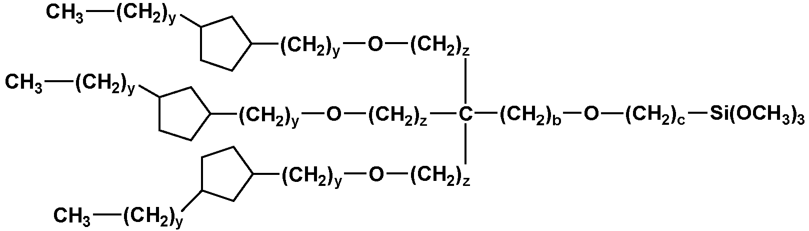 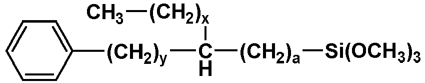 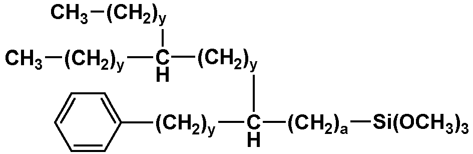 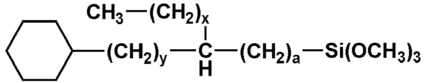 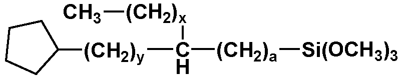 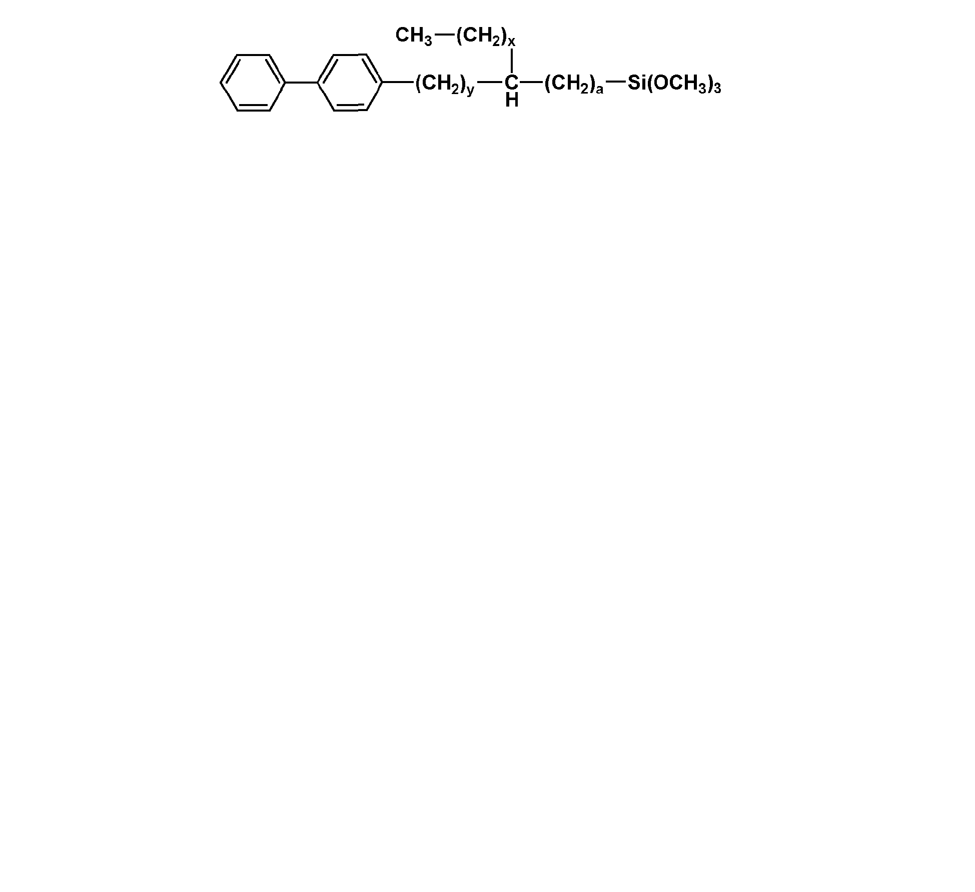 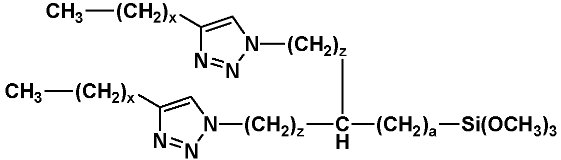 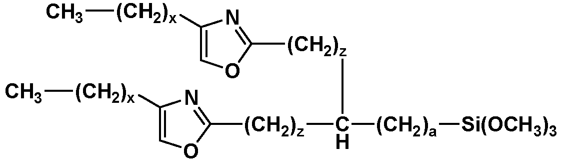 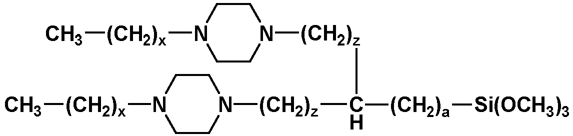 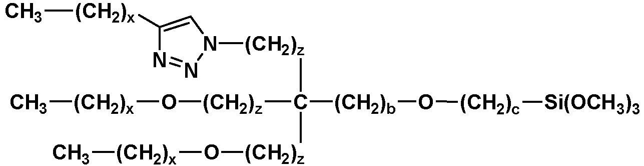 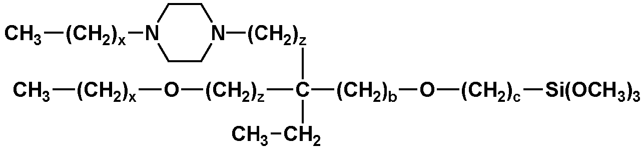 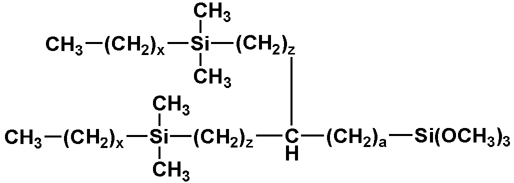 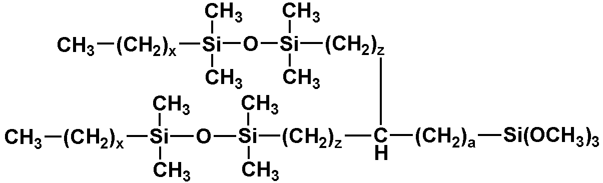 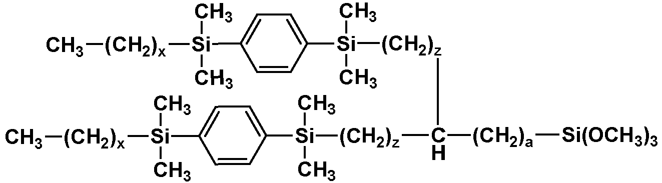 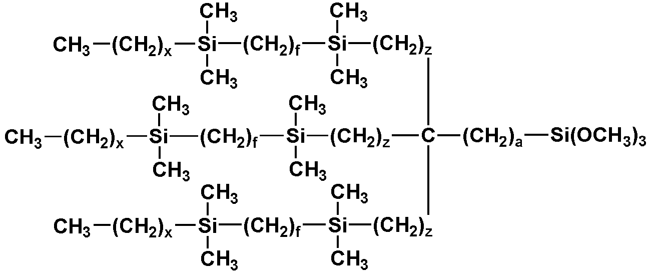 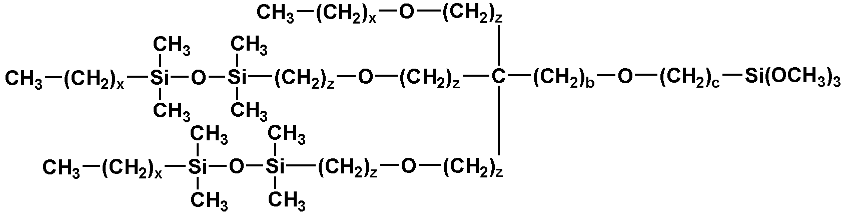 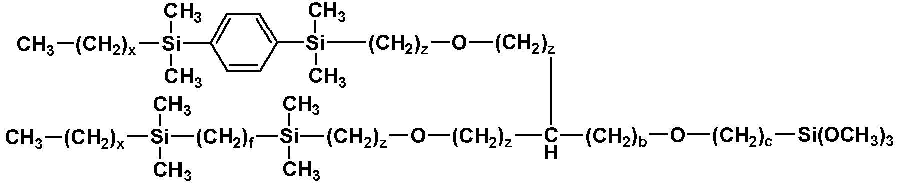 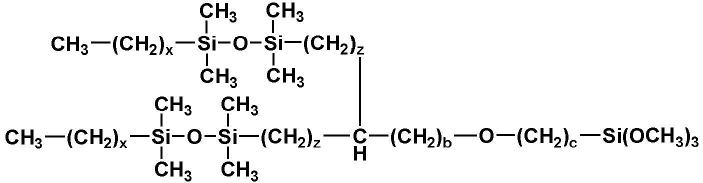 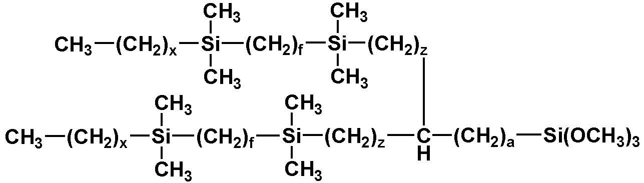 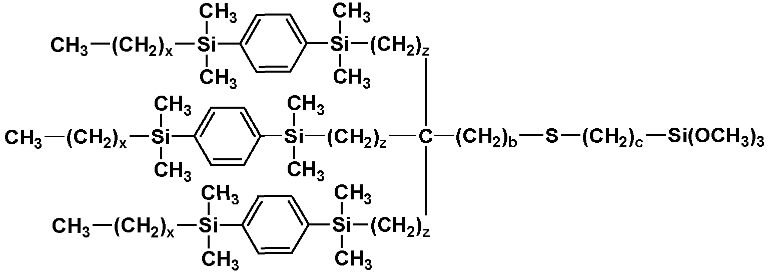 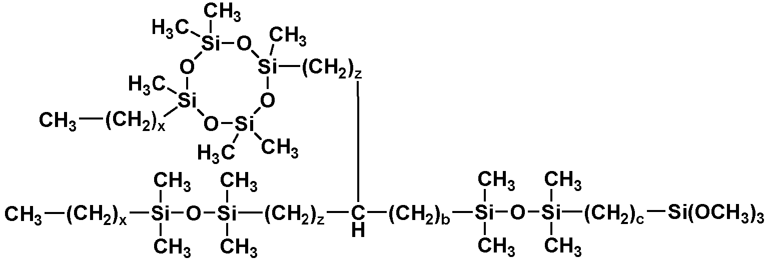 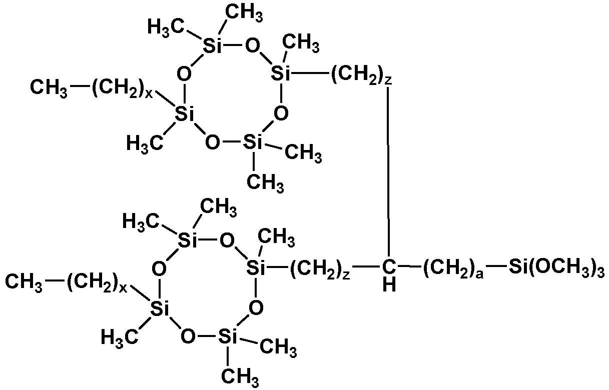 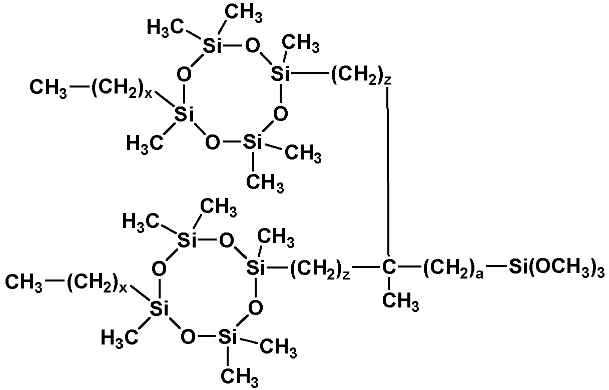 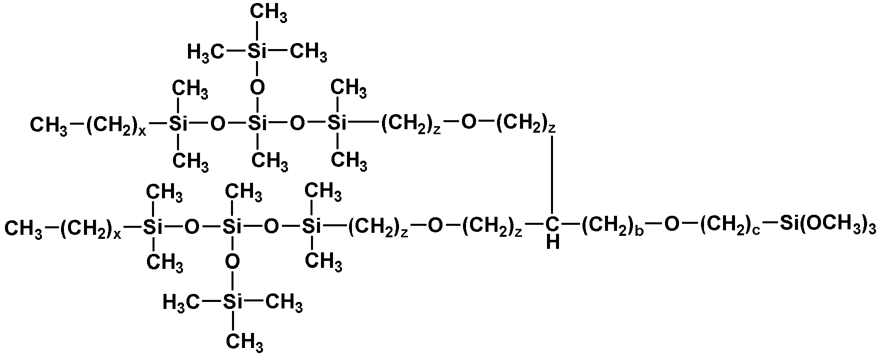 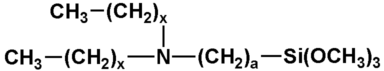 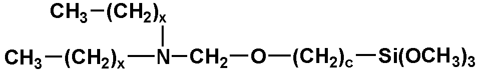 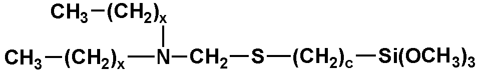 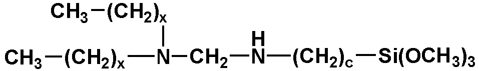 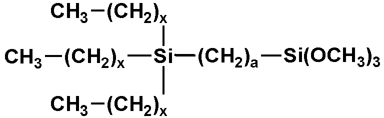 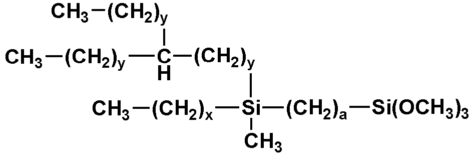 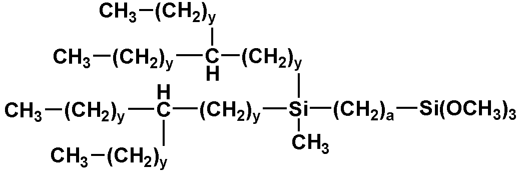 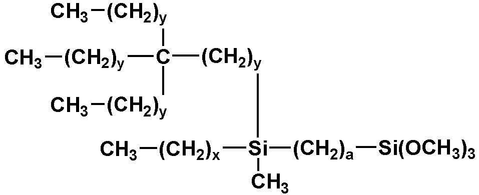 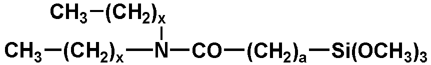 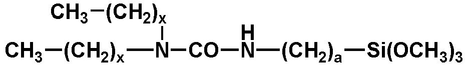 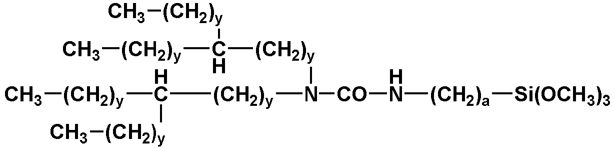 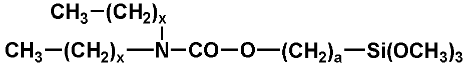 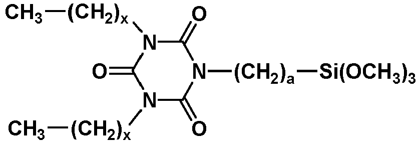 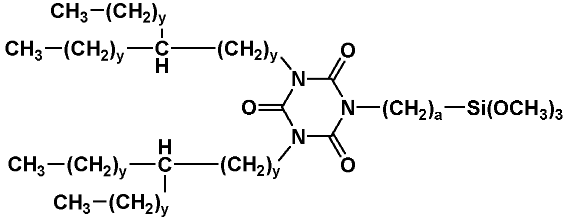 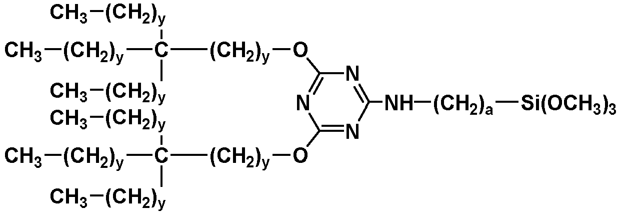 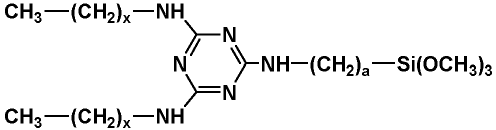 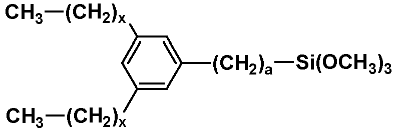 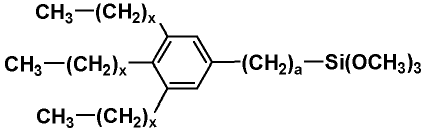 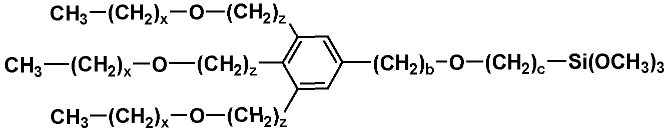 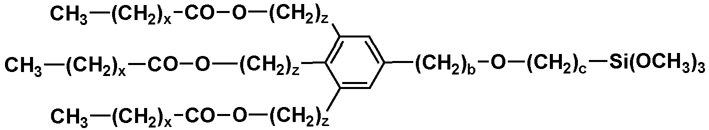 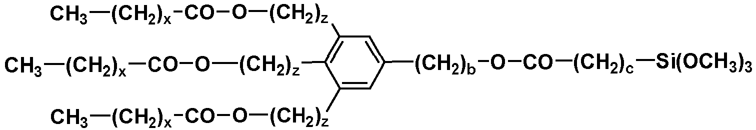 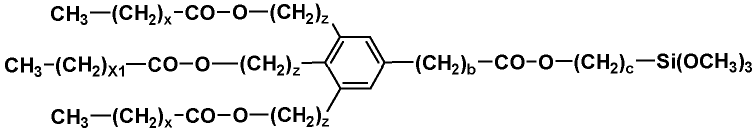 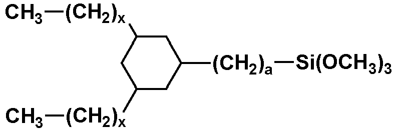 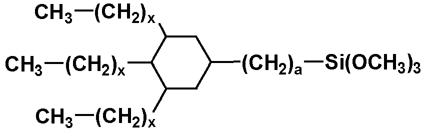 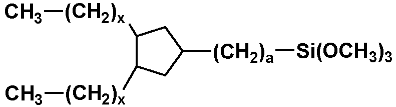 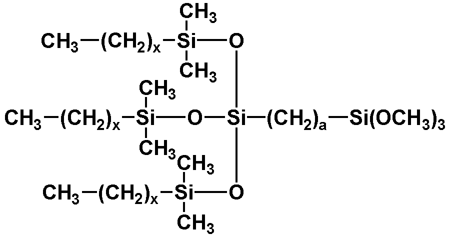 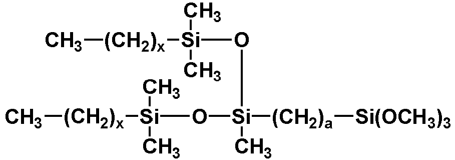 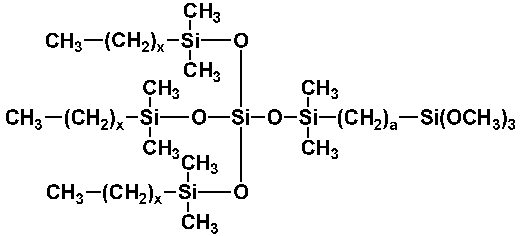 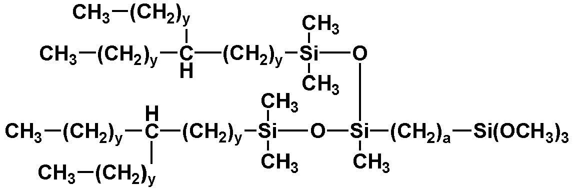 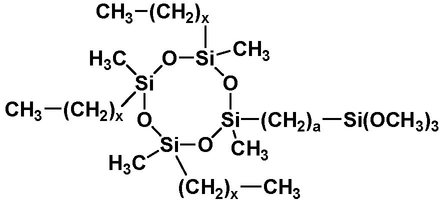 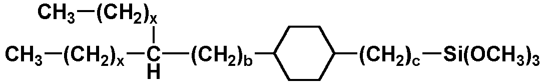 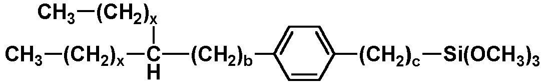 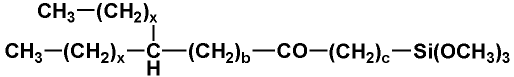 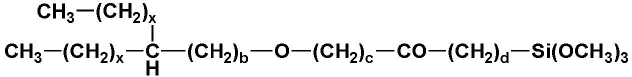 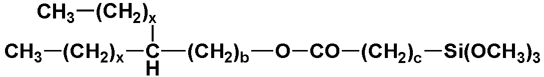 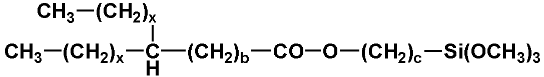 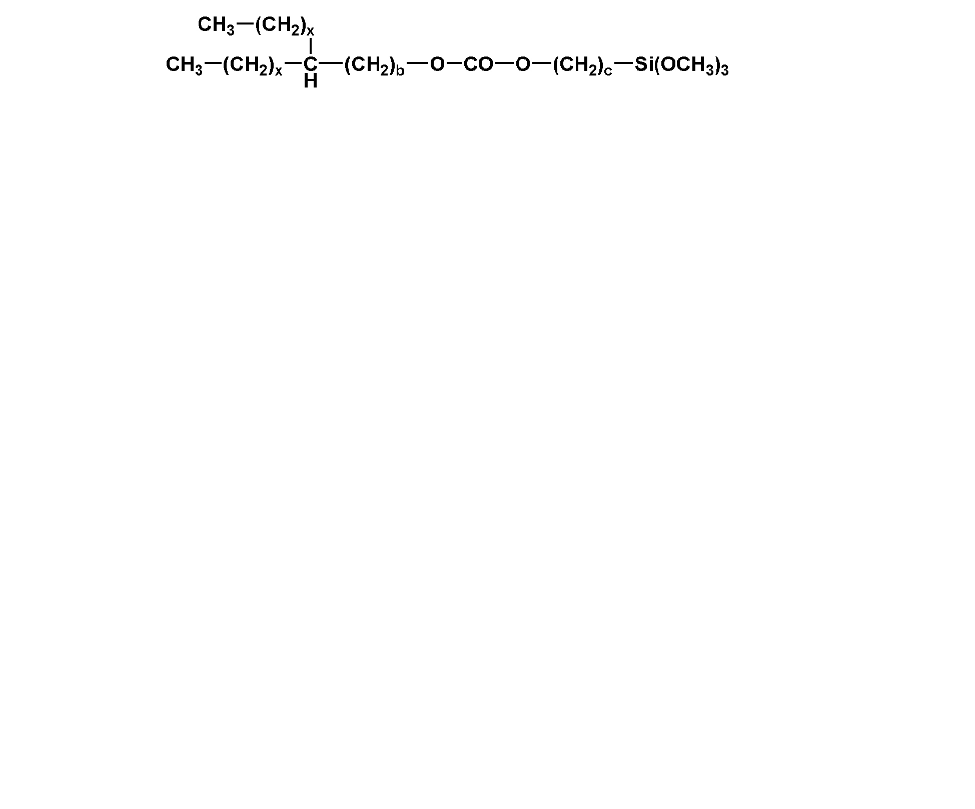 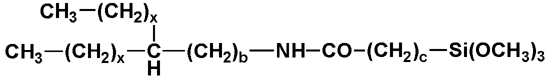 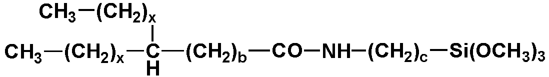 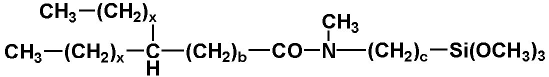 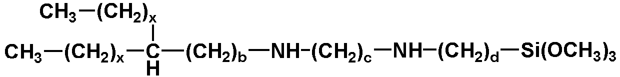 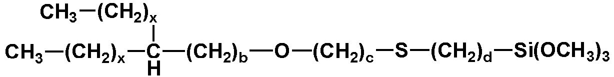 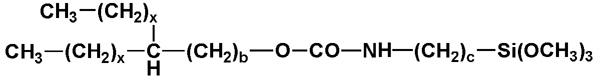 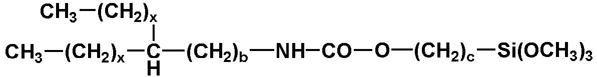 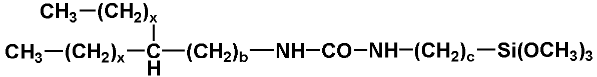 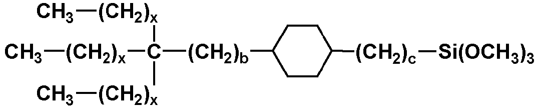 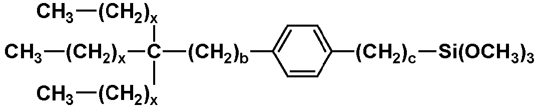 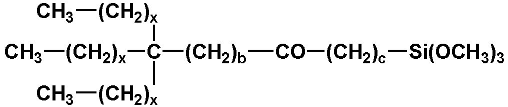 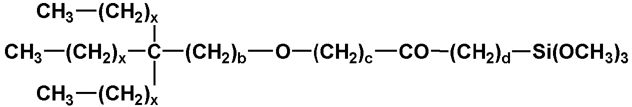 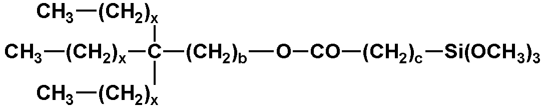 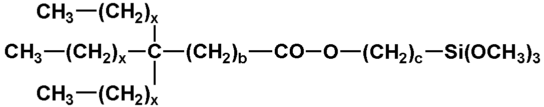 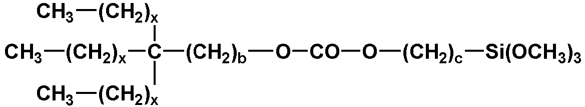 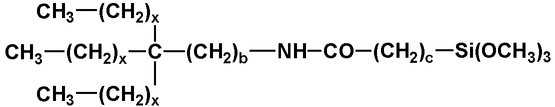 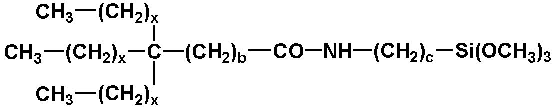 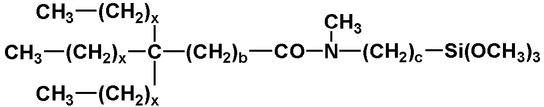 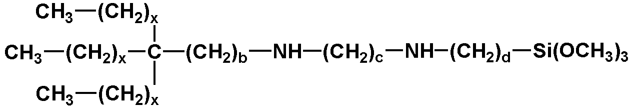 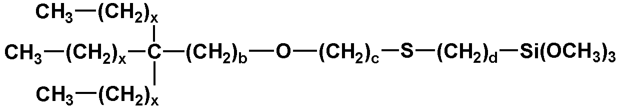 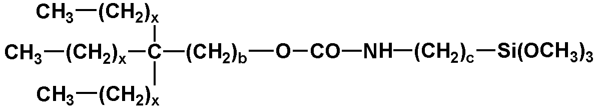 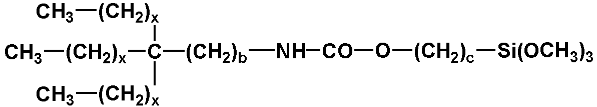 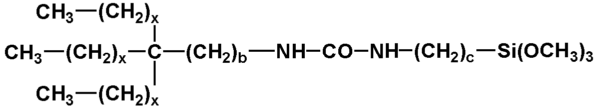 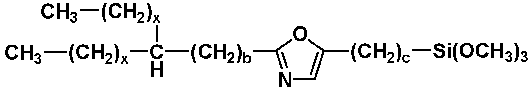 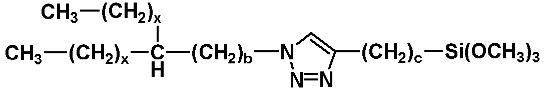 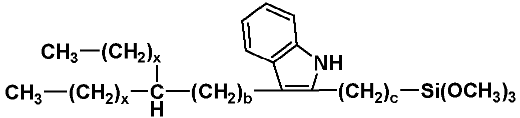 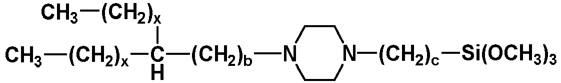 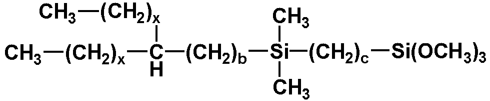 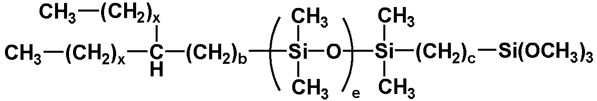 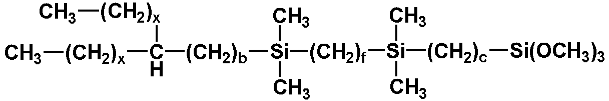 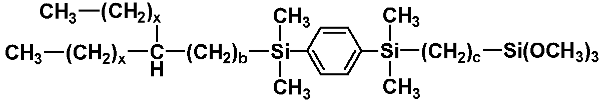 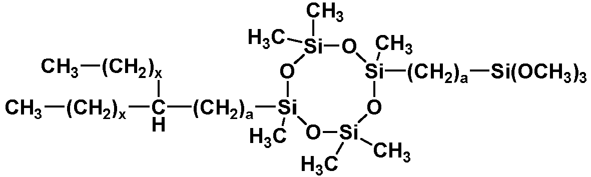 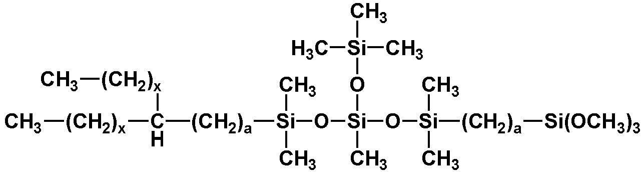 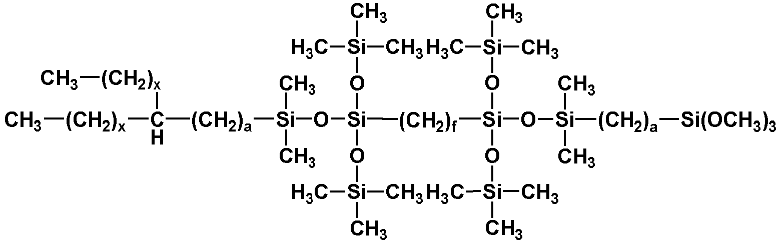 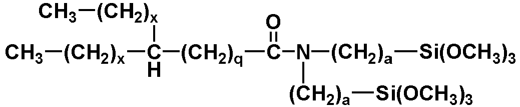 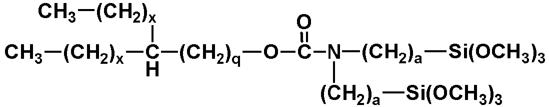 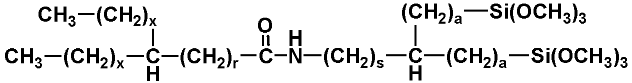 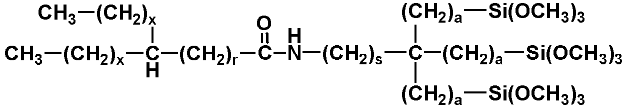 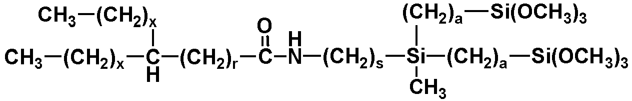 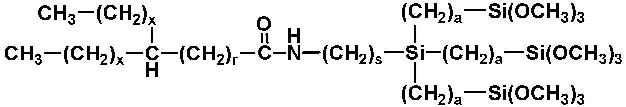 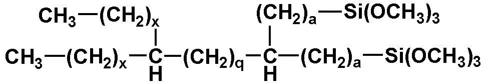 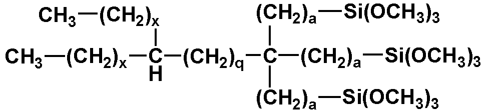 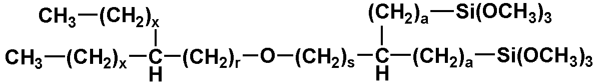 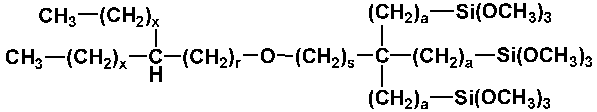 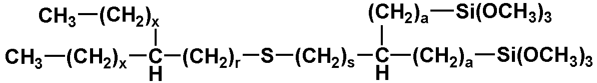 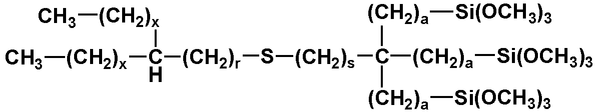 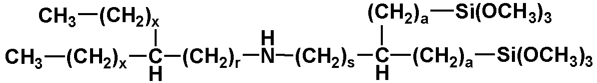 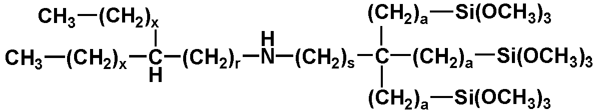 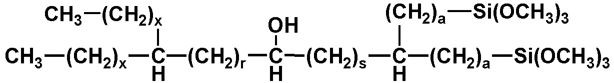 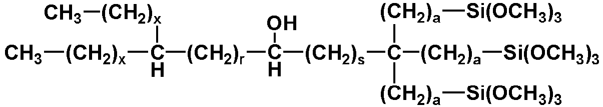 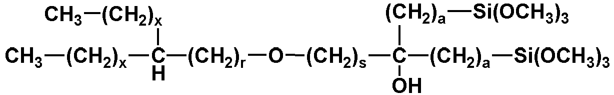 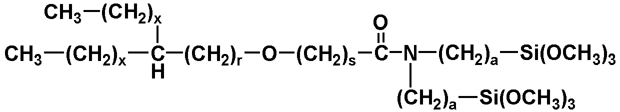 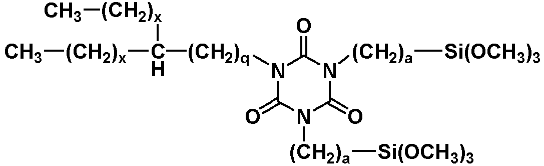 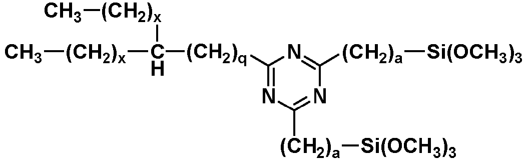 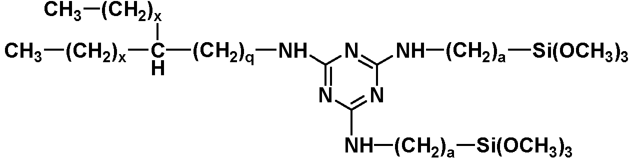 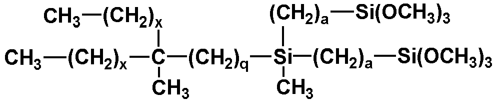 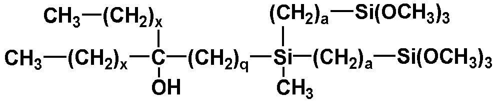 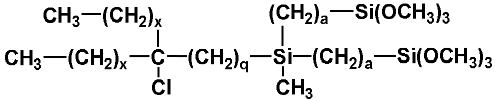 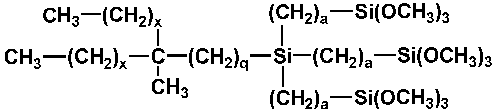 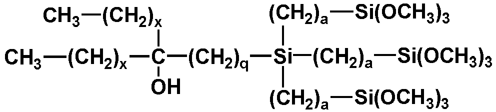 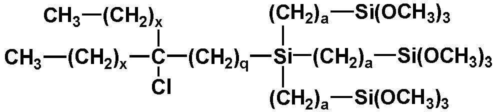 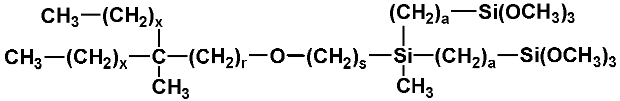 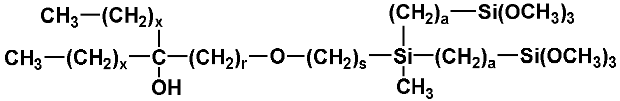 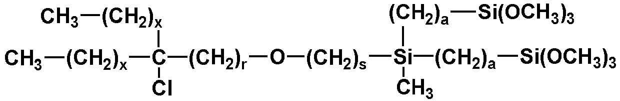 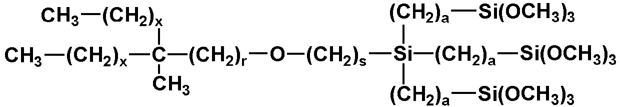 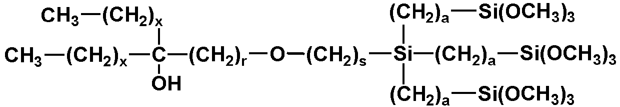 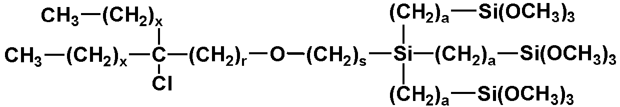 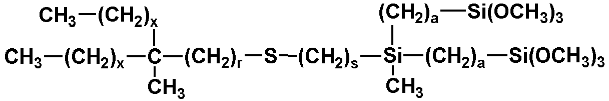 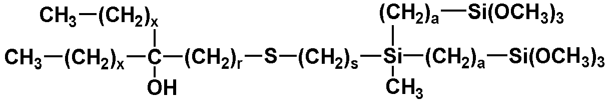 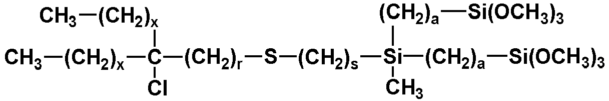 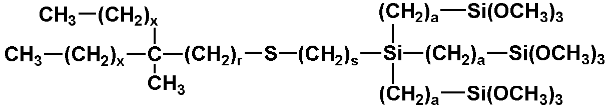 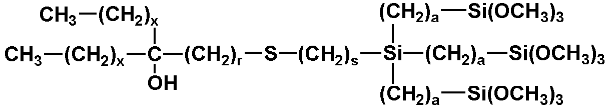 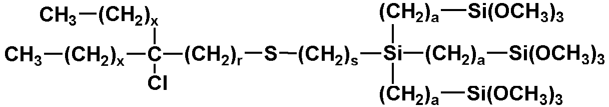 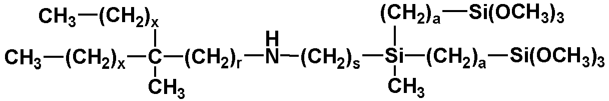 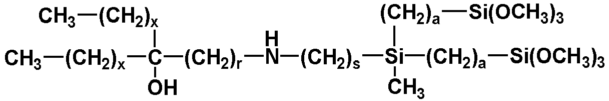 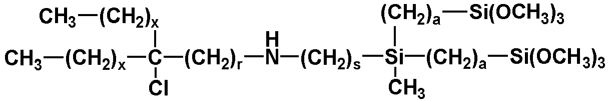 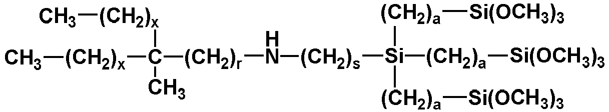 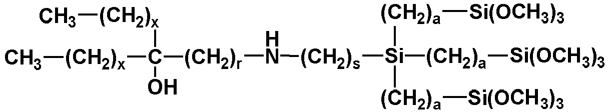 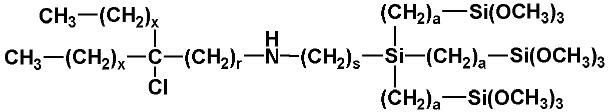 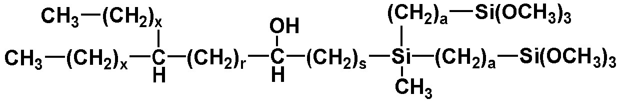 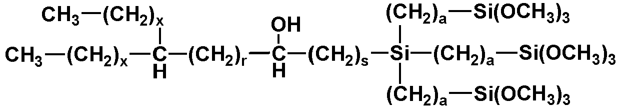 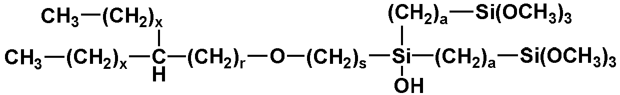 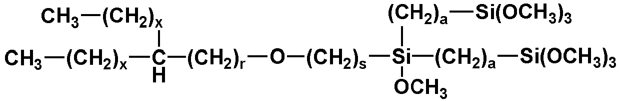 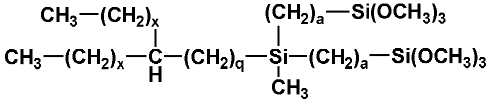 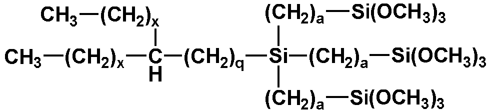 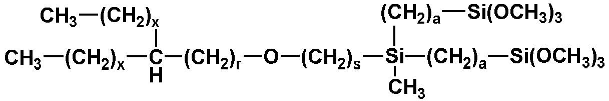 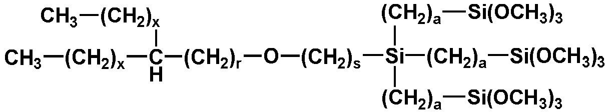 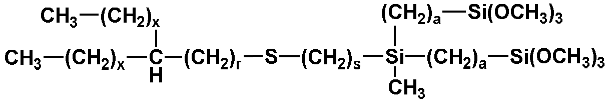 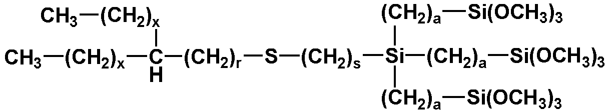 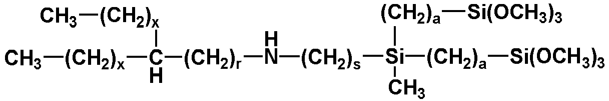 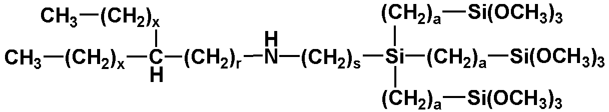 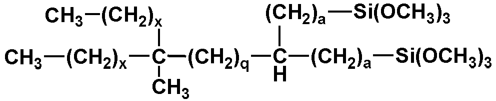 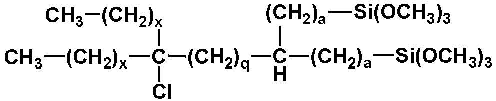 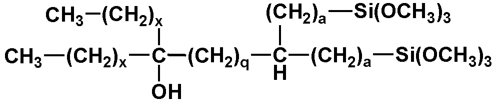 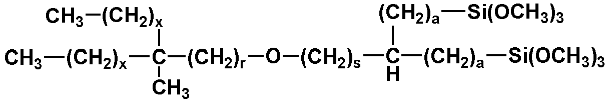 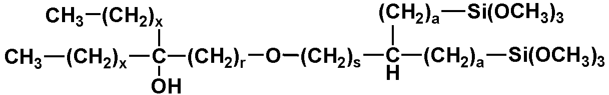 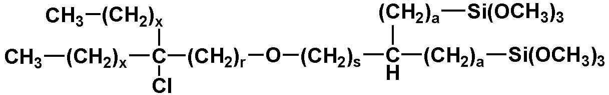 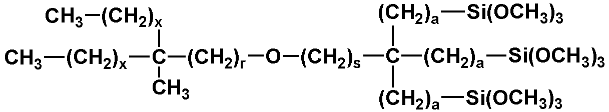 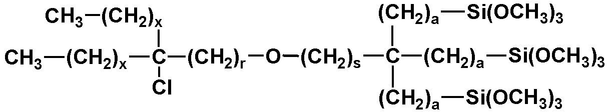 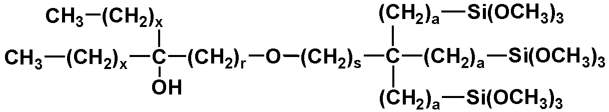 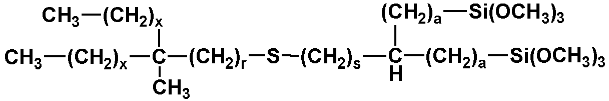 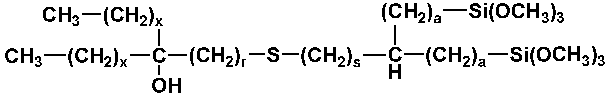 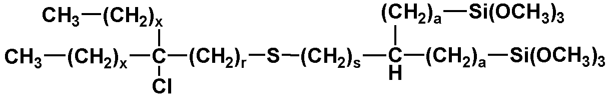 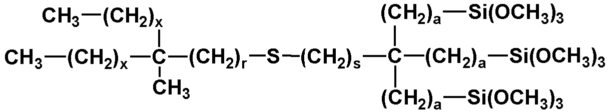 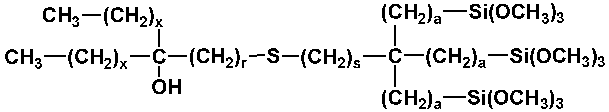 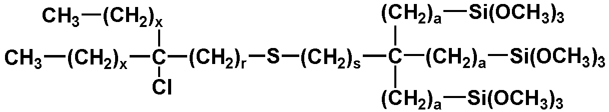 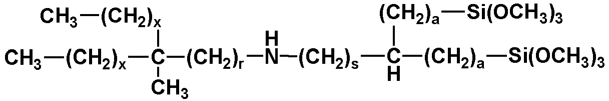 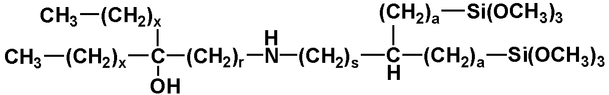 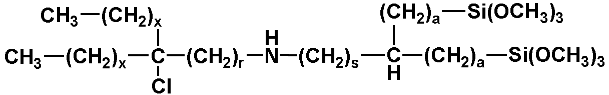 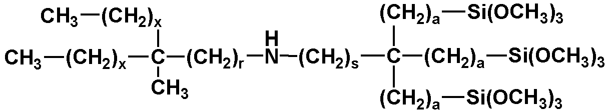 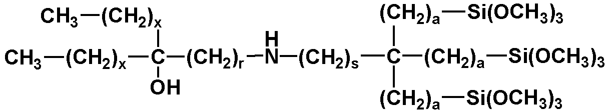 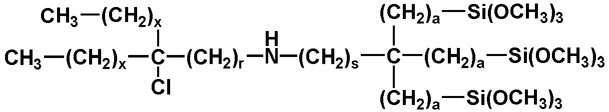 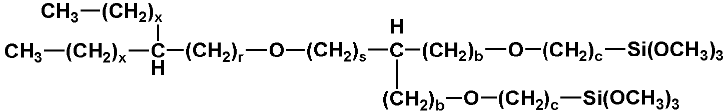 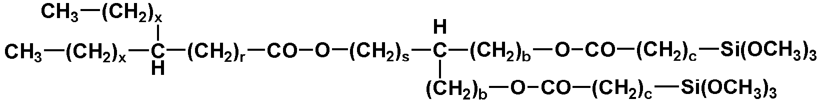 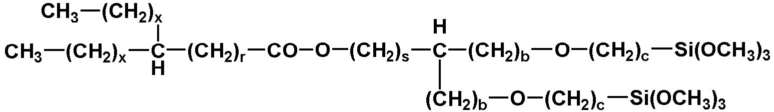 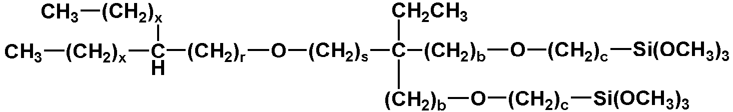 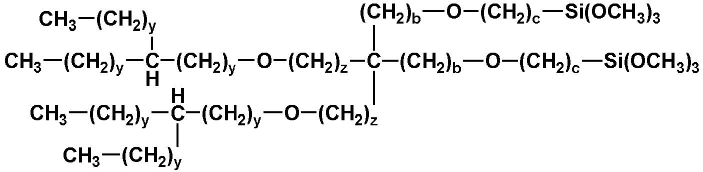 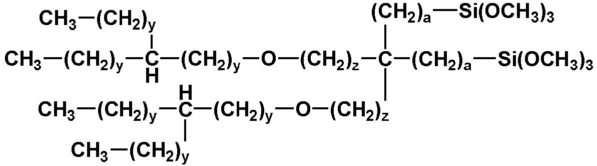 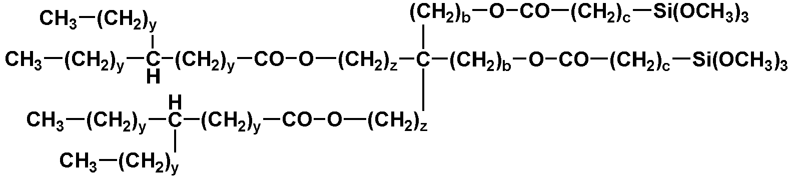 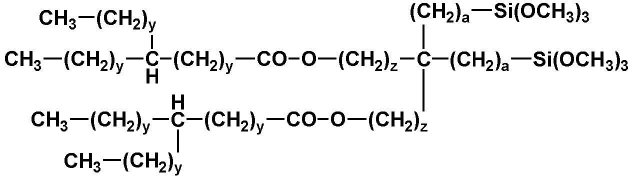 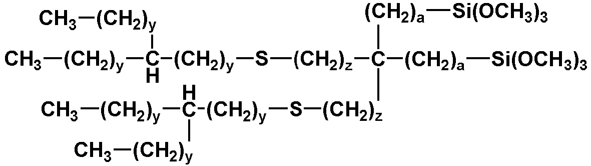 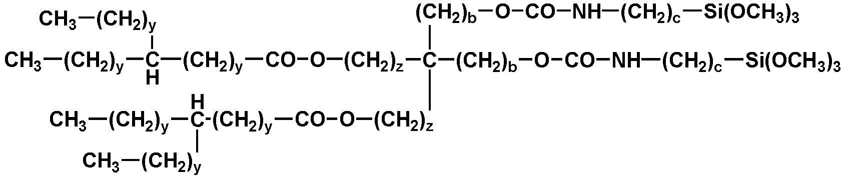 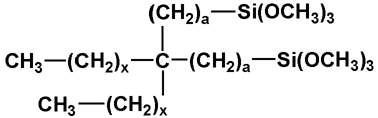 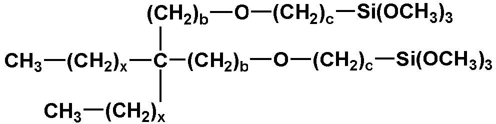 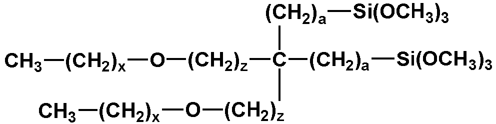 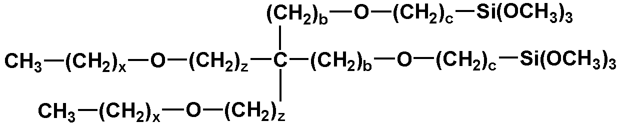 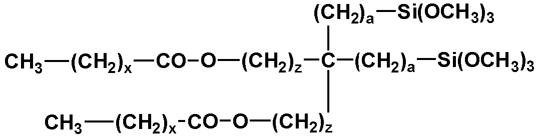 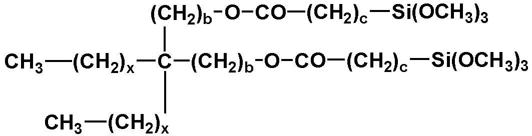 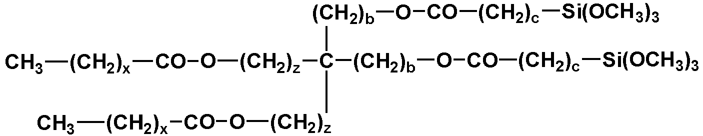 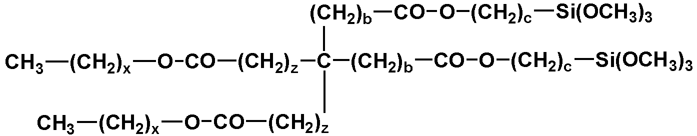 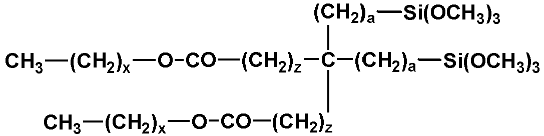 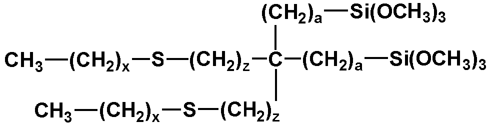 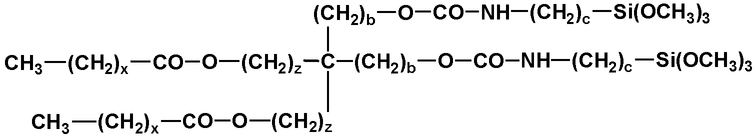 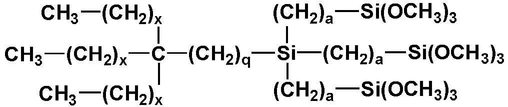 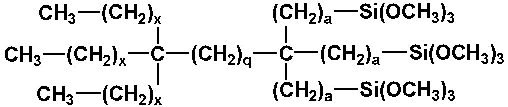 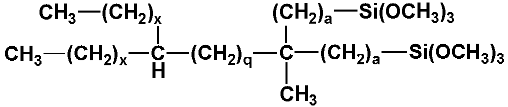 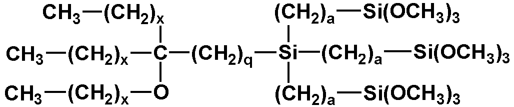 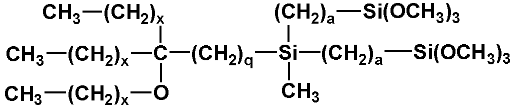 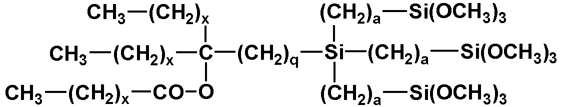 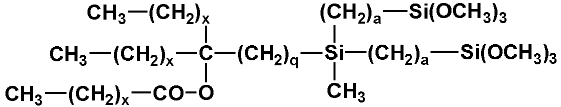 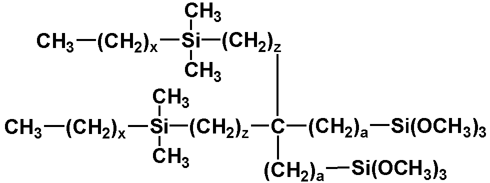 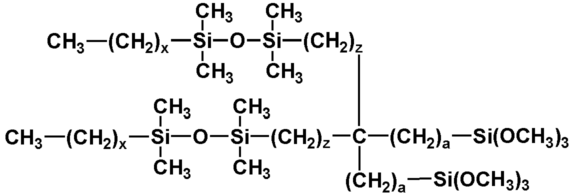 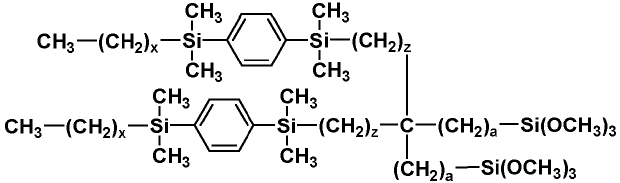 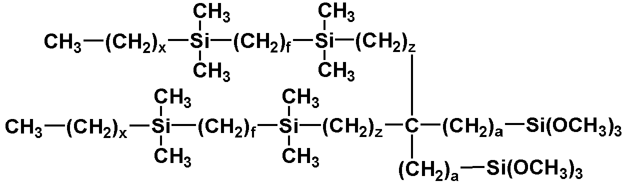 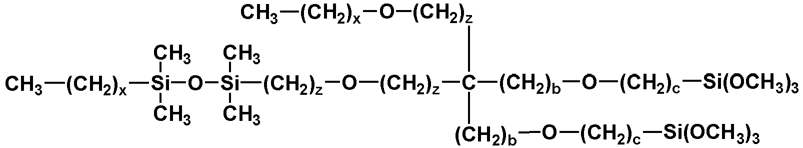 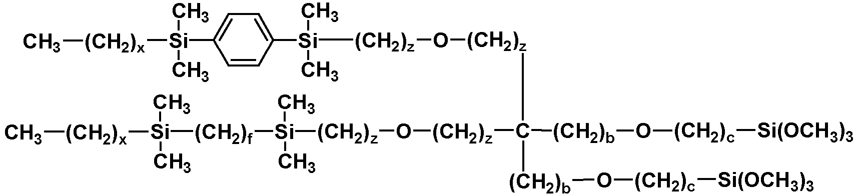 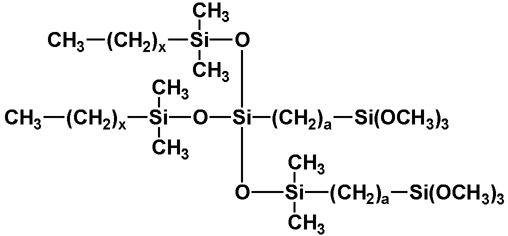 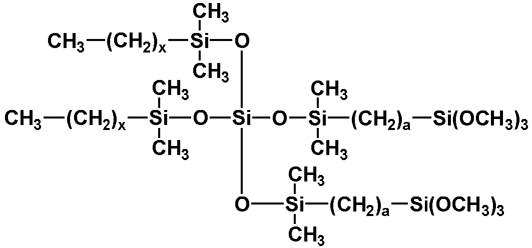 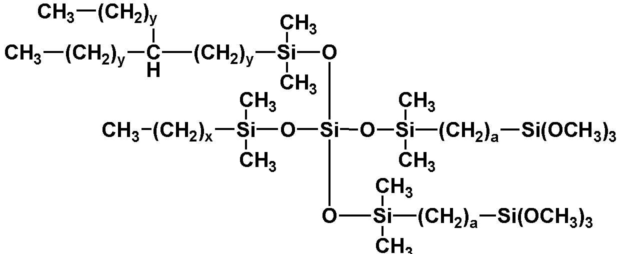 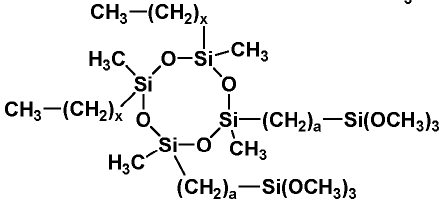 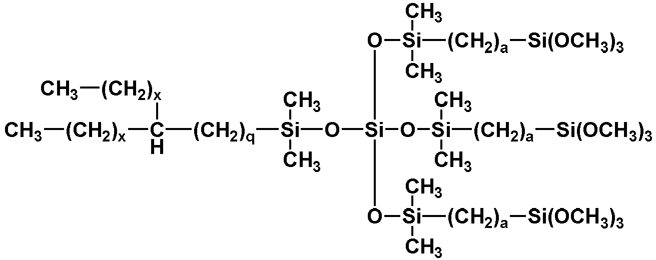 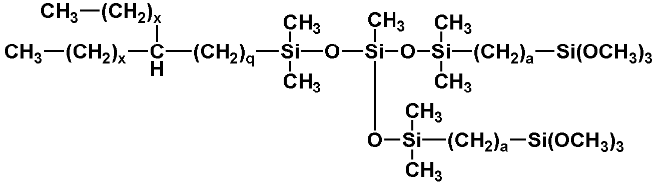 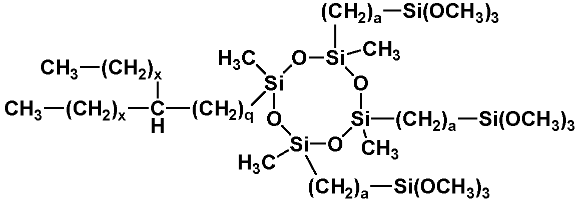 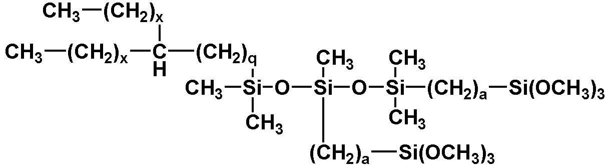 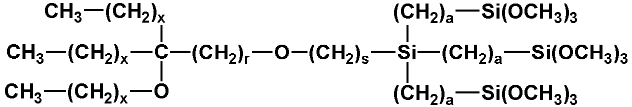 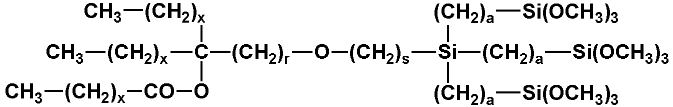 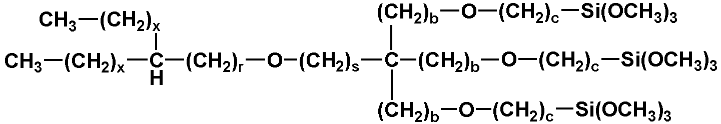 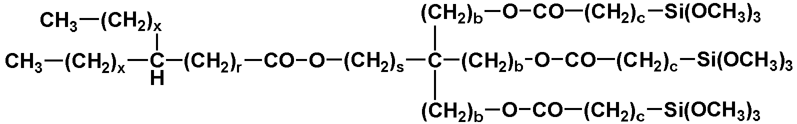 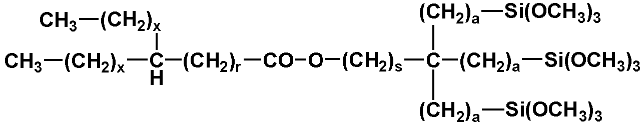 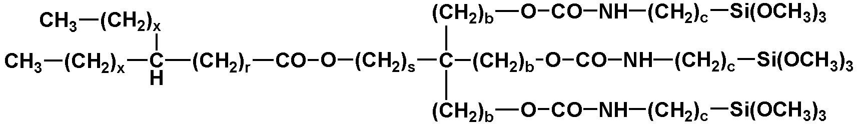 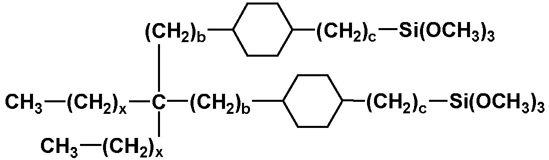 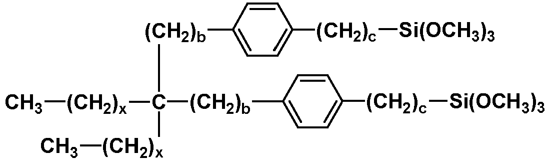 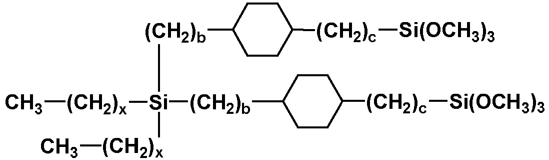 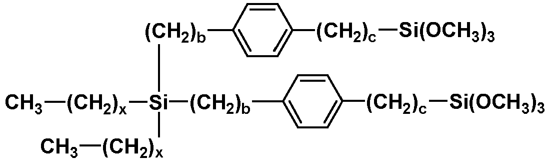 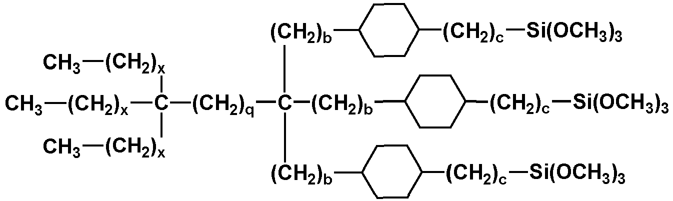 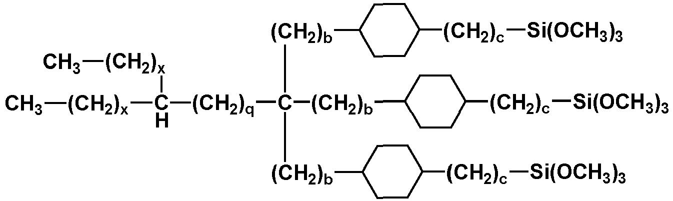 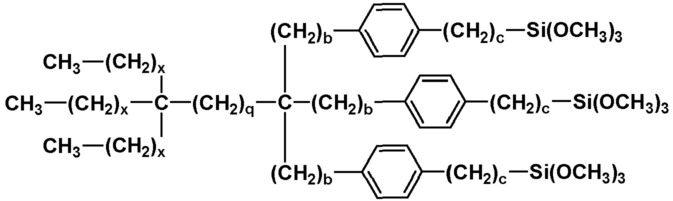 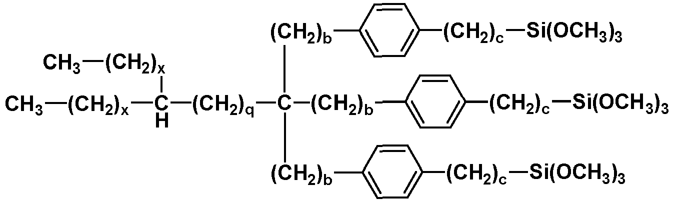 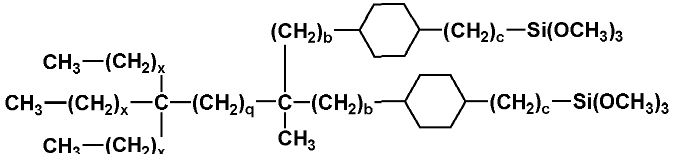 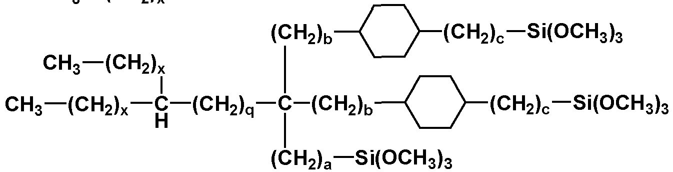 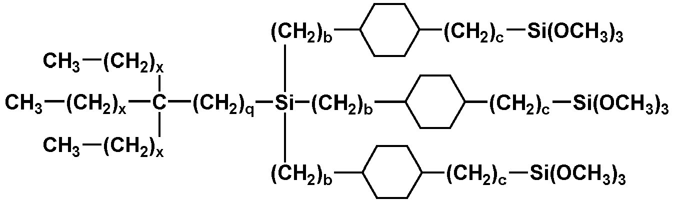 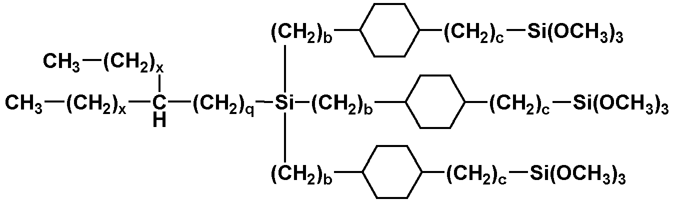 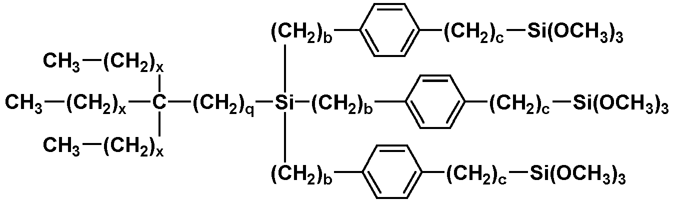 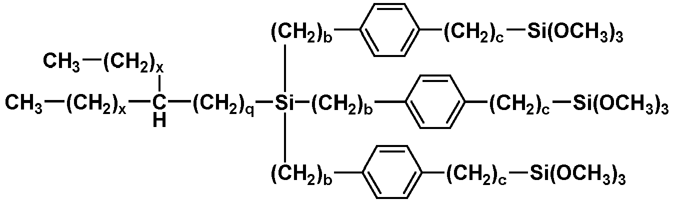 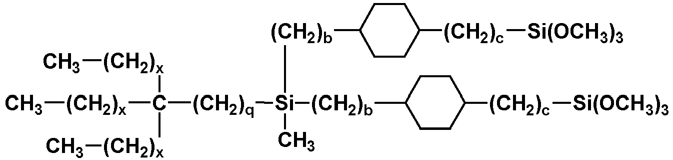 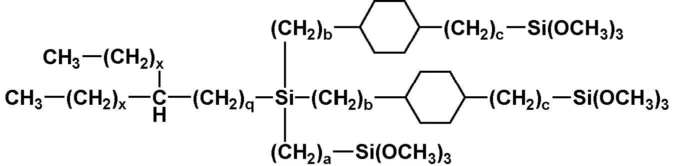 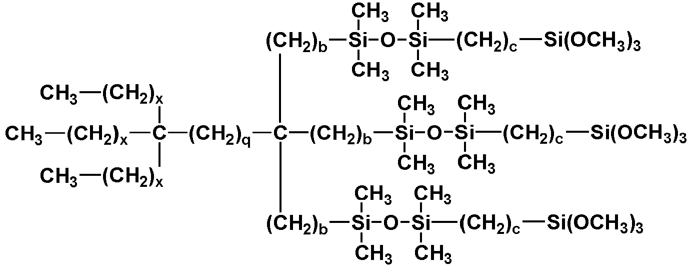 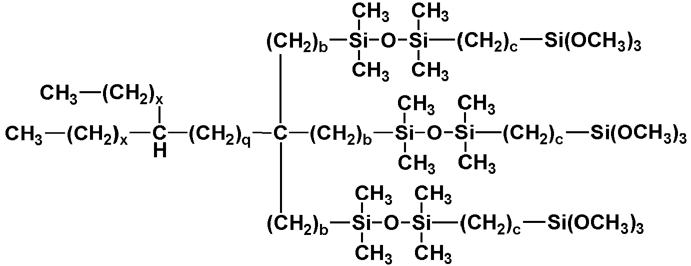 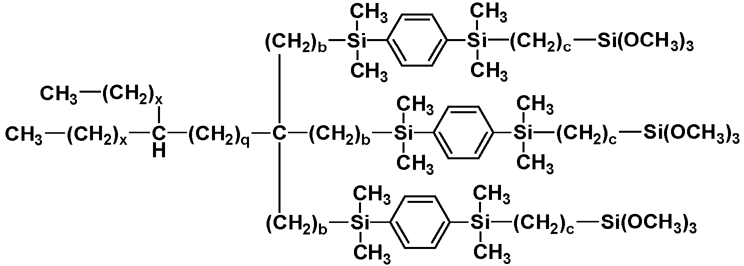 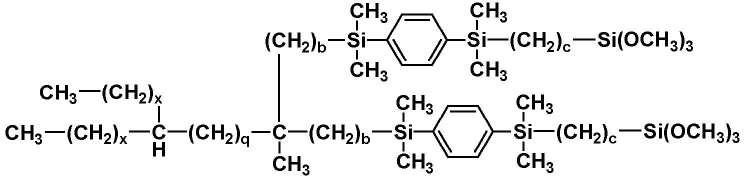 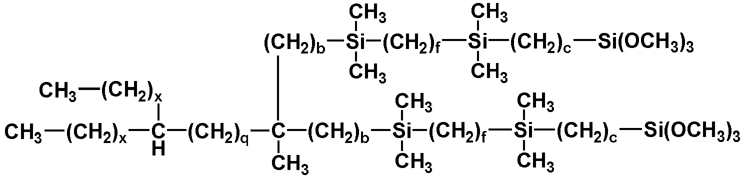 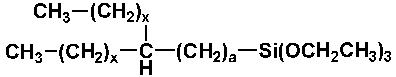 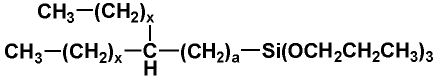 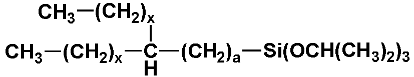 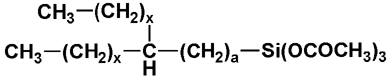 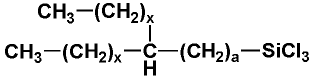 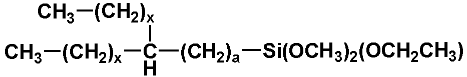 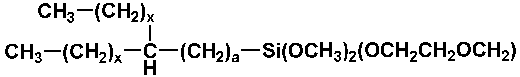 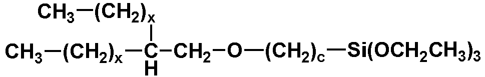 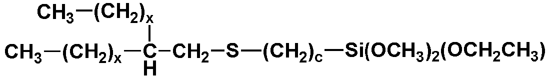 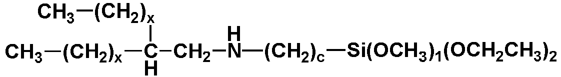 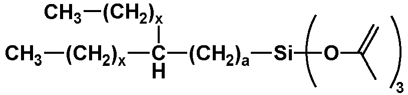 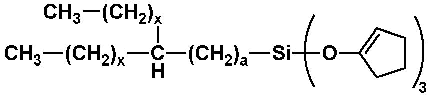 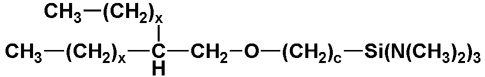 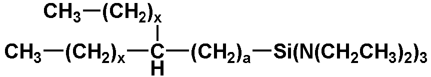 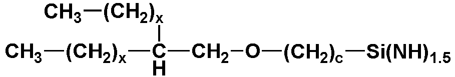 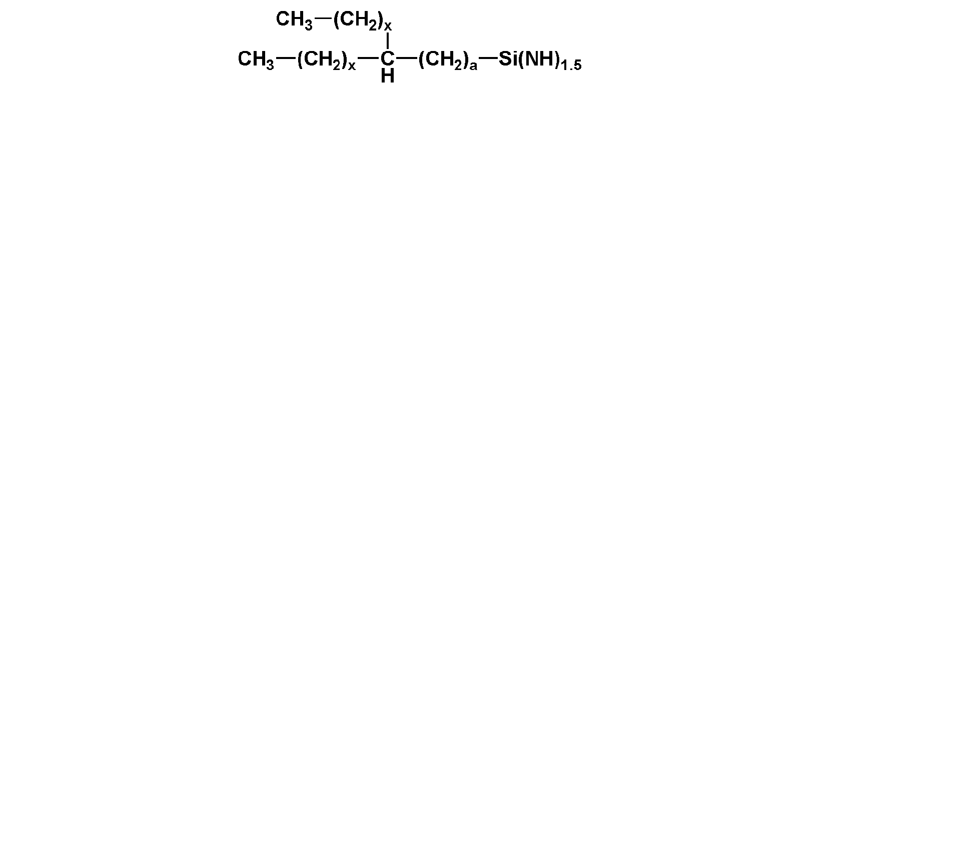 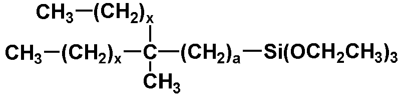 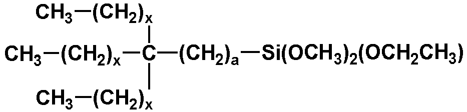 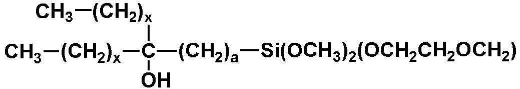 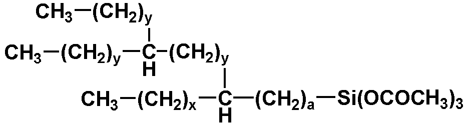 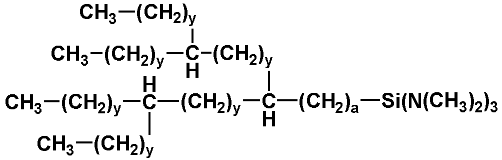 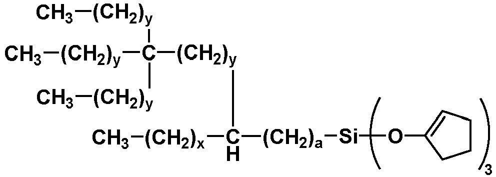 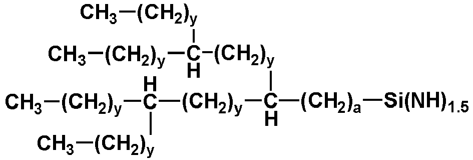 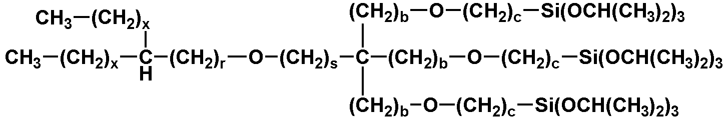 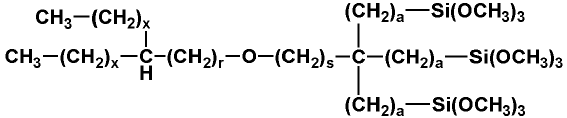 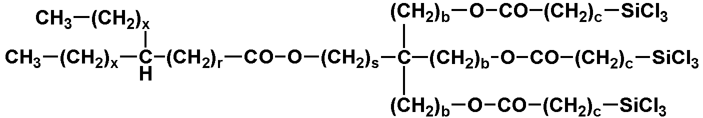 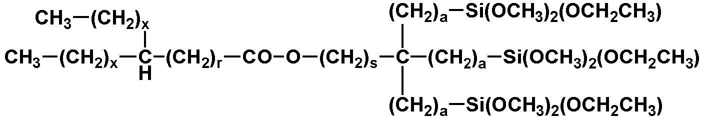 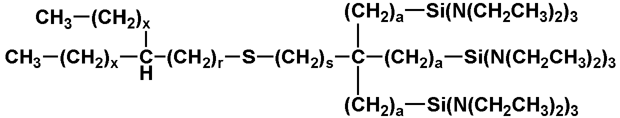 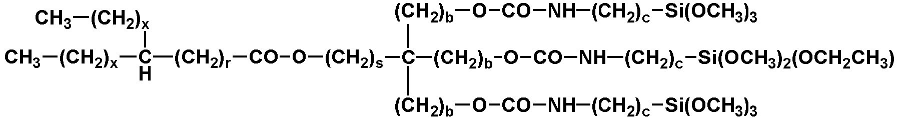 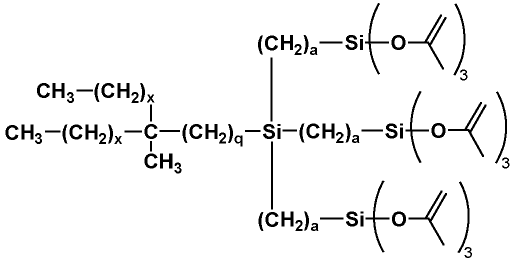 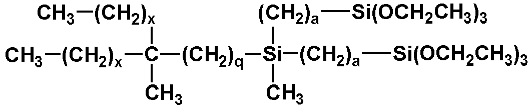 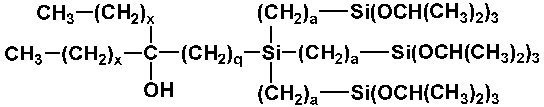 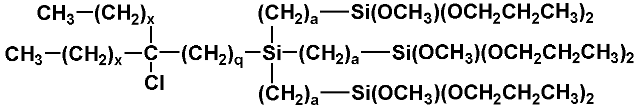 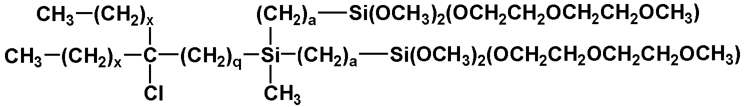 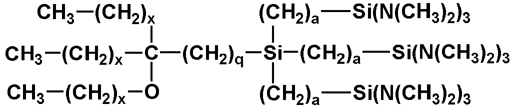 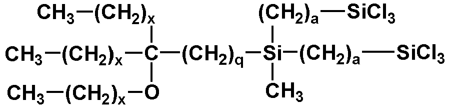 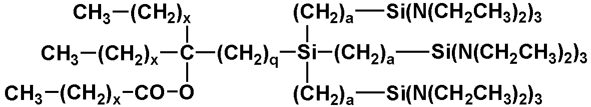 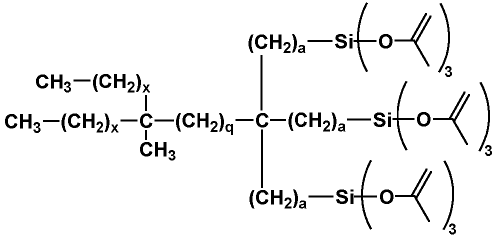 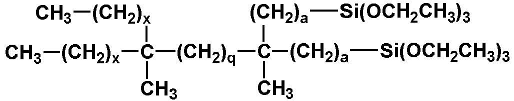 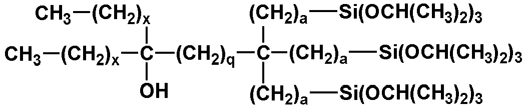 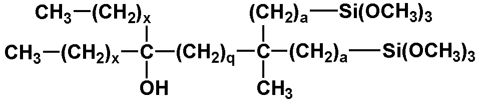 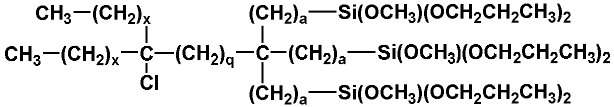 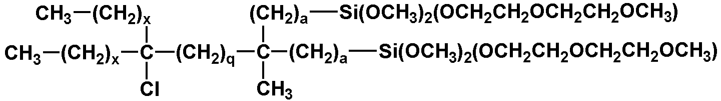 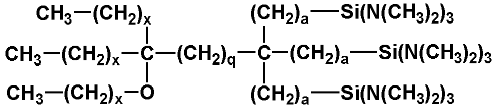 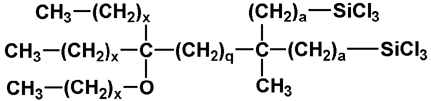 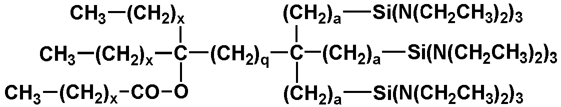 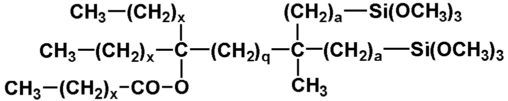 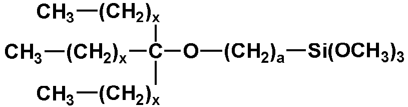 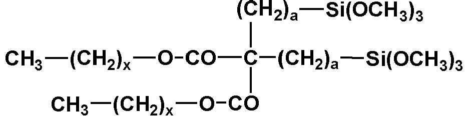 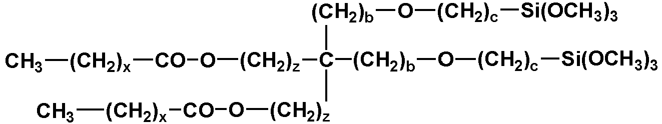 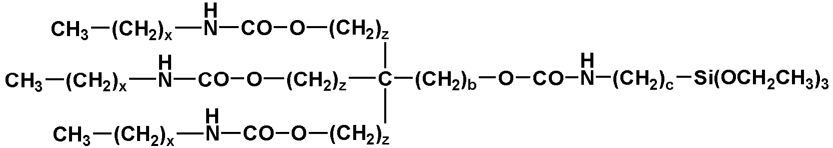 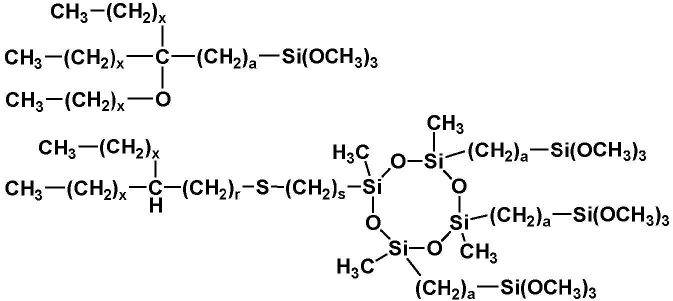 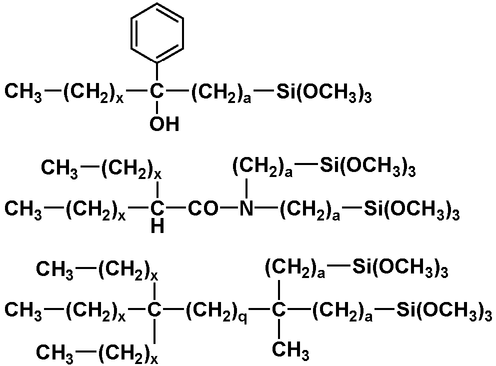 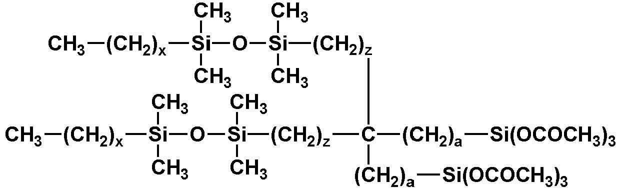 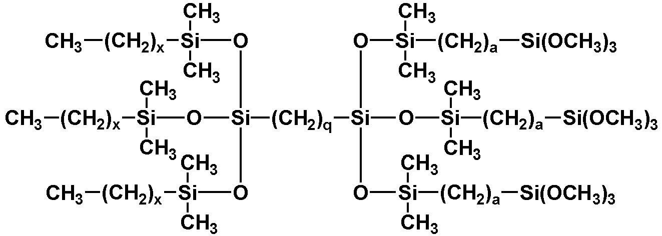 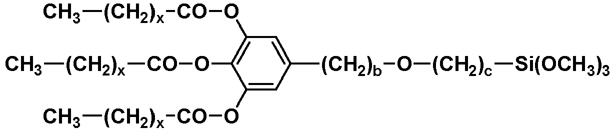 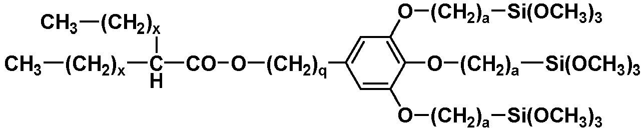 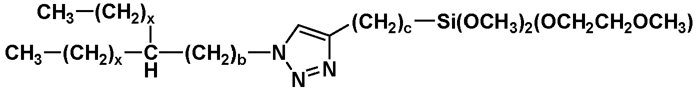 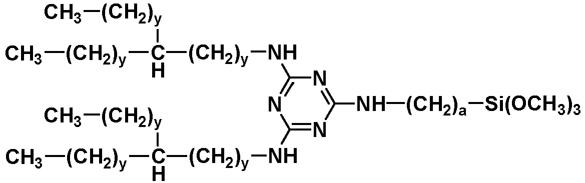 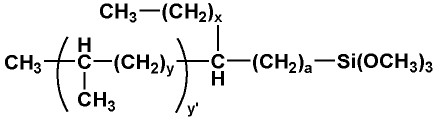 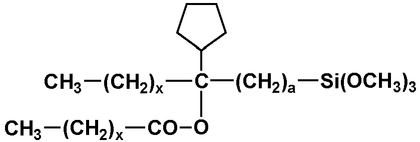 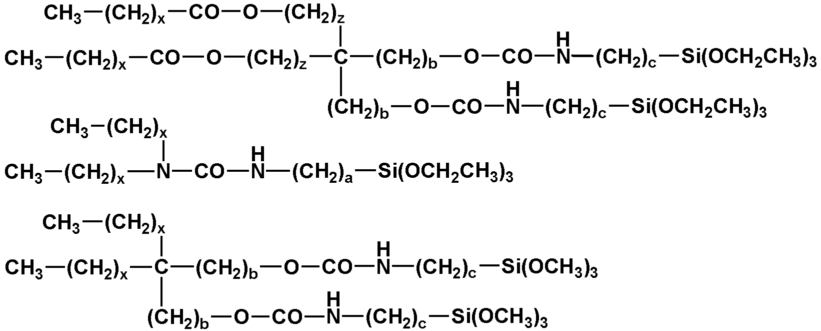 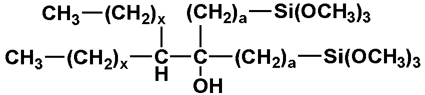 (In the formulae, x, y, y', z, q, r, s, a, b, c, d, e, and f each independently have the same definition as described above.)

Further, the cured coating film formed of the surface treatment agent composition containing a hydrocarbon terminal-containing compound represented by formula (1) has chemical resistance. Among the examples, a compound represented by general formula (4) is a compound having particularly excellent chemical resistance. 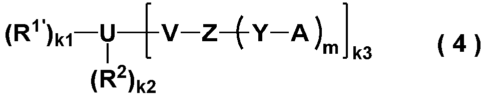 (In the formula, R¹' independently at each occurrence is a monovalent hydrocarbon group having 13 to 32 carbon atoms, which may be linear, branched, or cyclic or a combination thereof, R² is a hydrogen atom, a halogen atom, a hydroxyl group, a siloxy group, an amino group, a thiol group, or a monovalent hydrocarbon group having 1 or 2 carbon atoms, U is a carbon atom, a silicon atom, a nitrogen atom, or a tri- or tetravalent organic group, V independently at each occurrence is a single bond or a divalent hydrocarbon group which may have at least one selected from an oxygen atom, a nitrogen atom, and a sulfur atom, Z independently at each occurrence is a single bond, a carbon atom, a silicon atom, a nitrogen atom, a sulfur atom, or a tri- to octavalent organic group, Y independently at each occurrence is a divalent hydrocarbon group which may have at least one selected from an oxygen atom, a nitrogen atom, a sulfur atom, and a silicon atom, A independently at each occurrence is a monovalent reactive silyl group, k1 is 2 or 3, k2 is 0 or 1, k3 is 1 or 2, k1 + k2 + k3 is 3 or 4, and m is an integer of 1 to 7.)

In formula (4), R¹' independently at each occurrence is a monovalent hydrocarbon group having 13 to 32 carbon atoms and preferably 15 to 28 carbon atoms, which may be a linear, branched, or cyclic or a combination thereof. When R¹' has 13 or more carbon atoms, an effect of preventing penetration of chemicals into adhesive portions of a base material is exhibited, and thus chemical resistance is improved. Further, R¹' does not have a structure having one or more kinds of an oxygen atom, a sulfur atom, a nitrogen atom, and a silicon atom (particularly, an ester or urea structure), and thus the effect of preventing penetration of chemicals is further exhibited, and the chemical resistance is improved.

R¹, R², U, V, Z, A, k1, k2, k3, k1 + k2 + k3, and m in formula (4) each have the same definition as that for R¹, R², U, V, Z, A, k1, k2, k3, k1 + k2 + k3, and m in formula (1).

Examples of a method of preparing a compound represented by general formula (1) include the following method.

### [Preparation method 1]

A compound represented by formula (1) can be produced by mixing a hydrocarbon terminal group-containing compound containing an alkenyl group at a terminal with a compound containing a SiH group and a hydrolyzable silyl group and carrying out a hydrosilylation addition reaction in the presence of a hydrosilylation reaction catalyst. Further, in a case where a compound in which a hydrolyzable group is a halogen group is used as the compound containing a SiH group and a hydrolyzable silyl group, the compound represented by formula (1) can be produced by subsequently converting the substituent (halogen atom) on the silyl group into another hydrolyzable group.

Here, examples of the hydrocarbon terminal group-containing compound containing an alkenyl group at a terminal include a compound represented by formula (1A). 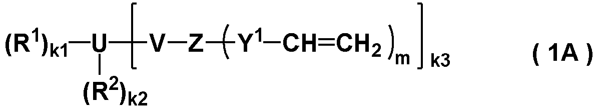 (In the formula, R¹, R², U, V, Z, k1, k2, k3, k1 + k2 + k3, and m each have the same definition as described above. Y¹ independently at each occurrence is a divalent hydrocarbon group preferably having 1 to 18 carbon atoms which may have at least one selected from an oxygen atom, a nitrogen atom, a sulfur atom, and a silicon atom.)

In formula (1A), Y¹ independently at each occurrence is a divalent hydrocarbon group preferably having 1 to 18 carbon atoms which may have at least one selected from an oxygen atom, a nitrogen atom, a sulfur atom, and a silicon atom, and examples thereof include the following groups. Further, in the following structures, the bonding site on the right side is bonded to Z, and the bonding site on the right side is bonded to carbon atom. 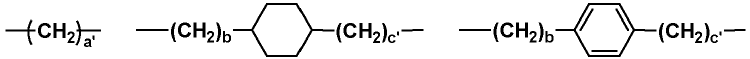 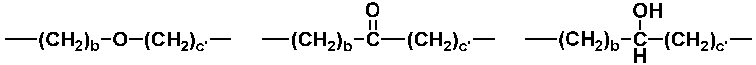 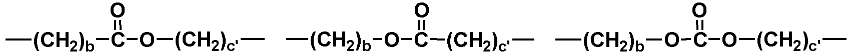 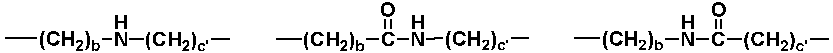 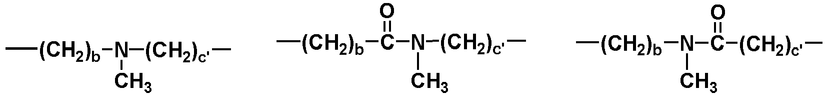 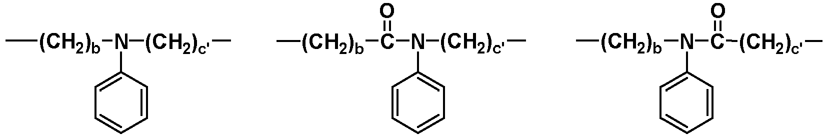 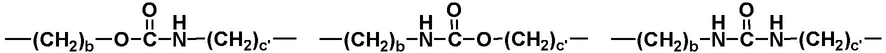 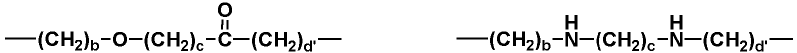 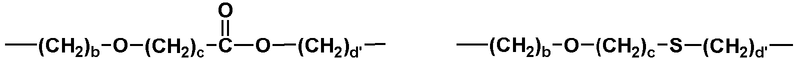 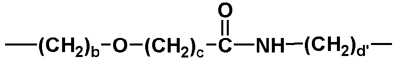 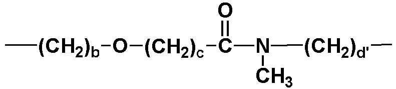 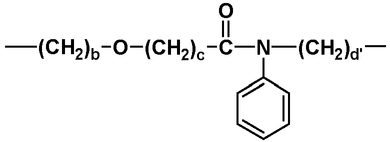 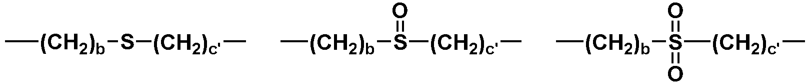 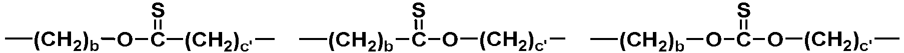 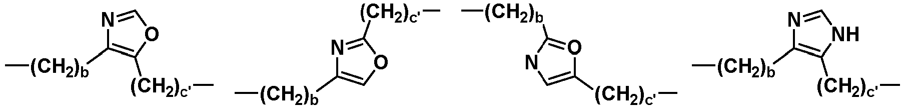 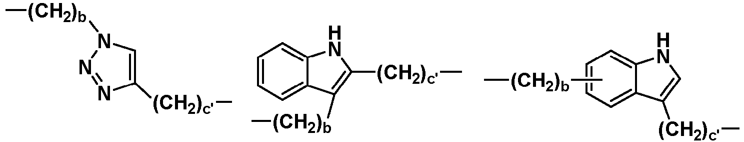 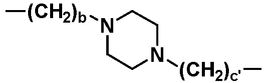 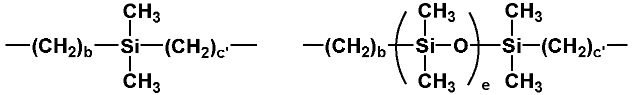 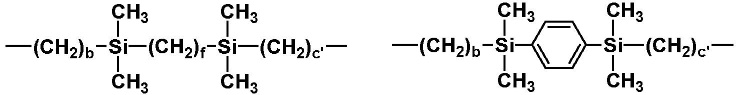 (In the formulae, a' independently at each occurrence is an integer of 0 to 8, b and c are each an integer of 1 to 8, c' and d' are each an integer of 0 to 6, the total value of b and c' is an integer of 2 to 8, and the total value of b, c, and d' is an integer of 3 to 8. e is an integer of 1 to 9, and f is an integer of 2 to 4.)

Examples of the compound represented by formula (1A) include the following compounds. 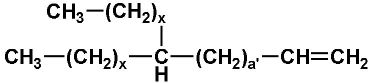 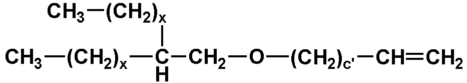 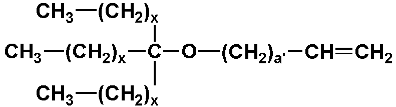 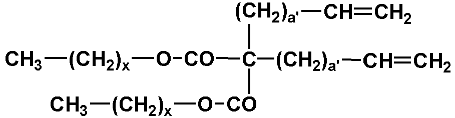 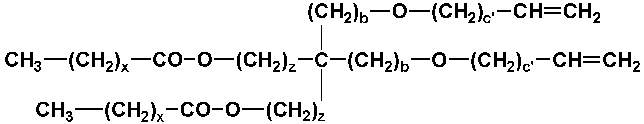 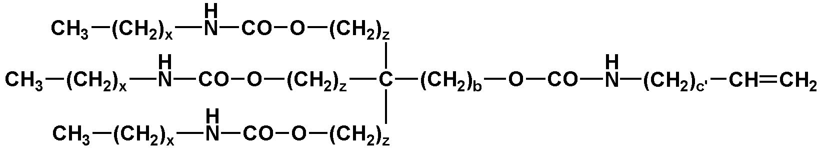 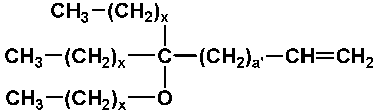 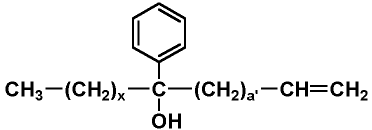 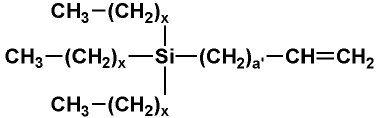 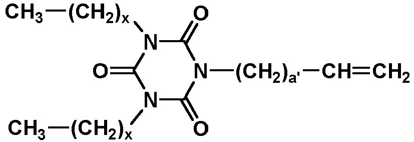 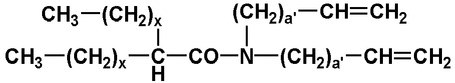 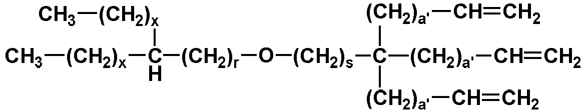 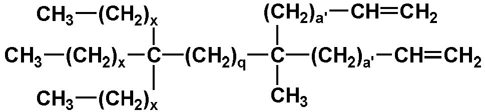 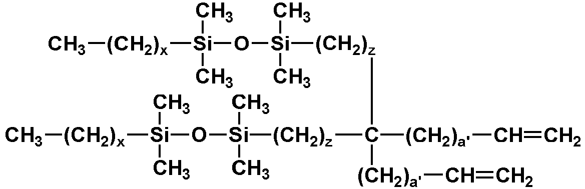 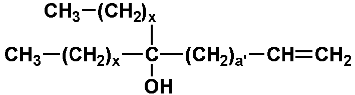 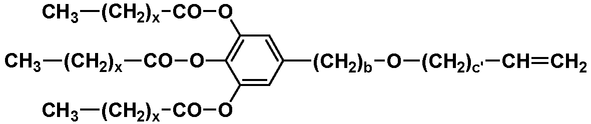 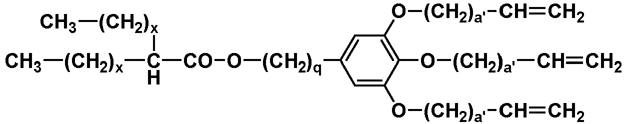 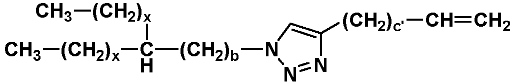 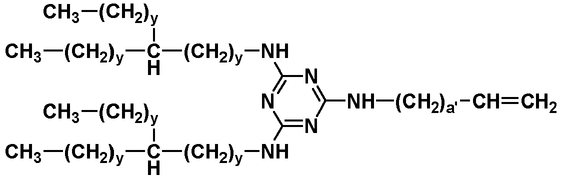 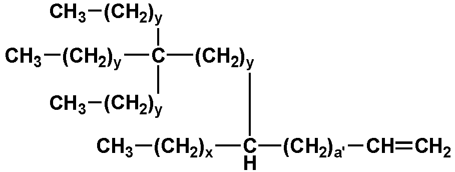 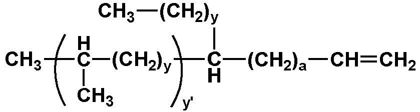 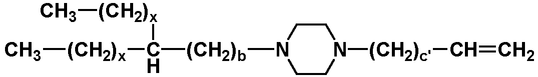 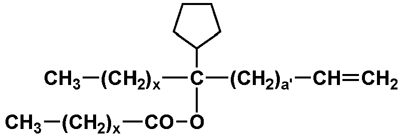 (In the formulae, x, y, y', z, q, a, a', b, c, and c' each independently have the same definition as described above.)

Examples of the compound containing a SiH group and a hydrolyzable silyl group include trimethoxysilane, triethoxysilane, triacetoxysilane, and trichlorosilane.

In the preparation method 1, the amount of the compound containing a SiH group and a hydrolyzable silyl group to be used is in a range of 1 to 6 moles and particularly preferably in a range of 1.5 to 4 moles with respect to 1 mole of the alkenyl group in the hydrocarbon terminal group-containing compound containing an alkenyl group at a terminal.

In the preparation method 1, examples of the hydrosilylation reaction catalyst include platinum black, chloroplatinic acid, an alcohol-modified product of chloroplatinic acid, complexes of chloroplatinic acid with olefins, aldehydes, vinylsiloxanes, acetylene alcohols, and the like, and platinum group metal-based catalysts such as tetrakis(triphenylphosphine)palladium and chlorotris(triphenylphosphine)rhodium. A platinum-based compound such as a vinylsiloxane coordination compound is preferable. Further, it is preferable that the platinum-based compound be dissolved in a solvent such as toluene, a lower alcohol, a higher alcohol, or a silicone-based solvent and used.

The amount of the hydrosilylation reaction catalyst to be used is in a range of 0.001 to 1000 ppm and preferably in a range of 0.01 to 100 ppm in terms of transition metal (weight) with respect to the weight of the hydrocarbon terminal group-containing compound containing an alkenyl group at a terminal.

In the preparation method 1, a solvent can be used in a case of carrying out the reaction. Examples of the solvent include an aromatic hydrocarbon such as toluene or xylene, an aliphatic or alicyclic hydrocarbon such as n-pentane, n-hexane, or cyclohexane, a cyclic ether compound such as tetrahydrofuran or dioxane, and ketones such as acetone, and methyl ethyl ketone.

The amount of the solvent to be used is in a range of 0 to 1000 parts by weight and preferably in a range of 50 to 200 parts by weight with respect to 100 parts by weight of the hydrocarbon terminal group-containing compound containing an alkenyl group at a terminal.

In the preparation method 1, the hydrocarbon terminal group-containing compound containing an alkenyl group at a terminal reacts with the compound containing a SiH group and a hydrolyzable silyl group under conditions of a temperature of 20°C to 120°C and particularly preferably 60°C to 100°C for 0.5 to 72 hours and particularly preferably 1 to 36 hours.

Further, in the preparation method 1, in a case where a compound in which the hydrolyzable group such as trichlorosilane is a halogen group (compound containing a SiH group and a halogenated silyl group) is used as the compound containing a SiH group and a hydrolyzable silyl group, the substituent (halogen atom) on the silyl group is subsequently converted into, for example, an alkoxy group such as a methoxy group as another hydrolyzable group. Examples of the compound that can be used in a case of converting the substituent (halogen atom) on the silyl group into another hydrolyzable group include methanol, ethanol, isopropanol, ethylene glycol monomethyl ether, and trimethyl orthoformate.

The amount of the compound to be used is in a range of 3 to 9 moles and particularly preferably in a range of 3 to 5 moles with respect to 1 mole of the halogen atom in the reactant between the hydrocarbon terminal group-containing compound containing an alkenyl group at a terminal and the compound containing a SiH group and a halogenated silyl group.

In the preparation method 1, the reaction in a case of converting the substituent (halogen atom) on the silyl group into another hydrolyzable group is carried out under conditions of a temperature of 0°C to 80°C and particularly preferably 20°C to 60°C for 0.5 to 72 hours and particularly preferably 1 to 36 hours.

Other examples of the method of preparing a compound represented by general formula (1) also include the following method.

### [Preparation method 2]

A compound represented by formula (1) can be produced by mixing a hydrocarbon terminal group-containing compound containing a SiH group at a terminal with a compound containing reactive groups such as an alkenyl group and a hydrolyzable silyl group and carrying out a hydrosilylation addition reaction in the presence of a hydrosilylation reaction catalyst.

Here, examples of the hydrocarbon terminal group-containing compound containing a SiH group at a terminal include a compound represented by formula (1B) or (1C). 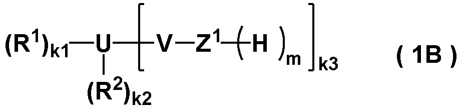 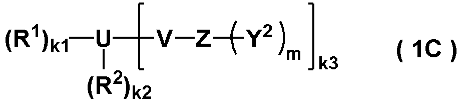 (In the formulae, R¹, R², U, V, Z, k1, k2, k3, k1 + k2 + k3, and m each have the same definition as described above. Z¹ is a linear tri- to octavalent organopolysiloxane residue having 2 to 10 silicon atoms or a branched or cyclic tri- to octavalent organopolysiloxane residue having 3 to 10 silicon atoms, and Y² independently at each occurrence is a monovalent hydrocarbon group having a silicon atom or a siloxane bond and containing a SiH group at a terminal.)

In formula (1B), Z¹ is a linear tri- to octavalent organopolysiloxane residue having 2 to 10 silicon atoms and particularly 2 to 8 silicon atoms or a branched or cyclic tri- to octavalent organopolysiloxane residue having 3 to 10 silicon atoms and particularly 3 to 8 silicon atoms, and examples thereof include the following groups. Further, in the following structures, the bonding site on the left side is bonded to V, and other bonding sites are bonded to H. 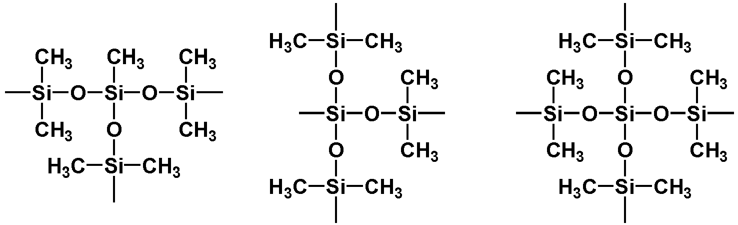 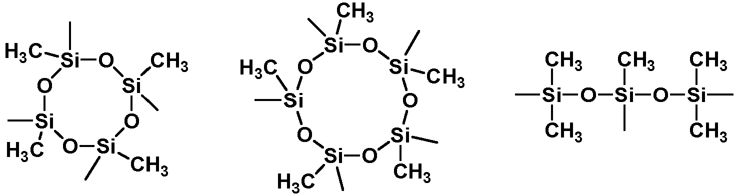 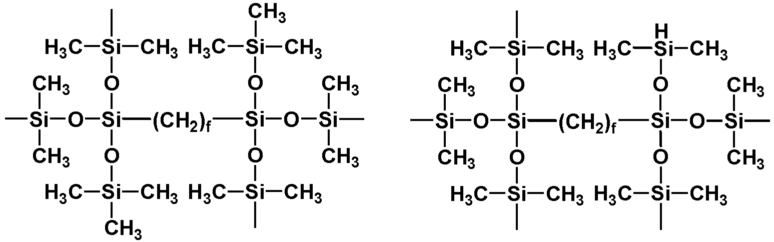 (In the formulae, f is an integer of 2 to 4.)

Examples of the compound represented by formula (1B) include the following compounds. 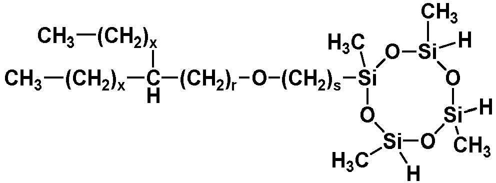 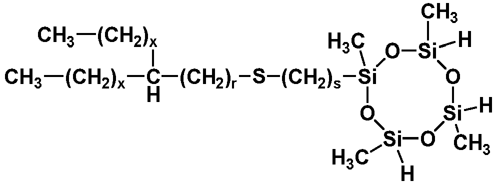 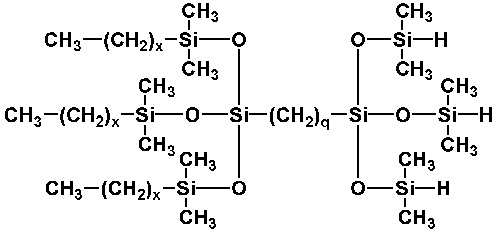 (In the formulae, x, q, r, and s each independently have the same definition as described above.)

In formula (1C), Y² independently at each occurrence is a monovalent hydrocarbon group having a silicon atom or a siloxane bond and containing a SiH group at a terminal, and examples thereof include the following groups. 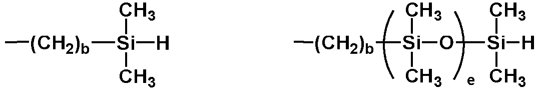 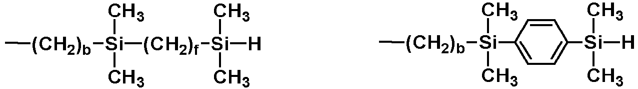 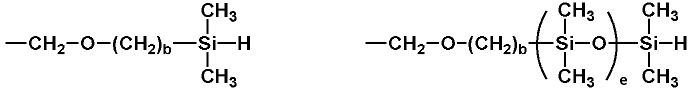 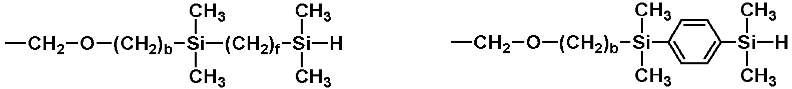 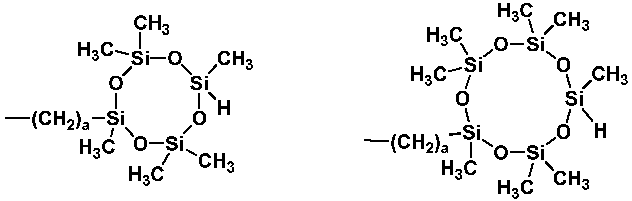 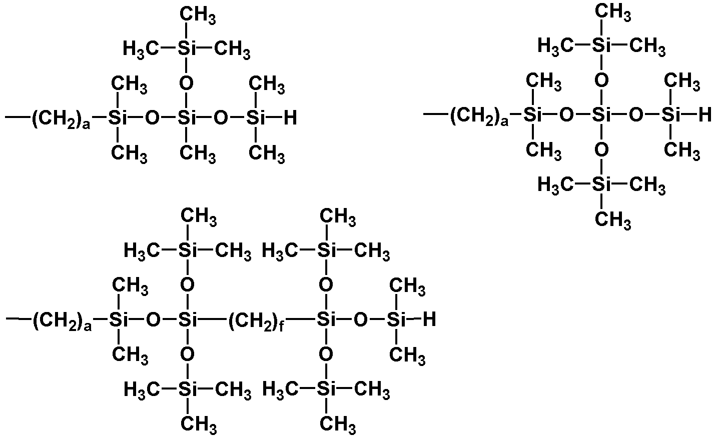 (In the formulae, a is an integer of 1 to 10, b is an integer of 1 to 8, e is an integer of 1 to 9, and f is an integer of 2 to 4.)

Examples of the compound represented by formula (1C) include the following compounds. 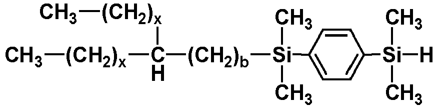 (In the formula, x and b each independently have the same definition as described above.)

In the preparation method 2, examples of the compound containing an alkenyl group and a hydrolyzable silyl group include vinyltrimethoxysilane, allyltrimethoxysilane, and octenyltrimethoxysilane.

Further, examples of the compound containing a reactive group other than the alkenyl group and the hydrolyzable silyl group include allyl glycidyl ether.

In the preparation method 2, the amount of the compound containing a reactive group such as an alkenyl group and a hydrolyzable silyl group is in a range of 1 to 5 moles and particularly preferably in a range of 1 to 3 moles with respect to 1 mole of a SiH group in the hydrocarbon terminal group-containing compound containing a SiH group at a terminal.

In the preparation method 2, examples of the hydrosilylation reaction catalyst include those for the hydrosilylation reaction catalyst in the preparation method 1. Among the examples, a platinum-based compound such as a vinylsiloxane coordination compound is preferable. Further, it is preferable that the platinum-based compound be dissolved in a solvent such as toluene, a lower alcohol, a higher alcohol, or a silicone-based solvent and used.

The amount of the hydrosilylation reaction catalyst to be used is in a range of 0.001 to 1000 ppm and preferably in a range of 0.01 to 100 ppm in terms of transition metal (weight) with respect to the weight of the hydrocarbon terminal group-containing compound containing an alkenyl group at a terminal.

In the preparation method 2, a solvent can be used in a case of carrying out the reaction. Examples of the solvent include those for the solvent in the preparation method 1.

The amount of the solvent to be used is in a range of 0 to 1000 parts by weight and preferably in a range of 50 to 200 parts by weight with respect to 100 parts by weight of the hydrocarbon terminal group-containing compound containing a SiH group at a terminal.

In the preparation method 2, the reaction is carried out under conditions of a temperature of 20°C to 120°C and particularly preferably 60°C to 100°C for 0.5 to 72 hours and particularly preferably 1 to 36 hours.

Other examples of the method of preparing a compound represented by general formula (1) also include the following method.

### [Preparation method 3]

A compound represented by formula (1) (particularly a compound containing an amino group-containing silyl group at a terminal and/or a polysilazane compound which is a polymer thereof) can be produced by mixing a hydrocarbon terminal group-containing compound containing an alkenyl group at a terminal with trichlorosilane, reacting the mixture in the presence of a hydrosilylation catalyst, and reacting the obtained compound with an ammonia gas.

Here, a reactant of the hydrocarbon terminal group-containing compound containing an alkenyl group at a terminal and the trichlorosilane can be prepared in the same manner as in the preparation method 1.

In the preparation method 3, the amount of the ammonia gas to be used is in a range of 1 to 300 cc/min and particularly preferably in a range of 30 to 200 cc/min.

In the preparation method 3, the reactant of the hydrocarbon terminal group-containing compound containing an alkenyl group at a terminal and the trichlorosilane reacts with the ammonia gas under conditions of room temperature (23°C ± 15°C) and particularly preferably at a temperature of 20°C to 30°C for 2 to 36 hours and particularly preferably 4 to 12 hours.

Other examples of the method of preparing a compound represented by general formula (1) also include the following method.

### [Preparation method 4]

A compound represented by formula (1) (particularly a compound containing a reactive silyl group at a terminal via a urethane bond) can be produced by mixing a hydrocarbon terminal group-containing compound containing a hydroxyl group at a terminal with a compound containing an isocyanate group and a reactive silyl group and reacting the mixture in the presence of a catalyst.

Here, examples of the hydrocarbon terminal group-containing compound containing a hydroxyl group at a terminal include a compound represented by formula (1D) or (1E). 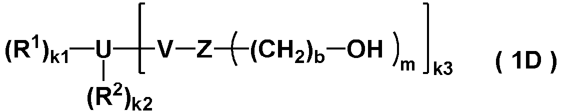 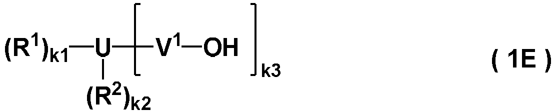 (In the formula, R¹, R², U, V, Z, k1, k2, k3, k1 + k2 + k3, m, and b each have the same definition as described above. V¹ is a divalent hydrocarbon group having 1 to 10 carbon atoms.)

Examples of the compound represented by formula (1D) include the following compounds. 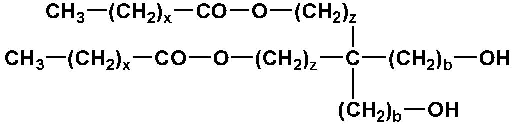 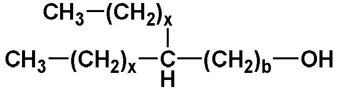 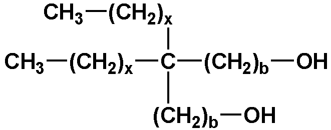 (In the formulae, x, z, and b each independently have the same definition as described above.)

In formula (1E), V¹ is a divalent hydrocarbon group having 1 to 10 carbon atoms and preferably an alkylene group, and examples thereof include the following groups. 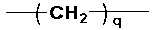 (In the formula, q has the same definition as described above.)

Examples of the compound represented by formula (1E) include the following compounds. 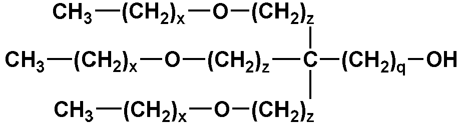 (In the formula, x, z, and q each independently have the same definition as described above.)

Examples of the compound containing an isocyanate group and a reactive silyl group include (3-isocyanatopropyl)trimethoxysilane and (3-isocyanatopropyl)trimethoxysilane.

In the preparation method 4, the amount of the compound containing an isocyanate group and a reactive silyl group to be used is in a range of 1 to 3 moles and particularly preferably in a range of 1 to 1.5 moles with respect to 1 mole of a hydroxyl group in the hydrocarbon terminal group-containing compound containing a hydroxyl group at a terminal.

In the preparation method 4, examples of the catalyst include a titanium compound such as titanium tetra-2-ethylhexoxide, tetra n-butyl titanate, or tetra n-propyl titanate, a zirconium compound such as tetra n-butyl zirconate or tetra n-propyl zirconate, a tin compound such as dibutyltin dimethoxide or dibutyltin dilaurate, a bismuth compound such as bismuth tris(2-ethylhexanoate), and an amine-based catalyst such as diazabicycloundecene.

The amount of the catalyst to be used is in a range of 0.01 to 100 parts by weight and preferably in a range of 0.1 to 20 parts by weight with respect to 100 parts by weight of the hydrocarbon terminal group-containing compound containing a hydroxyl group at a terminal.

In the preparation method 4, a solvent can be used in a case of carrying out the reaction. Examples of the solvent include those for the solvent in the preparation method 1.

The amount of the solvent to be used is in a range of 0 to 1000 parts by weight and preferably in a range of 50 to 200 parts by weight with respect to 100 parts by weight of the hydrocarbon terminal group-containing compound containing a hydroxyl group at a terminal.

In the preparation method 4, the reaction is carried out under conditions of a temperature of 20°C to 100°C and particularly preferably 30°C to 60°C for 0.5 to 72 hours and particularly preferably 1 to 36 hours.

Other examples of the method of preparing a compound represented by general formula (1) also include the following method.

### [Preparation method 5]

A compound represented by formula (1) (particularly a compound containing a reactive silyl group at a terminal via a urea bond) can be produced by mixing a hydrocarbon terminal group-containing compound containing an NH group at a terminal with a compound containing an isocyanate group and a reactive silyl group and reacting the mixture.

Here, examples of the hydrocarbon terminal group-containing compound containing an NH group at a terminal include a compound represented by formula (1F). 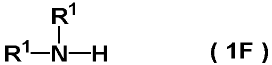 (In the formula, R¹ has the same definition as described above.)

Examples of the compound represented by formula (1F) include the following compound. 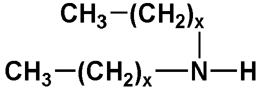 (In the formula, x independently at each occurrence has the same definition as described above.)

Examples of the compound containing an isocyanate group and a reactive silyl group include (3-isocyanatopropyl)trimethoxysilane and (3-isocyanatopropyl)triethoxysilane.

In the preparation method 5, the amount of the compound containing an isocyanate group and a reactive silyl group to be used is in a range of 1 to 3 moles and particularly preferably in a range of 1 to 1.5 moles with respect to 1 mole of the hydrocarbon terminal group-containing compound containing an NH group at a terminal.

In the preparation method 5, a solvent can be used in a case of carrying out the reaction. Examples of the solvent include those for the solvent in the preparation method 1.

The amount of the solvent to be used is in a range of 0 to 1000 parts by weight and preferably in a range of 50 to 200 parts by weight with respect to 100 parts by weight of the hydrocarbon terminal group-containing compound containing an NH group at a terminal.

In the preparation method 5, the reaction is carried out under conditions of a temperature of 0°C to 100°C and particularly preferably 20°C to 60°C for 0.5 to 72 hours and particularly preferably 1 to 36 hours.

It is preferable that the compound represented by general formula (1) which is obtained by the reaction as described above be subjected to a purification and isolation operation such as concentration, column purification, distillation, extraction, or the like. Further, in a case where the reaction solution satisfies the conditions of the solvent serving as a second essential component, the reaction solution can be used as it is as a mixture containing the compound represented by general formula (1).

Further, the surface treatment agent composition of the present invention may contain a partial reaction condensate (for example, a partial (hydrolysis) condensate obtained by condensing a hydroxyl group of the compound represented by formula (1) or a hydroxyl group obtained by partially hydrolyzing a hydrolyzable group of the compound represented by formula (1) in advance by a known method) obtained by performing partial reaction condensation on the reactive silyl group of the organosilane compound (α).

In addition, "partial (hydrolysis) condensate" in the present invention is a partial condensate or a partial hydrolysis condensate.

The solvent serving as a second essential component in the surface treatment agent composition of the present invention is selected from an alcohol-based solvent, an ether-based solvent, a ketone-based solvent, an ester-based solvent, a carbonate-based solvent, a siloxane-based solvent, and a hydrocarbon-based solvent. In a case where the solvent is selected from these solvents, since the handleability is excellent, the solubility of the organosilane compound (α) and/or the partial reaction condensate is satisfactory, and precipitation is difficult to occur, the surface treatment agent composition can maintain the performance after long-term storage.

Examples of such a solvent include an alcohol-based solvent (such as propylene glycol monomethyl ether, butanol, or isopropanol), an ether-based solvent (such as tetrahydrofuran (THF), dipropyl ether, dibutyl ether, methyl cyclopentyl ether, methyl t-butyl ether, ethylene glycol dimethyl ether, diethylene glycol dimethyl ether, triethylene glycol dimethyl ether, or propylene glycol dimethyl ether), a ketone-based solvent (such as acetone, methyl ethyl ketone, methyl isobutyl ketone, cyclopentanone, or cyclohexanone), an ester-based solvent (such as ethyl acetate, propyl acetate, butyl acetate, pentyl acetate, or propylene glycol monomethyl ether acetate), a carbonate-based solvent (such as dimethyl carbonate, ethyl methyl carbonate, diethyl carbonate, ethylene carbonate, or propylene carbonate), a siloxane-based solvent (such as hexamethyldisiloxane, octamethyltrisiloxane, decamethyltetrasiloxane, dodecamethylpentasiloxane, octamethylcyclotetrasiloxane, decamethylcyclopentasiloxane, or dodecamethylcyclohexasiloxane), and a hydrocarbon-based solvent (such as petroleum benzine, toluene, xylene, hexane, cyclohexane, methylcyclohexane, ethylcyclohexane, heptane, octane (such as n-octane or isooctane), or nonane (such as n-nonane or isononane)).

Here, a solvent selected from an ether-based solvent, a ketone-based solvent, an ester-based solvent, a siloxane-based solvent, and a hydrocarbon-based solvent is more preferable as the solvent. In a case where the solvent is selected from these solvents, the solubility of the organosilane compound (α) and/or the partial reaction condensate thereof is more satisfactory, and the surface treatment agent composition can maintain the performance even after long-term storage under severe conditions, for example, a high-temperature and high-humidity environment.

Further, it is preferable that a solvent having a bio-based degree of 50% or greater which is measured by radiocarbon dating based on ASTM D6866 be selected and used as the solvent. In a case where the bio-based degree of the solvent is greater than or equal to the above-described range, the solvent is excellent in terms that the load on the environment is small as compared with a solvent produced by using raw materials derived from fossil fuels.

It is more preferable to use a solvent having a bio-based degree of 60% or greater and particularly preferable to use a solvent having a bio-based degree of 70% or greater. In a case where the bio-based degree of the solvent is greater than or equal to the above-described ranges, the load on the environment is further reduced.

The proportion of the organosilane compound (α) and/or the partial reaction condensate in the total amount of the organosilane compound (α) and/or the partial reaction condensate and the solvent in the surface treatment agent composition of the present invention is preferably in a range of 0.05% to 70% by weight, more preferably in a range of 0.06% to 60% by weight, and still more preferably in a range of 0.07% to 50% by weight. When the proportion thereof is in the above-described ranges, the balance between the storage stability and the handleability of the surface treatment agent composition is enhanced. In a case where proportion of the organosilane compound (α) and/or the partial reaction condensate in the total amount of the organosilane compound (α) and/or the partial reaction condensate and the solvent is less than the lower limits of the above-described ranges, even though the tendency varies depending on the kind of the organosilane compound (α) and the solvent, the surface treatment composition becomes a dilute solution, and thus hydrolysis polycondensation of the organosilane compound (α) may be caused due to a trace amount of moisture, which may result in degradation of the performance after long-term storage. In a case where proportion of the organosilane compound (α) and/or the partial reaction condensate in the total amount of the organosilane compound (α) and/or the partial reaction condensate and the solvent is greater than the upper limits of the above-described ranges, even though the tendency varies depending on the type of the organosilane compound (α) and the solvent, the surface treatment agent composition becomes a concentrated solution, and thus the dynamic viscosity increases, which may result in degradation of the handleability.

The surface treatment agent composition of the present invention is composed of materials containing no fluorine atoms. Therefore, the surface treatment agent composition of the present invention has low decomposition resistance and low accumulation properties in nature as compared with fluorine-based surface treatment agent composition of the related art.

It is more preferable that the surface treatment agent composition of the present invention further contain at least one silane compound represented by general formula (5).

SiR⁵ₙ₋₄X¹ₙ (5)

(In the formula, R⁵ independently at each occurrence is a hydrogen atom or a monovalent hydrocarbon group having 1 or 2 carbon atoms, X¹ independently at each occurrence is a hydroxyl group or a hydrolyzable group, and n is an integer of 1 to 4.)

The surface treatment agent composition of the present invention contains a silane compound represented by general formula (5), the silane compound represented by general formula (5) acts as a dehydrating agent that captures the moisture in the surface treatment agent composition, and thus the surface treatment agent composition can maintain the performance even after long-term storage.

In formula (5), R⁵ independently at each occurrence is a hydrogen atom or a monovalent hydrocarbon group having 1 or 2 carbon atoms, and examples of the monovalent hydrocarbon group having 1 or 2 carbon atoms include an alkyl group such as a methyl group or an ethyl group, and an alkenyl group such as a vinyl group. Among these, it is preferable that R⁵ be a methyl group or a vinyl group.

In formula (5), X¹ independently at each occurrence is a hydroxyl group or a hydrolyzable group. Examples of such X¹ include a hydroxyl group, an alkoxy group having 1 to 10 carbon atoms such as a methoxy group, an ethoxy group, a propoxy group, an isopropoxy group, or a butoxy group, an alkoxy-substituted alkoxy group having 2 to 10 carbon atoms such as a methoxymethoxy group or a methoxyethoxy group, an acyloxy group having 1 to 10 carbon atoms such as an acetoxy group, an alkenyloxy group having 2 to 10 carbon atoms such as an isopropenoxy group or a cyclopentenyloxy group, a halogen group such as a chloro group, a bromo group, or an iodo group, and a dialkylamino group having 2 to 10 carbon atoms such as a dimethylamino group or a diethylamino group. Among these, a methoxy group, an ethoxy group, an isopropenoxy group, or a chloro group is suitable. X¹'s may be the same as or different from each other.

In formula (5), n is an integer of 1 to 4 and preferably 3 or 4.

As the silane compound represented by general formula (5), the following compounds are particularly preferable.

Si(OCH₃)₄, Si(OC₂H₅)₄, Si(OC₃H₇)₄, Si(OC₄H₉)₄, CH₂=CHSi(OCH₃)₃, CH₂=CHSi(OC₂H₅)₃, CH₂=CHSi(OC₃H₇)₃, CH₂=CHSi(OC₄H₉)₃, CH₂=CHSi(OCOCH₃)₃, CH₃Si(OCH₃)₃, CH₃Si(OC₂H₅)₃, CH₃Si(OC₃H₇)₃, CH₃Si(OC₄H₉)₃, and CH₃Si(OCOCH₃)₃

The content of the silane compound represented by formula (5) in the surface treatment agent composition of the present invention is preferably in a range of 0.001 to 10 parts by weight, more preferably in a range of 0.005 to 9 parts by weight, and still more preferably in a range of 0.01 to 8 parts by weight with respect to 100 parts by mass of the total amount of the organosilane compound (α) and/or the partial reaction condensate, and the solvent. In a case where the content of the silane compound represented by formula (5) is less than the lower limits of the above-described ranges, the amount of moisture in the surface treatment agent composition that can be captured by the silane compound represented by formula (5) is limited to a small amount, and thus the silane compound cannot sufficiently act as a dehydrating agent, which may result in degradation of the performance after long-term storage. In a case where the content of the silane compound represented by formula (5) is greater than the upper limits of the above-described ranges, the water repellency and the abrasion resistance of the cured coating film to be obtained from the surface treatment agent composition may be degraded.

The surface treatment agent composition of the present invention may further contain, within a range where the present invention is not impaired, one or more non-fluorine-based materials selected from a paraffin compound (hereinafter, referred to as paraffin oil) that is non-reactive to the organosilane compound (α), a polyol ester compound (hereinafter, referred to as polyol ester oil) that is non-reactive to the organosilane compound (α), a silicone compound (hereinafter, referred to as silicone oil) that is non-reactive to the organosilane compound (α), a catalyst, a transition metal, a halide ion, a silane coupling agent, and a compound that contains an ion having an unshared electron pair in a molecular structure.

Examples of the paraffin oil include linear, branched, or cyclic paraffin oil having 2000 or less carbon atoms. Specific examples of the paraffin oil include liquid paraffin, paraffin wax, polyethylene, polypropylene, and polyalphaolefin (PAO). Paraffin oil in a liquid state at room temperature (25°C) is preferable, but paraffin oil in a solid state at room temperature can also be used.

In a case where the paraffin oil is blended into the surface treatment agent composition of the present invention, the content thereof is preferably in a range of 0.001 to 80 parts by weight with respect to 100 parts by weight of the total amount of the organosilane compound (α) and/or the partial reaction condensate thereof and the solvent.

Examples of the polyol ester oil include a polyol ester compound formed of a condensate of a di- to hexahydric alcohol and a fatty acid having 3 to 22 carbon atoms. Specific examples of the polyol ester compound include neopentyl glycol di(2-ethylhexanoate), neopentyl glycol di(oleate), neopentyl glycol di(stearate), trimethylolethane tri(2-ethylhexanoate), trimethylolethane tri(oleate), trimethylolethane tri(stearate), trimethylolpropane tri(2-ethylhexanoate), trimethylolpropane tri(oleate), trimethylolpropane tri(stearate), glycerol tri(2-ethylhexanoate), glycerol tri(oleate), glycerol tri(stearate), pentaerythritol tetra(2-ethylhexanoate), pentaerythritol tetra(oleate), pentaerythritol tetra(stearate), dipentaerythritol hexa(2-ethylhexanoate), dipentaerythritol hexa(oleate), and dipentaerythritol hexa(stearate). Polyol ester oil in a liquid state at room temperature (25°C) is preferable, but polyol ester oil in a solid state at room temperature can also be used.

In a case where the polyol ester oil is blended into the surface treatment agent composition of the present invention, the content thereof is preferably in a range of 0.001 to 80 parts by weight with respect to 100 parts by weight of the total amount of the organosilane compound (α) and/or the partial reaction condensate thereof and the solvent.

Examples of the silicone oil include linear, branched, or cyclic silicone oil having 2000 or less siloxane bonds. The linear silicone oil may be so-called straight silicone oil or modified silicone oil. Examples of the straight silicone oil include dimethyl silicone oil, methyl phenyl silicone oil, and methyl hydrogen silicone oil. Examples of the modified silicone oil include silicone oil obtained by modifying straight silicone oil with an alkyl, an aralkyl, a polyether, a higher fatty acid ester, a fluoroalkyl, an amino, an epoxy, a carboxyl, or an alcohol. Examples of the cyclic silicone oil include cyclic dimethylsiloxane oil. Silicone oil in a liquid state at room temperature (25°C) is preferable, but silicone oil in a solid state at room temperature can also be used.

In a case where the silicone oil is blended into the surface treatment agent composition of the present invention, the content thereof is preferably in a range of 0.001 to 80 parts by weight with respect to 100 parts by weight of the total amount of the organosilane compound (α) and/or the partial reaction condensate thereof and the solvent.

Examples of the catalyst include an organic acid (such as acetic acid or methanesulfonic acid), an inorganic acid (such as hydrochloric acid, sulfuric acid, or phosphoric acid), an organic base (such as ammonia, triethylamine, or diethylamine), an inorganic base (such as sodium hydroxide, potassium hydroxide, or calcium hydroxide), an organic tin compound (such as dibutyltin dimethoxide or dibutyltin dilaurate), and an organic titanium compound (such as tetra-n-butyl titanate). The catalyst can promote the hydrolysis polycondensation reaction of the organosilane compound (α) and can also promote the formation of a cured coating film.

Since the surface treatment agent composition of the present invention can form a cured coating film with excellent water repellency and abrasion resistance, such properties can be imparted to the base material, and thus the surface treatment agent composition is suitably used. Specifically, the surface treatment agent composition of the present invention can be used as an antifouling coating agent or a waterproof coating agent.

A base material treated with the surface treatment agent composition of the present invention is not particularly limited, and any of various materials such as paper, cloth, metals and oxides thereof, glass, plastics, ceramics, and quartz. Particularly, glass or a film, treated with SiO₂, is preferable.

The surface treatment agent composition of the present invention can be applied to the base material by a known method such as dry coating (vacuum deposition or the like), wet coating (spray coating, dip coating, spin coating, wipe coating, squeegee coating, die coating, ink jet coating, flow coating, roll coating, cast coating, Langmuir-Blodgett coating, or gravure coating).

Further, a heating method during drying coating and particularly during a vacuum deposition treatment is not particularly limited, and may be any of a resistance heating method or an electron beam heating method.

In vacuum deposition, the surface treatment agent composition is typically handled in a state where a porous parent material is impregnated with the surface treatment agent composition, and is disposed on a resistance heating boat or an electron beam heating boat. The porous parent material impregnated with the surface treatment agent composition is referred to as pellets (or tablets). The pellets are heated with the surface treatment agent composition, and thus a substance that is unlikely to be volatilized or melted when heated and has a high boiling point or melting point is desirable as the pellets, and preferred examples thereof include metals and ceramics. The pellets can be obtained by impregnating a porous parent material, for example, a porous ceramic material or a porous metal material (such as a sintered body of a metal fiber, a sintered body of a metal powder, a material obtained by solidifying metal fibers into a lump (a material obtained by solidifying metal wool into a lump or the like), or a metal sponge) with the surface treatment agent composition of the present invention. The pellets can be used for vacuum deposition. In a case where the surface treatment agent composition is formed into pellets, since the pellets can be easily handled, the productivity in the coating process can be improved, and thus the variation in time taken until completion of vacuum deposition can be reduced.

The pellets are handled in a state of being stored in a metallic or ceramic storage member. The shape of the storage member may be circular or polygonal, such as triangular or rectangular. Further, the storage member is heated with the pellets and the surface treatment agent composition, and thus a substance that is unlikely to be volatilized or melted when heated and has a high boiling point or melting point is desirable as the storage member, and preferred examples thereof include metals and ceramics.

The conditions for curing the surface treatment agent composition of the present invention differ depending on the curing method, but the surface treatment agent composition is cured, for example, at a temperature of 25°C to 200°C and particularly preferably 25°C to 150°C for 15 minutes to 36 hours and particularly preferably 30 minutes to 24 hours. Further, the composition may be cured in a humid condition.

The film thickness of the cured coating film is appropriately selected according to the type of the base material, but is typically in a range of 0.1 to 100 nm and particularly in a range of 1 to 20 nm. Further, the film thickness can be measured, for example, by a method such as a spectroscopic reflectance measuring method, an X-ray reflectance measuring method, a spectroscopic ellipsometry measuring method, or an X-ray fluorescence measuring method.

Examples of an article treated with the surface treatment agent composition of the present invention include car navigation systems, mobile phones, smartphones, digital cameras, digital video cameras, PDAs, portable audio players, car audios, game machines, eyeglass lenses, camera lenses, lens filters, sunglasses, medical devices such as gastroscopes, copiers, PCs, and optical members such as liquid crystal displays, organic EL displays, plasma displays, touch panel displays, protective films, and antireflection films.

Further, the surface treatment agent composition of the present invention is also useful as an antifouling coating for sanitary products such as bathtubs and wash stands, an antifouling coating for window glass or tempered glass of automobiles, trains, aircrafts, and the like, and headlamp covers, a water-repellent coating for building materials for an outer wall, a coating for preventing stains of building materials for a kitchen, an antifouling coating and a coating for preventing pasting posters and scribbles for telephone booths, a coating for preventing adhesion of stains to works of art, a coating for preventing adhesion of stains to compact discs, DVDs, and the like, a release agent for molds, a flowability modifier or dispersibility modifier for inorganic fillers, and a lubricity improver for tapes, films, and the like.

The surface treatment agent composition of the present invention can form a cured coating film with excellent water repellency and abrasion resistance, and thus is particularly useful as a surface treatment agent for an optical member, a lens, or a display.

### EXAMPLES

Hereinafter, the present invention will be described in more detail with reference to Synthesis Examples, Examples, and Comparative Examples, but the present invention is not limited to the following examples. Further, in the following examples, the film thickness is a value measured by a spectroscopic ellipsometry measuring method using a spectroscopic ellipsometer. Room temperature is 25°C.

### [Synthesis Example 1]

1.00 g (2.96×10⁻³ mol) of a compound represented by formula (A), 1.00 g of toluene, 1.08 g (8.87×10⁻³ mol) of trimethoxysilane, and 1.13×10⁻² g of a toluene solution (containing 3.49×10⁻⁸ mol of Pt alone) of a chloroplatinic acid/vinylsiloxane complex were mixed with each other in a reaction container, and aged at 80°C for 24 hours. Thereafter, the solvent and the unreacted material were distilled off under reduced pressure, thereby obtaining 1.30 g of a product.

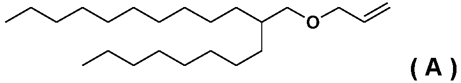

The obtained compound was confirmed to have a structure represented by formula (B) using ¹H-NMR. Further, the compound had a bio-based degree of 77%, which was measured by radiocarbon dating based on ASTM D6866.

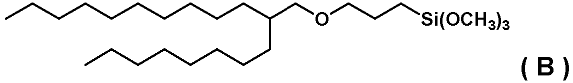

### [Synthesis Example 2]

1.00 g (3.10×10⁻³ mol) of a compound represented by formula (C), 1.00 g of toluene, 1.14 g (9.31×10⁻³ mol) of trimethoxysilane, and 1.18×10⁻² g of a toluene solution (containing 3.66×10⁻⁸ mol of Pt alone) of a chloroplatinic acid/vinylsiloxane complex were mixed with each other in a reaction container, and aged at 80°C for 24 hours. Thereafter, the solvent and the unreacted material were distilled off under reduced pressure, thereby obtaining 1.25 g of a product.

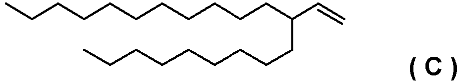

The obtained compound was confirmed to have a structure represented by formula (D) using ¹H-NMR. Further, the compound had a bio-based degree of 88%, which was measured by radiocarbon dating based on ASTM D6866.

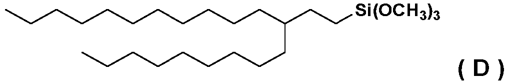

### [Synthesis Example 3]

1.00 g (1.73×10⁻³ mol) of a compound represented by formula (E), 1.00 g of toluene, 0.636 g (5.20×10⁻³ mol) of trimethoxysilane, and 6.62×10⁻³ g of a toluene solution (containing 2.05×10⁻⁸ mol of Pt alone) of a chloroplatinic acid/vinylsiloxane complex were mixed with each other in a reaction container, and aged at 80°C for 24 hours. Thereafter, the solvent and the unreacted material were distilled off under reduced pressure, thereby obtaining 1.13 g of a product.

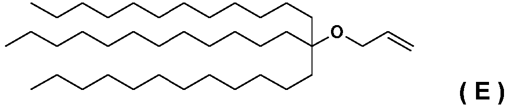

The obtained compound was confirmed to have a structure represented by formula (F) using ¹H-NMR. Further, the compound had a bio-based degree of 92%, which was measured by radiocarbon dating based on ASTM D6866.

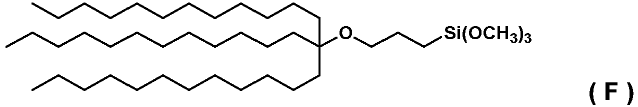

### [Synthesis Example 4]

1.00 g (1.25×10⁻³ mol) of a compound represented by formula (G), 1.00 g of toluene, 0.458 g (3.75×10⁻³ mol) of trimethoxysilane, and 4.77×10⁻³ g of a toluene solution (containing 1.47×10⁻⁸ mol of Pt alone) of a chloroplatinic acid/vinylsiloxane complex were mixed with each other in a reaction container, and aged at 80°C for 24 hours. Thereafter, the solvent and the unreacted material were distilled off under reduced pressure, thereby obtaining 1.10 g of a product.

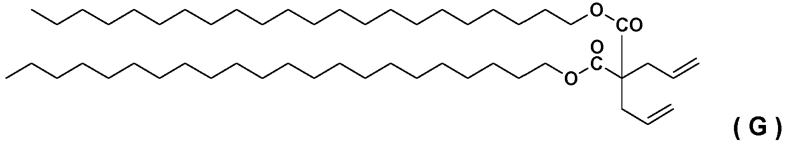

The obtained compound was confirmed to have a structure represented by formula (H) using ¹H-NMR. Further, the compound had a bio-based degree of 75%, which was measured by radiocarbon dating based on ASTM D6866.

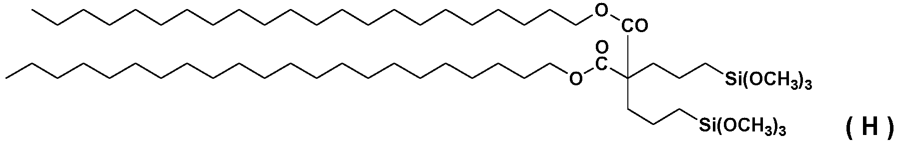

### [Synthesis Example 5]

1.00 g (1.34×10⁻³ mol) of a compound represented by formula (I), 1.00 g of toluene, 0.490 g (4.01×10⁻³ mol) of trimethoxysilane, and 5.10×10⁻³ g of a toluene solution (containing 1.58×10⁻⁸ mol of Pt alone) of a chloroplatinic acid/vinylsiloxane complex were mixed with each other in a reaction container, and aged at 80°C for 24 hours. Thereafter, the solvent and the unreacted material were distilled off under reduced pressure, thereby obtaining 1.11 g of a product.

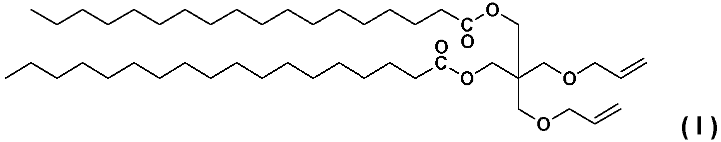

The obtained compound was confirmed to have a structure represented by formula (J) using ¹H-NMR. Further, the compound had a bio-based degree of 68%, which was measured by radiocarbon dating based on ASTM D6866.

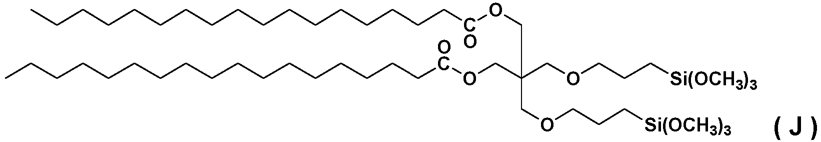

### [Synthesis Example 6]

1.00 g (1.37×10⁻³ mol) of a compound represented by formula (M), 1.00 g of toluene, 0.502 g (4.11×10⁻³ mol) of trimethoxysilane, and 5.23×10⁻³ g of a toluene solution (containing 1.62×10⁻⁸ mol of Pt alone) of a chloroplatinic acid/vinylsiloxane complex were mixed with each other in a reaction container, and aged at 80°C for 24 hours. Thereafter, the solvent and the unreacted material were distilled off under reduced pressure, thereby obtaining 1.09 g of a product.

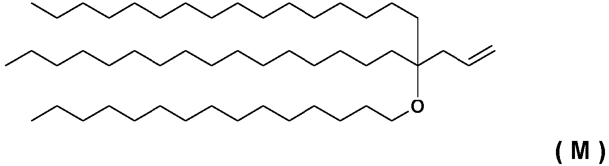

The obtained compound was confirmed to have a structure represented by formula (N) using ¹H-NMR. Further, the compound had a bio-based degree of 94%, which was measured by radiocarbon dating based on ASTM D6866.

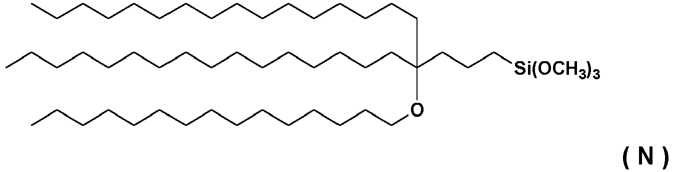

### [Synthesis Example 7]

1.00 g (1.29×10⁻³ mol) of a compound represented by formula (O), 2.00 g of toluene, 1.25 g (7.73 × 10⁻³ mol) of trimethoxysilane, and 4.92× 10⁻³ g of a toluene solution (containing 1.52×10⁻⁸ mol of Pt alone) of a chloroplatinic acid/vinylsiloxane complex were mixed with each other in a reaction container, and aged at 80°C for 24 hours. Thereafter, the solvent and the unreacted material were distilled off under reduced pressure, thereby obtaining 1.58 g of a product.

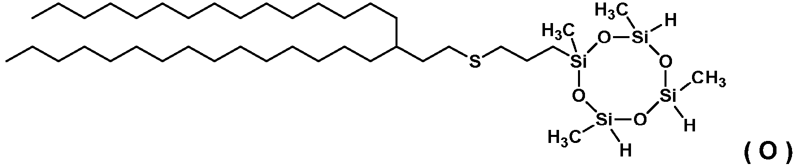

The obtained compound was confirmed to have a structure represented by formula (P) using ¹H-NMR. Further, the compound had a bio-based degree of 57%, which was measured by radiocarbon dating based on ASTM D6866.

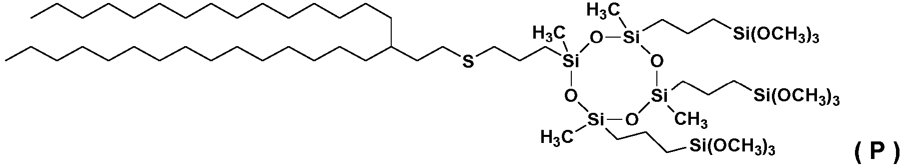

### [Synthesis Example 8]

1.00 g (2.59×10⁻³ mol) of a compound represented by formula (Q), 1.00 g of toluene, 0.949 g (7.77×10⁻³ mol) of trimethoxysilane, and 9.89×10⁻³ g of a toluene solution (containing 3.06×10⁻⁸ mol of Pt alone) of a chloroplatinic acid/vinylsiloxane complex were mixed with each other in a reaction container, and aged at 80°C for 24 hours. Thereafter, the solvent and the unreacted material were distilled off under reduced pressure, thereby obtaining 1.30 g of a product.

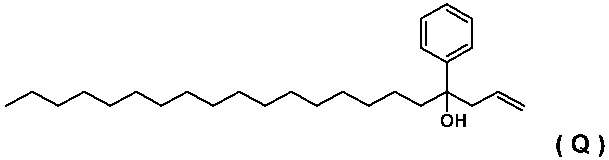

The obtained compound was confirmed to have a structure represented by formula (R) using ¹H-NMR. Further, the compound had a bio-based degree of 60%, which was measured by radiocarbon dating based on ASTM D6866.

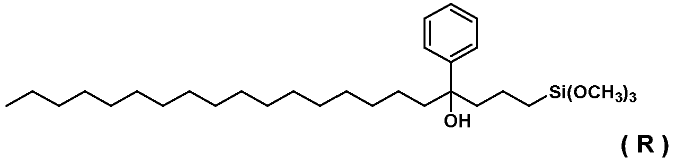

### [Synthesis Example 9]

1.00 g (1.29×10⁻³ mol) of a compound represented by formula (S), 1.00 g of toluene, 0.474 g (3.88×10⁻³ mol) of trimethoxysilane, and 4.94×10⁻³ g of a toluene solution (containing 1.53×10⁻⁸ mol of Pt alone) of a chloroplatinic acid/vinylsiloxane complex were mixed with each other in a reaction container, and aged at 80°C for 24 hours. Thereafter, the solvent and the unreacted material were distilled off under reduced pressure, thereby obtaining 1.14 g of a product.

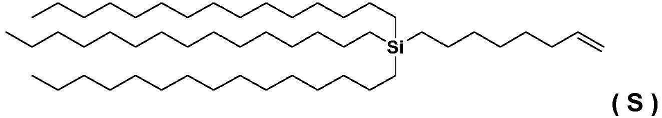

The obtained compound was confirmed to have a structure represented by formula (T) using ¹H-NMR. Further, the compound had a bio-based degree of 85%, which was measured by radiocarbon dating based on ASTM D6866.

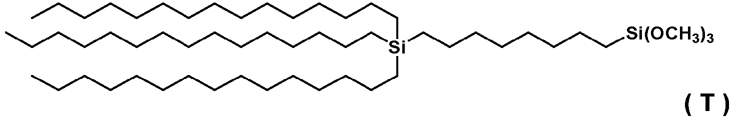

### [Synthesis Example 10]

1.00 g (1.48×10⁻³ mol) of a compound represented by formula (U), 1.00 g of toluene, 0.544 g (4.45 × 10⁻³ mol) of trimethoxysilane, and 5.67×10⁻³ g of a toluene solution (containing 1.75×10⁻⁸ mol of Pt alone) of a chloroplatinic acid/vinylsiloxane complex were mixed with each other in a reaction container, and aged at 80°C for 24 hours. Thereafter, the solvent and the unreacted material were distilled off under reduced pressure, thereby obtaining 1.12 g of a product.

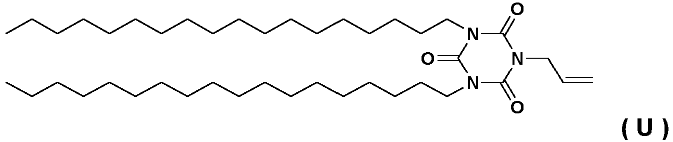

The obtained compound was confirmed to have a structure represented by formula (V) using ¹H-NMR. Further, the compound had a bio-based degree of 80%, which was measured by radiocarbon dating based on ASTM D6866.

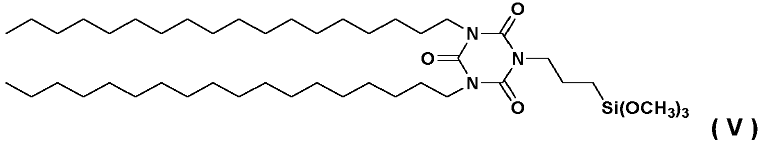

### [Synthesis Example 11]

1.00 g (1.79×10⁻³ mol) of a compound represented by formula (W), 1.00 g of toluene, 1.31 g (1.07×10⁻² mol) of trimethoxysilane, and 6.83×10⁻³ g of a toluene solution (containing 2.11×10⁻⁸ mol of Pt alone) of a chloroplatinic acid/vinylsiloxane complex were mixed with each other in a reaction container, and aged at 80°C for 24 hours. Thereafter, the solvent and the unreacted material were distilled off under reduced pressure, thereby obtaining 1.36 g of a product.

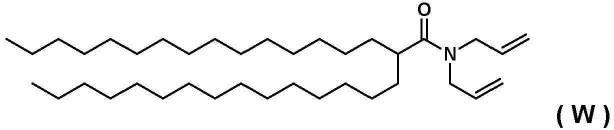

The obtained compound was confirmed to have a structure represented by formula (X) using ¹H-NMR. Further, the compound had a bio-based degree of 73%, which was measured by radiocarbon dating based on ASTM D6866.

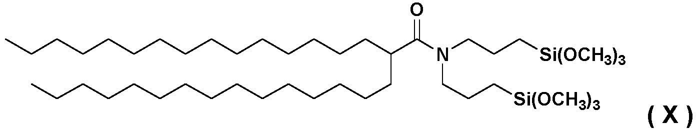

### [Synthesis Example 12]

1.00 g (1.69×10⁻³ mol) of a compound represented by formula (AG), 1.00 g of toluene, 0.621 g (5.08×10⁻³ mol) of trimethoxysilane, and 6.47×10⁻³ g of a toluene solution (containing 2.00×10⁻⁸ mol of Pt alone) of a chloroplatinic acid/vinylsiloxane complex were mixed with each other in a reaction container, and aged at 80°C for 24 hours. Thereafter, the solvent and the unreacted material were distilled off under reduced pressure, thereby obtaining 1.18 g of a product.

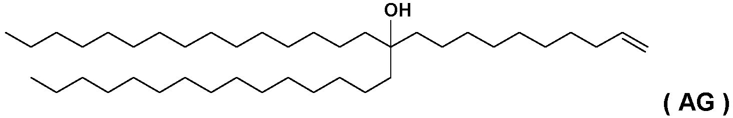

The obtained compound was confirmed to have a structure represented by formula (AH) using ¹H-NMR. Further, the compound had a bio-based degree of 70%, which was measured by radiocarbon dating based on ASTM D6866.

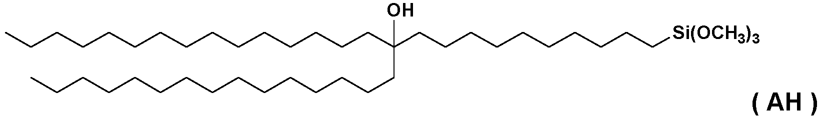

### [Synthesis Example 13]

1.00 g (1.35×10⁻³ mol) of a compound represented by formula (AM), 1.00 g of toluene, 1.49 g (1.22×10⁻² mol) of trimethoxysilane, and 5.17×10⁻³ g of a toluene solution (containing 1.60×10⁻⁸ mol of Pt alone) of a chloroplatinic acid/vinylsiloxane complex were mixed with each other in a reaction container, and aged at 80°C for 24 hours. Thereafter, the solvent and the unreacted material were distilled off under reduced pressure, thereby obtaining 1.47 g of a product.

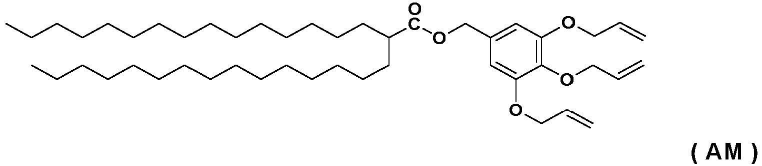

The obtained compound was confirmed to have a structure represented by formula (AN) using ¹H-NMR. Further, the compound had a bio-based degree of 56%, which was measured by radiocarbon dating based on ASTM D6866.

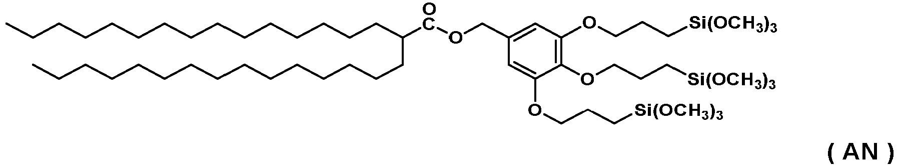

### [Synthesis Example 14]

1.00 g (1.73×10⁻³ mol) of a compound represented by formula (AO), 1.00 g of toluene, 0.636 g (5.20×10⁻³ mol) of trimethoxysilane, and 6.62×10⁻³ g of a toluene solution (containing 2.05×10⁻⁸ mol of Pt alone) of a chloroplatinic acid/vinylsiloxane complex were mixed with each other in a reaction container, and aged at 80°C for 24 hours. Thereafter, the solvent and the unreacted material were distilled off under reduced pressure, thereby obtaining 1.20 g of a product.

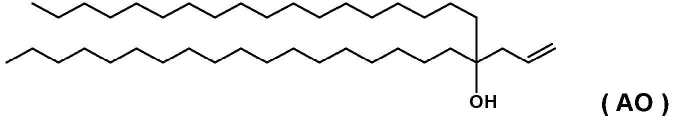

The obtained compound was confirmed to have a structure represented by formula (AP) using ¹H-NMR. Further, the compound had a bio-based degree of 86%, which was measured by radiocarbon dating based on ASTM D6866.

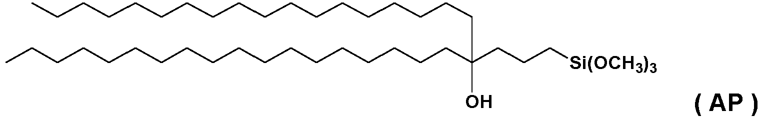

### [Synthesis Example 15]

1.00 g (1.52×10⁻³ mol) of a compound represented by formula (AY), 1.00 g of toluene, 0.557 g (4.55×10⁻³ mol) of trimethoxysilane, and 5.80×10⁻³ g of a toluene solution (containing 1.79×10⁻⁸ mol of Pt alone) of a chloroplatinic acid/vinylsiloxane complex were mixed with each other in a reaction container, and aged at 80°C for 24 hours. Thereafter, the solvent and the unreacted material were distilled off under reduced pressure, thereby obtaining 1.13 g of a product.

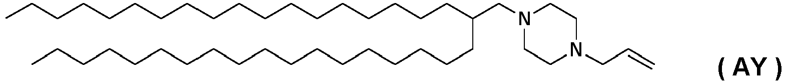

The obtained compound was confirmed to have a structure represented by formula (AZ) using ¹H-NMR. Further, the compound had a bio-based degree of 79%, which was measured by radiocarbon dating based on ASTM D6866.

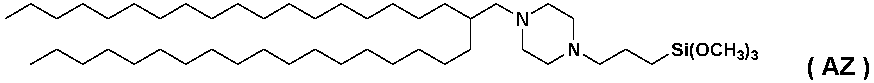

### [Synthesis Example 16]

1.00 g (1.97×10⁻³ mol) of a compound represented by formula (BC), 1.00 g of toluene, 0.802 g (5.92×10⁻³ mol) of trichlorosilane, and 7.54×10⁻³ g of a toluene solution (containing 2.33×10⁻⁸ mol of Pt alone) of a chloroplatinic acid/vinylsiloxane complex were mixed with each other in a reaction container, and aged at 60°C for 24 hours. Thereafter, the solvent and the unreacted material were distilled off under reduced pressure. The obtained product was mixed with 3.00 g of toluene, and the mixture was aged for 6 hours while ammonia gas was bubbled at room temperature (amount of ammonia gas used: 40 cc/min). Thereafter, the mixture was filtered, and the solvent and the unreacted material were distilled off under reduced pressure, thereby obtaining 1.01 g of a product.

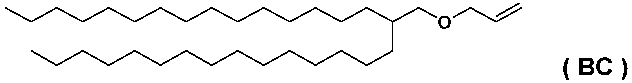

The obtained compound was confirmed to have a structure represented by formula (BD) using ¹H-NMR. Further, the compound had a bio-based degree of 91%, which was measured by radiocarbon dating based on ASTM D6866.

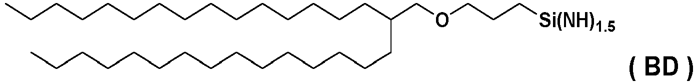

### [Synthesis Example 17]

1.00 g (1.92×10⁻³ mol) of a compound represented by formula (BI), 1.00 g of toluene, and 0.521 g (2.11×10⁻³ mol) of triethoxysilane were mixed with each other in a reaction container, and aged at 50°C for 24 hours. Thereafter, the solvent and the unreacted material were distilled off under reduced pressure, thereby obtaining 1.45 g of a product.

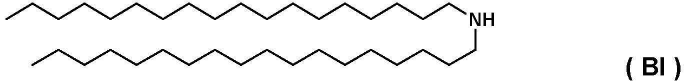

The obtained compound was confirmed to have a structure represented by formula (BJ) using ¹H-NMR. Further, the compound had a bio-based degree of 78%, which was measured by radiocarbon dating based on ASTM D6866.

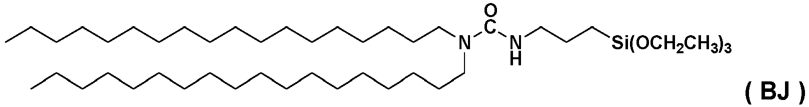

### [Synthesis Example 18]

1.00 g (3.33×10⁻³ mol) of a compound represented by formula (BK), 1.00 g of toluene, 1.43 g (6.99×10⁻³ mol) of (3-isocyanatopropyl)trimethoxysilane, and 9.40×10⁻² g (1.67×10⁻⁴ mol) of titanium tetra-2-ethylhexoxide were mixed with each other in a reaction container, and aged at 50°C for 24 hours. Thereafter, the solvent and the unreacted material were distilled off under reduced pressure, thereby obtaining 2.34 g of a product.

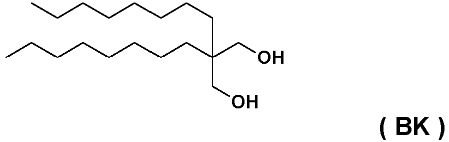

The obtained compound was confirmed to have a structure represented by formula (BL) using ¹H-NMR. Further, the compound had a bio-based degree of 58%, which was measured by radiocarbon dating based on ASTM D6866.

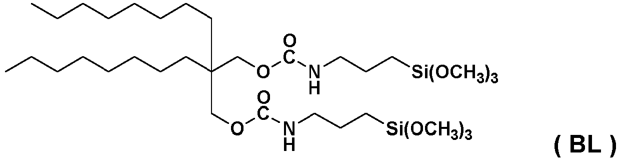

### [Synthesis Example 19]

1.00 g (1.82×10⁻³ mol) of a compound represented by formula (XA), 1.00 g of toluene, 0.668 g (5.47×10⁻³ mol) of trimethoxysilane, and 6.96×10⁻³ g of a toluene solution (containing 2.15×10⁻⁸ mol of Pt alone) of a chloroplatinic acid/vinylsiloxane complex were mixed with each other in a reaction container, and aged at 80°C for 24 hours. Thereafter, the solvent and the unreacted material were distilled off under reduced pressure, thereby obtaining 1.21 g of a product.

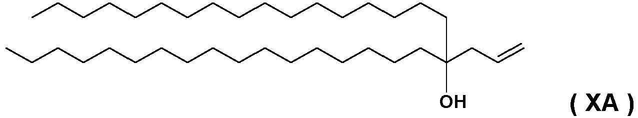

The obtained compound was confirmed to have a structure represented by formula (XB) using ¹H-NMR. Further, the compound had a bio-based degree of 52%, which was measured by radiocarbon dating based on ASTM D6866.

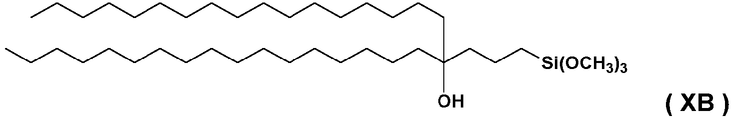

### [Synthesis Example 20]

1.00 g (1.59×10⁻³ mol) of a compound represented by formula (XC), 1.00 g of toluene, 1.16 g (9.51×10⁻³ mol) of trimethoxysilane, and 6.06×10⁻³ g of a toluene solution (containing 1.87×10⁻⁸ mol of Pt alone) of a chloroplatinic acid/vinylsiloxane complex were mixed with each other in a reaction container, and aged at 80°C for 24 hours. Thereafter, the solvent and the unreacted material were distilled off under reduced pressure, thereby obtaining 1.35 g of a product.

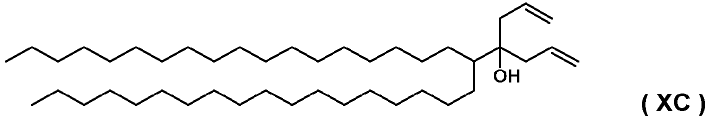

The obtained compound was confirmed to have a structure represented by formula (XD) using ¹H-NMR. Further, the compound had a bio-based degree of 76%, which was measured by radiocarbon dating based on ASTM D6866.

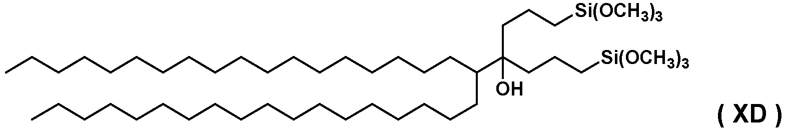

Each of the compounds obtained in Synthesis Examples was dissolved in a solvent, thereby preparing a surface treatment agent composition.

### [Example 1]

The compound obtained in Synthesis Example 1 was dissolved in toluene such that the concentration thereof reached 20% by weight, thereby obtaining a surface treatment agent composition. Further, the toluene used had a bio-based degree of 100%, which was measured by radiocarbon dating based on ASTM D6866.

### [Example 2]

The compound obtained in Synthesis Example 2 was dissolved in isooctane such that the concentration thereof reached 20% by weight, thereby obtaining a surface treatment agent composition. Further, the isooctane used had a bio-based degree of 0%, which was measured by radiocarbon dating based on ASTM D6866.

### [Example 3]

The compound obtained in Synthesis Example 3 was dissolved in dibutyl ether such that the concentration thereof reached 20% by weight, thereby obtaining a surface treatment agent composition. Further, the dibutyl ether used had a bio-based degree of 0%, which was measured by radiocarbon dating based on ASTM D6866.

### [Example 4]

The compound obtained in Synthesis Example 4 was dissolved in dibutyl ether such that the concentration thereof reached 20% by weight, thereby obtaining a surface treatment agent composition.

### [Example 5]

The compound obtained in Synthesis Example 5 was dissolved in toluene such that the concentration thereof reached 10% by weight, thereby obtaining a surface treatment agent composition.

### [Example 6]

The compound obtained in Synthesis Example 6 was dissolved in isononane such that the concentration thereof reached 20% by weight, thereby obtaining a surface treatment agent composition. Further, the isononane used had a bio-based degree of 0%, which was measured by radiocarbon dating based on ASTM D6866.

### [Example 7]

The compound obtained in Synthesis Example 7 was dissolved in dibutyl ether such that the concentration thereof reached 5% by weight, thereby obtaining a surface treatment agent composition.

### [Example 8]

The compound obtained in Synthesis Example 8 was dissolved in propylene glycol monomethyl ether acetate such that the concentration thereof reached 30% by weight, thereby obtaining a surface treatment agent composition. Further, the propylene glycol monomethyl ether acetate used had a bio-based degree of 0%, which was measured by radiocarbon dating based on ASTM D6866.

### [Example 9]

The compound obtained in Synthesis Example 9 was dissolved in toluene such that the concentration thereof reached 20% by weight, thereby obtaining a surface treatment agent composition.

### [Example 10]

The compound obtained in Synthesis Example 10 was dissolved in toluene such that the concentration thereof reached 20% by weight, thereby obtaining a surface treatment agent composition.

### [Example 11]

The compound obtained in Synthesis Example 11 was dissolved in isooctane such that the concentration thereof reached 10% by weight, thereby obtaining a surface treatment agent composition.

### [Example 12]

The compound obtained in Synthesis Example 12 was dissolved in a mixed solution of hexane and isooctane (weight ratio of 50:50) such that the concentration thereof reached 20% by weight, thereby obtaining a surface treatment agent composition. Further, the mixed solution of hexane and isooctane (weight ratio of 50:50) used had a bio-based degree of 0%, which was measured by radiocarbon dating based on ASTM D6866.

### [Example 13]

The compound obtained in Synthesis Example 13 was dissolved in toluene such that the concentration thereof reached 20% by weight, thereby obtaining a surface treatment agent composition.

### [Example 14]

The compound obtained in Synthesis Example 14 was dissolved in dibutyl ether such that the concentration thereof reached 20% by weight, thereby obtaining a surface treatment agent composition.

### [Example 15]

The compound obtained in Synthesis Example 15 was dissolved in isooctane such that the concentration thereof reached 20% by weight, thereby obtaining a surface treatment agent composition.

### [Example 16]

The compound obtained in Synthesis Example 16 was dissolved in isooctane such that the concentration thereof reached 20% by weight, thereby obtaining a surface treatment agent composition.

### [Example 17]

The compound obtained in Synthesis Example 17 was dissolved in isooctane such that the concentration thereof reached 20% by weight, thereby obtaining a surface treatment agent composition.

### [Example 18]

The compound obtained in Synthesis Example 18 was dissolved in butyl acetate such that the concentration thereof reached 10% by weight, thereby obtaining a surface treatment agent composition. Further, the butyl acetate used had a bio-based degree of 100%, which was measured by radiocarbon dating based on ASTM D6866.

### [Example 19]

The compound obtained in Synthesis Example 19 was dissolved in ethylcyclohexane such that the concentration thereof reached 10% by weight, thereby obtaining a surface treatment agent composition. Further, the ethylcyclohexane used had a bio-based degree of 0%, which was measured by radiocarbon dating based on ASTM D6866.

### [Example 20]

The compound obtained in Synthesis Example 20 was dissolved in dibutyl ether such that the concentration thereof reached 10% by weight, thereby obtaining a surface treatment agent composition.

### [Example 21]

The compound obtained in Synthesis Example 1 was dissolved in toluene such that the concentration thereof reached 20% by weight. 3 parts by weight of tetramethoxysilane was added as a dehydrating agent to 100 parts by weight of the prepared solution, thereby obtaining a surface treatment agent composition.

### [Example 22]

The compound obtained in Synthesis Example 19 was dissolved in ethylcyclohexane such that the concentration thereof reached 10% by weight. 3 parts by weight of methyltrimethoxysilane was added as a dehydrating agent to 100 parts by weight of the prepared solution, thereby obtaining a surface treatment agent composition.

### [Comparative Example 1]

A compound represented by the following formula was dissolved in ethylcyclohexane such that the concentration thereof reached 20% by weight, thereby obtaining a surface treatment agent composition. Further, the compound had a bio-based degree of 0%, which was measured by radiocarbon dating based on ASTM D6866.

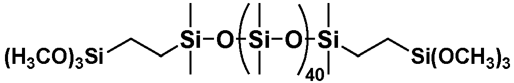

### [Comparative Example 2]

A surface treatment agent composition was not available.

### Formation of cured coating film of surface treatment agent composition

Each of the surface treatment agent compositions prepared in Examples and Comparative Examples described above was vacuum-deposited (device: manufactured by ULVAC KIKO, INC., product number: VTR-350M) (conditions for the treatment: pressure of 2.0×10⁻² Pa, heating temperature of 700°C) on glass (Gorilla Glass (product number: Gorilla III, size: 100 mm × 50 mm × 0.7 mm), manufactured by Corning Incorporated) subjected to a coating treatment of coating the outermost surface thereof with SiO₂ such that the thickness thereof reached 10 nm, cured in an atmosphere of 80°C and a relative humidity of 80% for 1 hour, and further cured in an atmosphere of 25°C and a relative humidity of 50% for 12 hours, thereby forming a cured coating film having a film thickness of 3 to 5 nm.

The water repellency, slipperiness, stain-wiping properties, and abrasion resistance of the glass on which the cured coating film was formed were evaluated by the following methods. In Comparative Example 2, glass (Gorilla Glass (product number: Gorilla III, size: 100 mm × 50 mm × 0.7 mm), manufactured by Corning Incorporated) subjected to a coating treatment of coating the outermost surface thereof with SiO₂ such that the thickness thereof reached 10 nm was used as it was without performing a surface treatment, and the same evaluations were performed.

### Evaluation of water repellency

With the glass on which the cured coating film prepared above was formed, the contact angle (water repellency) of the cured coating film with respect to water was measured (liquid droplet: 2 µL, temperature: 25°C, relative humidity: 40%) using a contact angle meter Drop Master (manufactured by Kyowa Interface Science Co., Ltd.). The results thereof are listed in Table 1.

Further, in the present invention, a satisfactory (with water repellency) water contact angle was set to 90°C or higher (the same applies hereinafter).

### Evaluation of slipperiness

With the glass on which the cured coating film prepared above was formed, the coefficient of dynamic friction of the glass against nonwoven fabric was evaluated by the following method to evaluate the slipperiness. The coefficient of dynamic friction of the glass, on which the cured coating film was formed, against nonwoven fabric was measured in conformity with ASTM D 1894 using a surface property tester TYPE: 14FW (manufactured by SHINTO Scientific Co., Ltd.) under conditions of a load of 100 gf and a tensile speed of 500 mm/min. The results (coefficient of dynamic friction) thereof are listed in Table 1.

### [Conditions for evaluating slipperiness]

| | |
|---|---|
| Load: | 100 gf |
| Stroke: | 100 mm |
| Contact area: | 1 × 3 cm² |
| Nonwoven fabric: | BEMCOT (manufactured by ASAHI KASEI CORPORATION) |

### Evaluation of stain-wiping properties

After a 2 cm straight line was drawn on the glass, on which the cured coating film prepared above was formed, using a Hi-Mckee (manufactured by ZEBRA Co., Ltd.), the ink was dried and wiped off with tissue paper. The number of times of rubbing the surface until the ink was wiped off was evaluated according to the following criteria. The results thereof are listed in Table 1.

### [Evaluation criteria for stain-wiping properties]

| | |
|---|---|
| A: | The number of times of rubbing the surface was 4 times or less. |
| B: | The number of times of rubbing the surface was 5 times or more. |
| C: | The ink could not be wiped off. |

### Evaluation of abrasion resistance

With the glass on which the cured coating film prepared above was formed, the contact angle (water repellency) of the cured coating film with respect to water after the surface was rubbed under the following conditions was measured for every 1000 times of rubbing as described above using a rubbing tester (manufactured by SHINTO Scientific Co., Ltd.), and the number of times the contact angle was less than 80° was confirmed, and the abrasion resistance was evaluated based on the results. The test was performed under conditions of an environment of 25°C and a relative humidity of 40%. The results thereof (the number of times the contact angle was less than 80°) are listed in Table 1.

### [Conditions for steel wool abrasion resistance]

| | |
|---|---|
| Steel wool: | Bonster #0000 |
| Contact area: | 1 cm² |
| Moving distance (one way): | 40 mm |
| Moving speed: | 4800 mm/min |
| Load: | 500 gf/1 cm² |

Each of the cured coating films of the surface treatment agent composition of Examples 1 to 22 exhibited satisfactory water repellency, slipperiness, stain-wiping properties, and abrasion resistance. Further, all the silane compounds contained in the surface treatment agent compositions had high bio-based degrees, and the load on the environment was small. The cured coating film of the surface treatment agent composition of Comparative Example 1 was satisfactory in water repellency, slipperiness, and stain-wiping properties, but exhibited low abrasion resistance. Further, the silane compound contained in the surface treatment agent composition had a bio-based degree of 0%, and the load on the environment was also large. Since the glass substrate of Comparative Example 2 had no cured coating film of the surface treatment agent composition, the glass substrate did not have any of the properties, and thus the effects in the examples were confirmed. As described above, cured coating films having high levels of water repellency, slipperiness, and stain-wiping properties and excellent abrasion resistance could be obtained from the surface treatment agent compositions of the examples in the vapor deposition coating.

**Table 1**

| | | Water repellency (°) | Slipperiness | Stain-wiping properties | Abrasion resistance (times) |
|---|---|---|---|---|---|
| Example | 1 | 101 | 0.09 | A | 4,000 |
| | 2 | 102 | 0.12 | A | 4,000 |
| | 3 | 104 | 0.11 | A | 5,000 |
| | 4 | 103 | 0.10 | A | 5,000 |
| | 5 | 103 | 0.13 | A | 3,000 |
| | 6 | 104 | 0.11 | A | 5,000 |
| | 7 | 102 | 0.14 | A | 4,000 |
| | 8 | 98 | 0.13 | A | 3,000 |
| | 9 | 104 | 0.13 | A | 6,000 |
| | 10 | 101 | 0.12 | A | 4,000 |
| | 11 | 101 | 0.12 | A | 4,000 |
| | 12 | 102 | 0.10 | A | 6,000 |
| | 13 | 100 | 0.13 | A | 6,000 |
| | 14 | 102 | 0.11 | A | 5,000 |
| | 15 | 100 | 0.13 | A | 4,000 |
| | 16 | 104 | 0.11 | A | 5,000 |
| | 17 | 101 | 0.12 | A | 4,000 |
| | 18 | 103 | 0.11 | A | 4,000 |
| | 19 | 104 | 0.09 | A | 7,000 |
| | 20 | 100 | 0.10 | A | 6,000 |
| | 21 | 105 | 0.09 | A | 7,000 |
| | 22 | 105 | 0.09 | A | 7,000 |
| Comparative Example | 1 | 104 | 0.04 | A | 1,000 or less |
| | 2 | 34 | 0.50 | C | - |

### [Example 23]

The compound obtained in Synthesis Example 1 was dissolved in dibutyl ether such that the concentration thereof reached 0.1% by weight, thereby obtaining a surface treatment agent composition.

### [Example 24]

The compound obtained in Synthesis Example 3 was dissolved in toluene such that the concentration thereof reached 0.1% by weight, thereby obtaining a surface treatment agent composition.

### [Example 25]

The compound obtained in Synthesis Example 12 was dissolved in isooctane such that the concentration thereof reached 0.1% by weight, thereby obtaining a surface treatment agent composition.

### Formation of cured coating film of surface treatment agent composition

Glass (Gorilla Glass (product number: Gorilla III, size: 100 mm × 50 mm × 0.7 mm), manufactured by Corning Incorporated) was spray-coated with each of the surface treatment agent compositions prepared in the examples described above, and the composition was cured in an atmosphere of 80°C and a relative humidity of 80% for 1 hour and further cured in an atmosphere of 25°C and a relative humidity of 50% for 12 hours, thereby forming a cured coating film having a film thickness of 3 to 5 nm.

The water repellency, slipperiness, stain-wiping properties, and abrasion resistance of the glass on which the cured coating film was formed were evaluated by the following methods.

### Evaluation of water repellency

With the glass on which the cured coating film prepared above was formed, the contact angle (water repellency) of the cured coating film with respect to water was measured (liquid droplet: 2 µL, temperature: 25°C, relative humidity: 40%) using a contact angle meter Drop Master (manufactured by Kyowa Interface Science Co., Ltd.). The results thereof are listed in Table 2.

### Evaluation of slipperiness

With the glass on which the cured coating film prepared above was formed, the coefficient of dynamic friction of the glass against nonwoven fabric was evaluated by the following method to evaluate the slipperiness. The coefficient of dynamic friction of the glass, on which the cured coating film was formed, against nonwoven fabric was measured in conformity with ASTM D 1894 using a surface property tester TYPE: 14FW (manufactured by SHINTO Scientific Co., Ltd.) under conditions of a load of 100 gf and a tensile speed of 500 mm/min. The results (coefficient of dynamic friction) thereof are listed in Table 2.

### [Conditions for evaluating slipperiness]

| | |
|---|---|
| Load: | 100 gf |
| Stroke: | 100 mm |
| Contact area: | 1 × 3 cm² |
| Nonwoven fabric: | BEMCOT (manufactured by ASAHI KASEI CORPORATION) |

### Evaluation of stain-wiping properties

After a 2 cm straight line was drawn on the glass, on which the cured coating film prepared above was formed, using a Hi-Mckee (manufactured by ZEBRA Co., Ltd.), the ink was dried and wiped off with tissue paper. The number of times of rubbing the surface until the ink was wiped off was evaluated according to the following criteria. The results thereof are listed in Table 2.

### [Evaluation criteria for stain-wiping properties]

| | |
|---|---|
| A: | The number of times of rubbing the surface was 4 times or less. |
| B: | The number of times of rubbing the surface was 5 times or more. |
| C: | The ink could not be wiped off. |

### Evaluation of abrasion resistance

With the glass on which the cured coating film prepared above was formed, the contact angle (water repellency) of the cured coating film with respect to water after the surface was rubbed under the following conditions was measured for every 500 times of rubbing in the same manner as described above using a rubbing tester (manufactured by SHINTO Scientific Co., Ltd.), and the number of times the contact angle was less than 80° was confirmed, and the abrasion resistance was evaluated based on the results. The test was performed under conditions of an environment of 25°C and a relative humidity of 40%. The results thereof (the number of times the contact angle was less than 80°) are listed in Table 2.

### [Conditions for steel wool abrasion resistance]

| | |
|---|---|
| Steel wool: | Bonster #0000 |
| Contact area: | 1 cm² |
| Moving distance (one way): | 40 mm |
| Moving speed: | 4800 mm/min |
| Load: | 500 gf/1 cm² |

Each of the cured coating films of the surface treatment agent composition of Examples 23 to 25 exhibited satisfactory water repellency, slipperiness, stain-wiping properties, and abrasion resistance. Further, all the silane compounds contained in the surface treatment agent compositions had high bio-based degrees, and the load on the environment was small. As described above, cured coating films having high levels of water repellency, slipperiness, and stain-wiping properties and excellent abrasion resistance could be obtained from the surface treatment agent compositions of the examples even in the spray coating which is an example of wet coating.

**Table 2**

| | | Water repellency (°) | Slipperiness | Stain-wiping properties | Abrasion resistance (times) |
|---|---|---|---|---|---|
| Example | 23 | 102 | 0.15 | A | 1,500 |
| | 24 | 104 | 0.16 | A | 2,500 |
| | 25 | 105 | 0.12 | A | 2,500 |

## Claims

1. A surface treatment agent composition comprising:
an organosilane compound (α) and/or a partial reaction condensate thereof; and
a solvent,
wherein the organosilane compound (α) is a non-fluorine-based compound, has at least one selected from an oxygen atom, a sulfur atom, a nitrogen atom, and a silicon atom, contains at least one linear, branched, or cyclic monovalent hydrocarbon group having 3 to 60 carbon atoms and a reactive silyl group, and has a bio-based degree of 50% or greater, which is measured by radiocarbon dating based on ASTM D6866,
the solvent is selected from an alcohol-based solvent, an ether-based solvent, a ketone-based solvent, an ester-based solvent, a carbonate-based solvent, a siloxane-based solvent, and a hydrocarbon-based solvent, and
the surface treatment agent composition is composed of materials containing no fluorine atoms.

2. The surface treatment agent composition according to claim 1, wherein the organosilane compound (α) contains two or more of the monovalent hydrocarbon groups.

3. The surface treatment agent composition according to claim 2, wherein in the organosilane compound (α), the two or more of the monovalent hydrocarbon groups are bonded to the same atom.

4. The surface treatment agent composition according to claim 2 or 3, wherein in the organosilane compound (α), the two or more of the monovalent hydrocarbon groups are the same as each other.

5. The surface treatment agent composition according to any one of claims 1 to 4, wherein the organosilane compound (α) is represented by general formula (1), 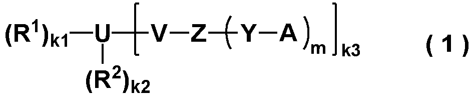 wherein R¹ independently at each occurrence is a monovalent hydrocarbon group having 3 to 32 carbon atoms, which may have at least one selected from an oxygen atom, a sulfur atom, a nitrogen atom, and a silicon atom and may be linear, branched, or cyclic or a combination thereof, R² is a hydrogen atom, a halogen atom, a hydroxyl group, a siloxy group, an amino group, a thiol group, or a monovalent hydrocarbon group having 1 or 2 carbon atoms, U is a carbon atom, a silicon atom, a nitrogen atom, or a tri- or tetravalent organic group, V independently at each occurrence is a single bond or a divalent hydrocarbon group which may have at least one selected from an oxygen atom, a nitrogen atom, and a sulfur atom, Z independently at each occurrence is a single bond, a carbon atom, a silicon atom, a nitrogen atom, a sulfur atom, or a tri- to octavalent organic group, Y independently at each occurrence is a divalent hydrocarbon group which may have at least one selected from an oxygen atom, a nitrogen atom, a sulfur atom, and a silicon atom, A independently at each occurrence is a monovalent reactive silyl group, k1 is 2 or 3, k2 is 0 or 1, k3 is 1 or 2, k1 + k2 + k3 is 3 or 4, and m is an integer of 1 to 7.

6. The surface treatment agent composition according to claim 5, wherein in formula (1), R¹ is a group represented by any of the following formulae, 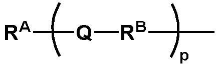 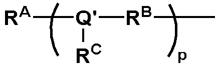 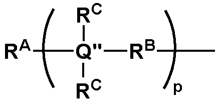 wherein R^{A} independently at each occurrence is a monovalent hydrocarbon group having 3 to 32 carbon atoms which may be linear, branched, or cyclic or a combination thereof, Q independently at each occurrence is a divalent group selected from the group consisting of an oxygen atom, a sulfur atom, a divalent cyclic hydrocarbon group having 6 to 8 carbon atoms, a diorganosilylene group, a silalkylene structure, a silarylene structure, a linear divalent organopolysiloxane residue having 2 to 10 silicon atoms or a branched or cyclic divalent organopolysiloxane residue having 3 to 10 silicon atoms, a carbonyl (ketone) group, an ester group, a carbonate group, a sulfinyl group, a sulfonyl group, a thioester group, a thiocarbonate group, a thiocarbamate group, an amino group, an amide group, a carbamate group, a urea group, and a divalent nitrogen-containing heterocyclic group, Q' independently at each occurrence is a trivalent group selected from the group consisting of a nitrogen atom, a trivalent cyclic hydrocarbon group having 6 to 8 carbon atoms, a linear trivalent organopolysiloxane residue having 2 to 10 silicon atoms or a branched or cyclic trivalent organopolysiloxane residue having 3 to 10 silicon atoms, a trivalent amide group, and a trivalent nitrogen-containing heterocyclic group, Q" independently at each occurrence is a tetravalent group selected from the group consisting of a silicon atom, a tetravalent cyclic hydrocarbon group having 6 to 8 carbon atoms, and a linear tetravalent organopolysiloxane residue having 2 to 10 silicon atoms or a branched or cyclic tetravalent organopolysiloxane residue having 3 to 10 silicon atoms, R^{B} independently at each occurrence is a single bond or a divalent hydrocarbon group having 1 to 32 carbon atoms which may be linear, branched, or cyclic, R^{C} independently at each occurrence is R^{A} or a hydrogen atom, and p is an integer of 0 to 10, where a total number of carbon atoms in each structure is 32 or less.

7. The surface treatment agent composition according to claim 5 or 6, wherein in formula (1), Y is a group selected from the group consisting of an alkylene group having 1 to 20 carbon atoms which may have at least one selected from an oxygen atom, a nitrogen atom, and a sulfur atom, an alkylene group having 1 to 10 carbon atoms which contains an arylene group having 6 to 8 carbon atoms, a divalent group in which alkylene groups having 1 to 8 carbon atoms are bonded to each other via a diorganosilylene group, a silalkylene structure, a silarylene structure, or a nitrogen-containing heterocyclic group, and a divalent group in which an alkylene group having 1 to 10 carbon atoms is bonded to a bonding site of a linear organopolysiloxane residue having 2 to 10 silicon atoms or a branched or cyclic organopolysiloxane residue having 3 to 10 silicon atoms.

8. The surface treatment agent composition according to any one of claims 5 to 7, wherein in formula (1), Z is a single bond or a tri- to octavalent group selected from the group consisting of a carbon atom, a silicon atom, a nitrogen atom, a tri- or tetravalent cyclic hydrocarbon group having 6 to 8 carbon atoms, a trivalent group represented by -SiR³= (R³ is a hydroxyl group, an alkyl group having 1 to 3 carbon atoms, or an alkoxy group having 1 to 3 carbon atoms), a trivalent group represented by -CR⁴= (R⁴ is a hydrogen atom, a hydroxyl group, or an alkyl group having 1 to 3 carbon atoms), a linear tri- to octavalent organopolysiloxane residue having 2 to 10 silicon atoms or a branched or cyclic tri- to octavalent organopolysiloxane residue having 3 to 10 silicon atoms, a trivalent amide group, a trivalent carbamate group, a tri- or tetravalent urea group, and a tri- to octavalent nitrogen-containing heterocycle-containing group.

9. The surface treatment agent composition according to any one of claims 5 to 8, wherein in formula (1), U is a tri- or tetravalent group selected from the group consisting of a carbon atom, a silicon atom, a nitrogen atom, a tri- or tetravalent cyclic hydrocarbon group having 6 to 8 carbon atoms, a linear tri- or tetravalent organopolysiloxane residue having 2 to 10 silicon atoms or a branched or cyclic tri- or tetravalent organopolysiloxane residue having 3 to 10 silicon atoms, a trivalent amide group, a trivalent carbamate group, a tri- or tetravalent urea group, and a tri- or tetravalent nitrogen-containing heterocycle-containing group.

10. The surface treatment agent composition according to any one of claims 1 to 9, wherein the solvent is selected from an ether-based solvent, a ketone-based solvent, an ester-based solvent, a siloxane-based solvent, and a hydrocarbon-based solvent.

11. The surface treatment agent composition according to any one of claims 1 to 10, wherein the solvent has a bio-based degree of 50% or greater, which is measured by radiocarbon dating based on ASTM D6866.

12. The surface treatment agent composition according to any one of claims 1 to 11, further comprising:
at least one non-fluorine-based material selected from the group consisting of paraffin oil, polyol ester oil, silicone oil, a catalyst, a transition metal, a halide ion, a silane coupling agent, and a compound that contains an atom having an unshared electron pair in a molecular structure.

13. The surface treatment agent composition according to any one of claims 1 to 12, wherein the surface treatment agent is used for vacuum deposition.

14. A pellet containing the surface treatment agent composition according to any one of claims 1 to 13.

15. An article comprising:
a base material; and
a layer formed of the surface treatment agent composition according to any one of claims 1 to 13 on a surface of the base material.
